(19) Europäisches Patentamt
European Patent Office
Office européen des brevets

(11) **EP 4 358 573 A1**

(12) **EUROPEAN PATENT APPLICATION**
published in accordance with Art. 153(4) EPC

(43) Date of publication:
**24.04.2024 Bulletin 2024/17**

(21) Application number: **22811702.4**

(22) Date of filing: **30.05.2022**

(51) International Patent Classification (IPC):
**H04W 24/10** $^{(2009.01)}$   **H04B 17/345** $^{(2015.01)}$
**H04J 11/00** $^{(2006.01)}$   **H04W 8/24** $^{(2009.01)}$

(52) Cooperative Patent Classification (CPC):
**H04B 17/345; H04J 11/00; H04W 8/24; H04W 24/10**

(86) International application number:
**PCT/KR2022/007646**

(87) International publication number:
**WO 2022/250511 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.05.2021 KR 20210069549**

(71) Applicant: **Samsung Electronics Co., Ltd.**
**Suwon-si, Gyeonggi-do 16677 (KR)**

(72) Inventors:
• **SHIM, Jaeyeon**
**Suwon-si, Gyeonggi-do 16677 (KR)**
• **JI, Hyoungju**
**Suwon-si, Gyeonggi-do 16677 (KR)**
• **JANG, Youngrok**
**Suwon-si, Gyeonggi-do 16677 (KR)**

(74) Representative: **Gulde & Partner**
**Patent- und Rechtsanwaltskanzlei mbB**
**Wallstraße 58/59**
**10179 Berlin (DE)**

(54) **METHOD AND DEVICE FOR MEASURING AND REPORTING INTERFERENCE SIGNAL IN WIRELESS COMMUNICATION SYSTEM**

(57)   The present disclosure relates to a communication scheme and system therefor for converging an Internet of things (IoT) technology with a 5$^{th}$ generation (5G) communication system for supporting a higher data rate after a 4$^{th}$ generation (4G) system. The present disclosure is applicable to intelligent services (e.g., smart home, smart building, smart city, smart car or connected car, health care, digital education, retail, security and safety-related services, or the like) based on 5G communication technology and IoT-associated technology. The present disclosure discloses a method of measuring and reporting interference in a wireless communication system.

FIG. 23

EP 4 358 573 A1

**Description**

Technical Field

The present disclosure relates to operations of a user equipment (UE) and a base station (BS) in a wireless communication system. More particularly, the present disclosure relates to a method of measuring and reporting interference and an apparatus for performing the method in a wireless communication system.

Background Art

In order to meet increasing demand with respect to wireless data traffic after the commercialization of 4th generation (4G) communication systems, efforts have been made to develop 5th generation (5G) or pre-5G communication systems. For this reason, 5G or pre-5G communication systems are referred to as 'beyond 4G network' communication systems or 'post long term evolution (post-LTE)' systems. In order to achieve a high data rate, implementation of 5G communication systems in an ultra-high frequency millimeter-wave (mmWave) band (e.g., a 60-gigahertz (GHz) band) is being considered. In order to reduce path loss of radio waves and increase a transmission distance of radio waves in the ultra-high frequency band for 5G communication systems, various technologies such as beamforming, massive multiple-input and multiple-output (massive MIMO), full-dimension MIMO (FD-MIMO), array antennas, analog beamforming, and large-scale antennas are being studied. Also, in order to improve system networks for 5G communication systems, various technologies such as evolved small cells, advanced small cells, cloud radio access networks (Cloud-RAN), ultra-dense networks, device-to-device communication (D2D), wireless backhaul, moving networks, cooperative communication, coordinated multi-points (CoMP), and received-interference cancellation have been developed. In addition, for 5G systems, advanced coding modulation (ACM) technologies such as hybrid frequency-shift keying (FSK) and quadrature amplitude modulation (QAM) (FQAM) and sliding window superposition coding (SWSC), and advanced access technologies such as filter bank multi-carrier (FBMC), non-orthogonal multiple access (NOMA), and sparse code multiple access (SCMA) have been developed.

The Internet has evolved from a human-based connection network, where humans generate and consume information, to the Internet of things (IoT), where distributed elements such as objects exchange information with each other to process the information. Internet of everything (IoE) technology has emerged, in which the IoT technology is combined with, for example, technology for processing big data through connection with a cloud server. In order to implement the IoT, various technological elements such as sensing technology, wired/wireless communication and network infrastructures, service interface technology, and security technology are required, such that, in recent years, technologies related to sensor networks for connecting objects, machine-to-machine (M2M) communication, and machine-type communication (MTC) have been studied. In the IoT environment, intelligent Internet technology (IT) services may be provided to collect and analyze data obtained from connected objects to create new value in human life. As existing information technology (IT) and various industries converge and combine with each other, the IoT may be applied to various fields such as smart homes, smart buildings, smart cities, smart cars or connected cars, smart grids, health care, smart home appliances, and advanced medical services.

Various attempts are being made to apply 5G communication systems (including New Radio (NR) communication system) to the IoT network. For example, technologies related to sensor networks, M2M communication, and MTC are being implemented by using 5G communication technology using beamforming, MIMO, and array antennas. Application of cloud radio access network (Cloud-RAN) as the above-described big data processing technology may be an example of convergence of 3eG communication technology and IoT technology.

Because various services may be provided due to the aforementioned technical features and the development of wireless communication systems, methods for seamlessly providing these services are required.

Disclosure

Technical Problem

Disclosed embodiments provide an apparatus and method for effectively providing a service in a mobile communication system.

Technical Solution

In order to solve the problems above, the present disclosure proposes a method of measuring and reporting inter-terminal interference in a wireless communication system. According to an embodiment of the present disclosure, a method of measuring interference may include reporting, from a user equipment (UE) to a base station (BS), UE capability, configuring, by the BS for the UE, measurement configuration information, based on information about the received UE capability, configuring downlink (DL) control information for the configured interference measurement indication, changing a bandwidth part (BWP) and performing measurement, based on the configured measurement information, and transmitting, to the BS, information about the measured interference.

Advantageous Effects

Disclosed embodiments provide an apparatus and method for effectively providing a service in a mobile communication system.

Description of Drawings

FIG. 1 illustrates a basic structure of a time-frequency domain in a wireless communication system according to an embodiment of the present disclosure.

FIG. 2 illustrates structures of a frame, a subframe, and a slot in a wireless communication system according to an embodiment of the present disclosure.

FIG. 3 illustrates an example of configuration of bandwidth parts (BWPs) in a wireless communication system according to an embodiment of the present disclosure.

FIG. 4 illustrates an example of configuration of control resource sets for a downlink (DL) control channel in a wireless communication system according to an embodiment of the present disclosure.

FIG. 5A illustrates a structure of a DL control channel in a wireless communication system according to an embodiment of the present disclosure.

FIG. 5B illustrates a case in which a user equipment (UE) can have a plurality of physical downlink control channel (PDCCH) monitoring occasions in a slot, in terms of spans, in a wireless communication system, according to an embodiment of the present disclosure.

FIG. 6 illustrates examples of base station (BS) beam allocation according to transmission configuration indication (TCI) state configurations in a wireless communication system, according to an embodiment of the present disclosure.

FIG. 7 illustrates an example of a TCI state allocation method for a PDCCH in a wireless communication system, according to an embodiment of the present disclosure.

FIG. 8 illustrates a TCI indication medium access control control element (MAC CE) signaling structure for a PDCCH demodulation reference signal (DMRS) in a wireless communication system, according to an embodiment of the present disclosure.

FIG. 9 illustrates an example of beam configuration of a control resource set (CORESET) and search space in a wireless communication system according to an embodiment of the present disclosure.

FIG. 10 is a diagram for describing a method by which a UE selects a receivable CORESET by considering priorities in receiving a DL control channel in a wireless communication system, according to an embodiment of the present disclosure.

FIG. 11 is a diagram for describing a method by which a BS and a UE transmit or receive data by considering a DL data channel and a rate matching resource in a wireless communication system according to an embodiment of the present disclosure.

FIG. 12 illustrates an example of physical downlink shared channel (PDSCH) frequency-axis resource allocation in a wireless communication system, according to an embodiment of the present disclosure.

FIG. 13 illustrates an example of PDSCH time-axis resource allocation in a wireless communication system, according to an embodiment of the present disclosure.

FIG. 14 illustrates an example of time-axis resource allocation based on subcarrier spacings (SCSs) of a data channel and a control channel in a wireless communication system, according to an embodiment of the present disclosure.

FIG. 15 illustrates examples of an aperiodic channel state information (CSI) reporting method, according to an embodiment of the present disclosure.

FIG. 16 illustrates radio protocol architecture in a wireless communication system, according to an embodiment of the present disclosure.

FIGS. 17A, 17B, and 17C illustrate examples of various sounding reference signal (SRS) operating scenarios in a wireless communication system according to an embodiment of the present disclosure.

FIG. 18 illustrates an example of uplink (UL) and DL resource configuration considered in a 5th-generation (5G) communication system according to an embodiment of the present disclosure.

FIG. 19 illustrates UL-DL configurations of a time or frequency (X) division duplexing (DD) system in which UL and DL resources are flexibly divided in a time domain and a frequency domain, according to an embodiment of the present disclosure.

FIG. 20 illustrates an example of a method of configuring UL-DL in a time domain and a frequency domain in an XDD system, according to an embodiment of the present disclosure.

FIG. 21 illustrates an example of a method of measuring UE-to-UE cross link interference (CLI) in a Rel-16 NR system, according to an embodiment of the present disclosure.

FIG. 22A illustrates CLI measurement scenario examples in a wireless communication system, according to an embodiment of the present disclosure.

FIG. 22B illustrates CLI measurement scenario examples in a wireless communication system, according to an embodiment of the present disclosure.

FIG. 23 illustrates examples of aperiodic CLI measurement and L1-triggered reporting, according to an embodiment of the present disclosure.

FIG. 24 is a diagram for describing UE capability reporting, according to an embodiment of the present disclosure.

FIG. 25 is a diagram for describing aperiodic CLI measurement triggering, according to an embodiment of the present disclosure.

FIG. 26A is a diagram for describing an example in which a bandwidth part (BWP) is changed to perform CLI measurement when BWPs of a UL and a DL do not match each other, according to an embodiment of the present disclosure.

FIG. 26B is a diagram for describing an example in which a BWP is changed to perform CLI measurement when BWPs of a UL and a DL do not match each other, according to an embodiment of the present disclosure.

FIG. 26C is a diagram for describing an example in which a BWP is changed to perform CLI measurement when BWPs of a UL and a DL do not match each other, according to an embodiment of the present disclosure.

FIG. 27 illustrates an example of a plurality of pieces of information that may be included in group common downlink control information (DCI), according to an embodiment of the present disclosure.

FIG. 28A is a diagram for describing a method of measuring CLI, according to an embodiment of the present disclosure.

FIG. 28B is a diagram for describing a method of measuring CLI, according to an embodiment of the present disclosure.

FIG. 29 is a diagram for describing a method of measuring and reporting CLI in a subband unit, according to an embodiment of the present disclosure.

FIG. 30 illustrates a procedure for CLI measurement and reporting in a UE, according to an embodiment of the present disclosure.

FIG. 31 illustrates a procedure for CLI measurement and reporting in a BS, according to an embodiment of the present disclosure.

FIG. 32 illustrates a structure of a UE in a wireless communication system, according to an embodiment of the present disclosure.

FIG. 33 illustrates a structure of a BS in a wireless communication system, according to an embodiment of the present disclosure.

Best Mode

According to an embodiment of the present disclosure, a method, performed by a user equipment (UE), of measuring and reporting cross link interference (CLI) in a wireless communication system may include: reporting UE capability to a base station (BS); receiving, from the BS, information about interference measurement and reporting configuration based on the reported UE capability; receiving, from the BS, downlink control information (DCI) for aperiodic interference measurement indication; measuring the CLI, based on the DCI; and transmitting a result of measuring the CLI to the BS.

In an embodiment, the measuring of the CLI may include measuring the CLI, based on bandwidth part (BWP) changing indication included in the DCI.

In an embodiment, information about the UE capability may include at least one of sounding reference signal-reference signal received power (SRS-RSRP), a number of measurement resources (maxNumber-AP-SRS-RSRP), a number of periodic SRS-RSRP measurement resources (maxNumber-P-SRS-RSRP), and a total number of SRS-RSRP measurement resources (maxNumber-SRS-RSRP).

In an embodiment, information about the UE capability may include at least one of parameters indicating whether SRS-RSRP measurement is supported and whether aperiodic SRS-RSRP measurement is supported (cli-SRS-RSRP-Meas-r18).

In an embodiment, the information about interference measurement and reporting configuration may include at least one of channel quality information (CQI), a precoding matric indicator (PMI), a CSI-RS resource indicator (CRI), an synchronization signal/physical broadcast channel (SS/PBCH) block resource indicator (SSBRI), a layer indicator (LI), a rank indicator (RI), and/or L1-reference signal received power (L1-RSRP), a CLI resource indicator for L1-triggered CLI reporting, L1-filtered SRS-RSRP and a L1-filtered cross link interference-received signal strength indicator (CLI-RSSI).

In an embodiment, the DCI may include CLI measurement request information, and the CLI measurement request information includes resource information about CLI to be measured.

In an embodiment, the transmitting of the result of measuring the CLI to the BS may include: generating a reporting list by using a preset number of measurement results selected based on signal strength values, from among configured K measurement results, or generating a reporting list by using a measurement result satisfying a particular condition, from among measurement results; and transmitting the generated reporting list to the BS.

In an embodiment, the information about interference measurement and reporting configuration may be configured in a subband unit.

According to an embodiment of the present disclosure, a UE in a wireless communication system may include: a transceiver; and at least one processor configured to report UE capability to a BS, receive, from the BS, information about interference measurement and reporting configuration based on the reported UE capability, receive, from the BS, DCI for aperiodic interference measurement indication, measure CLI, based on the DCI, and transmit a result of measuring the CLI to the BS.

Mode for Invention

Hereinafter, embodiments of the present disclosure will now be described more fully with reference to the accompanying drawings.

When embodiments are described herein, a description of techniques which are well known in the technical field to which the present disclosure pertains and are not directly related to the present disclosure will be omitted. This is to clearly convey the concept of the present disclosure by omitting descriptions of unnecessary details.

For the same reasons, in the drawings, some elements may be exaggerated, omitted, or roughly illustrated. Also, size of each element does not exactly correspond to an actual size of each element. In each drawing, elements that are the same or are in correspondence are rendered the same reference numeral.

Advantages and features of the present disclosure and methods of accomplishing the same may be understood more readily by reference to the following detailed descriptions of embodiments and accompanying drawings. The present disclosure may, however, be embodied in many different forms and should not be construed as being limited to the embodiments set forth herein; rather, these embodiments are provided so that this present disclosure will be thorough and complete, and will fully convey the concept of the present disclosure to one of ordinary skill in the art. Therefore, the scope of the present disclosure is defined by the appended claims. Throughout the specification, like reference numerals refer to like elements. In the descriptions of the present disclosure, well-known functions or configurations are not described in detail when it is deemed that they may unnecessarily obscure the essence of the present disclosure. The terms used in the specification are defined in consideration of functions used in the present disclosure, and can be changed according to the intent or commonly used methods of users or operators. Accordingly, definitions of the terms are understood based on the entire description of the present specification.

Hereinafter, a base station is an entity that allocates resources to a terminal, and may be at least one of gNode B, eNode B, Node B, base station (BS), a radio access unit, a BS controller, or a node on a network. The terminal may include a user equipment (UE), a mobile station (MS), a cellular phone, a smartphone, a computer, or a multimedia system capable of performing a communication function. In the present disclosure, a downlink (DL) refers to a radio transmission path of a signal to be transmitted from a BS to a UE, and an uplink (UL) refers to a radio transmission path of a signal to be transmitted from a UE to a BS. Although the following descriptions may be provide about long term evolution (LTE) or LTE-Advanced (LTE-A) systems as an example, embodiments of the present disclosure are also applicable to other communication systems having similar technical backgrounds or channel structure. For example, embodiments may be applicable to a system including 5th generation (5G) mobile communication technology New Radio (NR) developed after LTE-A system, and hereinafter, 5G may indicate a concept including LTE, LTE-A, and other similar services according to the related art. Also, the present disclosure is applicable to other communication systems through modification at the discretion of one of ordinary skill in the art without greatly departing from the scope of the present disclosure.

It will be understood that each block of flowchart illustrations, and combinations of blocks in the flowchart illustrations, may be implemented by computer program instructions. The computer program instructions may be provided to a processor of a general-purpose computer, special purpose computer, or other programmable data processing apparatus, such that the instructions, which are executed via the processor of the computer or other programmable data processing apparatus, generate means for performing functions specified in the flowchart block(s). The computer program instructions may also be stored in a computer-executable or computer-readable memory that may direct the computer or other programmable data processing apparatus to function in a particular manner, such that the instructions stored in the computer-executable or computer-readable memory may produce an article of manufacture including instruction means that perform the functions specified in the flowchart block(s). The computer program instructions may also be loaded onto the computer or other programmable data processing apparatus to cause a series of operations to be performed on the computer or other programmable apparatus to produce a computer implemented process such that the instructions that are executed on the computer or other programmable apparatus provide operations for implementing the functions specified in the flowchart block(s).

In addition, each block may represent a module, segment, or portion of code, which includes one or more executable instructions for performing specified logical function(s). It should also be noted that, in some alternative implementations, the functions noted in the blocks may occur out of the order. For example, two blocks shown in succession may in fact be executed substantially concurrently or the blocks may sometimes be executed in the reverse order, depending upon the functionality involved.

The term "... unit", as used in the present embodiment refers to a software or hardware component, such as field-programmable gate array (FPGA) or application-specific integrated circuit (ASIC), which performs certain tasks. However, the term "... unit" does not mean to be limited to software or hardware. A "... unit" may be configured to be in an addressable storage medium or configured to operate one or more processors. Thus, a "... unit" may include, by way of example, components such as software components, object-oriented software components, class components, and task components, processes, functions, attributes, procedures, subroutines, segments of program code, drivers, firmware, microcode, circuitry, data, databases, data structures, tables, arrays, and variables. The functionality provided in the components and "... units" may be combined into fewer components and "... units" or further separated into additional components and "... units". Further, the components and "... units" may be implemented to operate one or more central processing units (CPUs) in a device or a secure multimedia card. Also, a "... unit" may include one or more processors in embodiments.

Wireless communication systems have been developed from wireless communication systems providing voice centered services in the early stage toward broadband wireless communication systems providing high-speed, high-quality packet data services, like communication standards of high speed packet access (HSPA), long term evolution (LTE or evolved universal terrestrial radio access (E-UTRA)), and LTE-Advanced (LTE-A) of the 3GPP, high rate packet data (HRPD) and ultra mobile broadband (UMB) of 3GPP2, 802.16e of the Institute of Electrical and Electronic Engineers (IEEE), or the like.

As a representative example of the broadband wireless communication system, the LTE system has adopted an orthogonal frequency division multiplexing (OFDM) scheme in a DL and has adopted a single carrier frequency division multiple access (SC-FDMA) scheme in an UL. The UL refers to a radio link of data or a control signal transmitted from a UE (or an MS) to a BS (e.g., eNB), and the DL refers to a radio link of data or a control signal transmitted from a BS to a UE. The multiple access schemes identify data or control information of different users in a manner that time-frequency resources for carrying the data or control information of the users are allocated and managed not to overlap each other, that is, to achieve orthogonality therebetween.

As a post-LTE communication system, i.e., the 5G communication system is requested to freely reflect various requirements from users and service providers, and thus, has to support services that simultaneously satisfy the various requirements. The services being considered for the 5G communication system include enhanced mobile broadband (eMBB), massive machine-type communication (mMTC), ultra-reliability low-latency communication (URLLC) services, or the like.

The eMBB aims to provide a further-improved data rate than a data rate supported by the legacy LTE, LTE-A, or LTE-Pro. For example, in the 5G communication system, the eMBB should be able to provide a peak data rate of 20 Gbps in a DL and a peak data rate of 10 Gbps in an UL at one BS. Also, the 5G communication system has to simultaneously provide the improved peak data rate and an increased user-perceived data rate of a UE. In order to satisfy such requirements, there is a need for an improvement in transmission/reception technology including an improved multiple-input multiple-output (MIMO) transmission technology. Also, a data rate requested in the 5G communication system may be satisfied by using a frequency bandwidth wider than 20 MHz in the 3 GHz to 6 GHz or 6 GHz or more frequency band, instead of the LTE transmitting a signal by using maximum 20 MHz in the 2 GHz band.

Concurrently, the mMTC is being considered to support application services such as IoT in the 5G communication system. In order to efficiently provide the IoT, the mMTC may require the support for a large number of terminals in a cell, improved coverage for a terminal, improved battery time, reduced costs of a terminal, and the like. Because the IoT is attached to various sensors and various devices to provide a communication function, the mMTC should be able to support a large number of terminals (e.g., 1,000,000 terminals/km2) in a cell. Also, because a terminal supporting the mMTC is likely to be located in a shadow region failing to be covered by the cell, such as the basement of a building, due to the characteristics of the service, the terminal may require wider coverage than other services provided by the 5G communication system. The terminal supporting the mMTC should be configured as a low-cost terminal and may require a very long battery life time of 10 to 15 years because it is difficult to frequently replace the battery of the terminal.

Lastly, the URLLC refers to cellular-based wireless communication services used for mission-critical purposes. For example, services for remote control of robots or machinery, industrial automation, unmanned aerial vehicles, remote health care, emergency alerts, and the like may be considered. Therefore, the URLLC should provide communications providing very low latency and very high reliability. For example, a service supporting the URLLC should satisfy air interface latency of less than 0.5 milliseconds, and simultaneously has a requirement for a packet error rate of $10^{-5}$ or less. Thus, for the service supporting the URLLC, the 5G system should provide a transmit time interval (TTI) smaller than other services and may simultaneously have a design requirement for allocating wide resources in a frequency band so as to ensure reliability of a communication link.

The three services of the 5G, i.e., the eMBB, the URLLC, and the mMTC may be multiplexed and transmitted in one system. Here, in order to satisfy different requirements of the services, the services may use different transceiving schemes and different transceiving parameters. Obviously, the 5G is not limited to the afore-described three services.

[NR time-frequency resource]

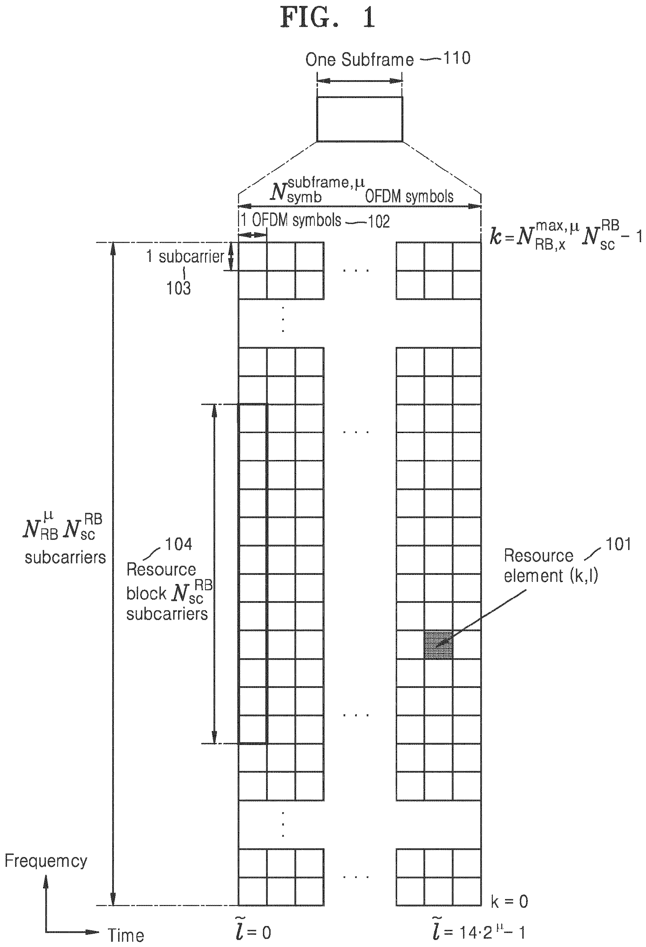

FIG. 1 illustrates a basic structure of a time-frequency domain that is a radio resource region in which data or a control channel is transmitted in the 5G system.

In FIG. 1, the horizontal axis represents a time domain and the vertical axis represents a frequency domain. A basic unit of a resource in the time-frequency domain is a resource element (RE) 101 and may be defined as 1 OFDM symbol 102 on the time axis and 1 subcarrier 103 on the frequency axis. In the frequency domain, $N_{sC}^{RB}$ (e.g., 12) consecutive REs may constitute one resource block (RB) 104.

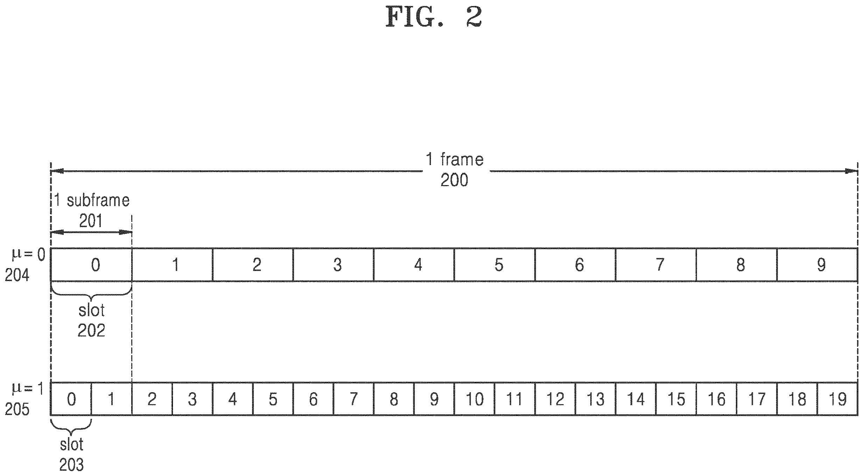

FIG. 2 illustrates structures of a frame, a subframe, and a slot in a wireless communication system according to an embodiment of the present disclosure.

FIG. 2 illustrates an example of structures of a frame 200, a subframe 201, and a slot 202. One frame 200 may be defined as 10 ms. One subframe 201 may be defined as 1 ms, and thus, one frame 200 may consist of 10 subframes 201. One slot 202 or 203 may be defined as 14 OFDM symbols (that is, the number of symbols per 1 slot ($N_{symb}^{slot}$) may be 14). One subframe 201 may consist of one or more slots 202 or 203, and the number of slots 202 or 203 per one subframe 201 may vary according to a configuration value $\mu$ 204 or 205 indicating a configuration of a subcarrier spacing. The example of FIG. 2 shows a case 204 in which p=0 and a case 205 in which $\mu$=1, as a configuration value of a subcarrier spacing. When $\mu$=0 (204), one subframe 201 may consist of one slot 202, and when $\mu$=1 (205), one subframe 201 may consist of two slots 203. That is, the number of slots per one subframe ($N_{slot}^{subframe,\mu}$) may vary according to a configuration value $\mu$ with respect to a subcarrier spacing, and thus, the number of slots per one frame ($N_{slot}^{frame,\mu}$) may vary accordingly. $N_{slot}^{subframe,\mu}$ and $N_{slot}^{frame,\mu}$ according to each subcarrier spacing configuration value $\mu$ may be defined as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Hereinafter, configuration of bandwidth parts (BWPs) in the 5G communication system will now be described with reference to the drawings.

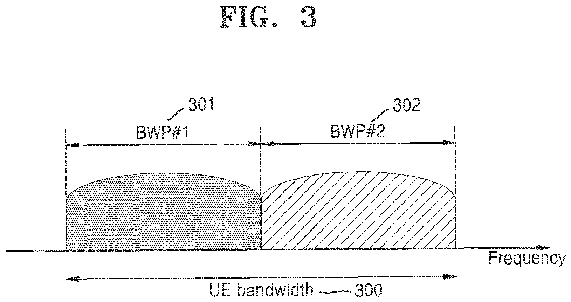

FIG. 3 illustrates an example of configuration of BWPs in a wireless communication system according to an embodiment of the present disclosure.

In the example of FIG. 3, UE bandwidth 300 is configured into two BWPs, i.e., BWP#1 301 and BWP#2 302. A BS may configure a UE with one or more BWPs, and may configure, for each BWP, a plurality of pieces of information as below.

[Table 2]

| BWP ::= | SEQUENCE { |
|---|---|
| bwp-Id | BWP-Id, |
| locationAndBandwidth | INTEGER (1..65536), |
| subcarrierSpacing | ENUMERATED {n0, n1, n2, n3, n4, n5}, |
| cyclicPrefix | ENUMERATED { extended } |
| } | |

However, the present disclosure is not limited to the example, and thus, various parameters associated with the BWP may be configured for the UE, in addition to the configuration information. The plurality of pieces of information may be transmitted from the BS to the UE by higher layer signaling, e.g., radio resource control (RRC) signaling. At least one BWP among the configured one or more BWPs may be activated. Whether to activate a configured BWP may be notified from the BS to the UE semi-statically by RRC signaling or dynamically by downlink control information (DCI).

According to some embodiments, the UE may be configured by the BS with an initial BWP for initial access in a Master Information Block (MIB) before the UE is RRC connected. In more detail, the UE may receive, via the MIB in an initial access process, configuration information for a control resource set (CORESET) and search space in which a physical downlink control channel (PDCCH) may be transmitted for reception of system information (e.g., remaining system information (RMSI) or system information block 1 (SIB1)) requested for initial access. Each of the control resource set and the search space which are configured in the MIB may be regarded with identity (ID) 0. The BS may notify, in the MIB, the UE of configuration information such as frequency allocation information, time allocation information, numerology, etc., for control resource set #0. Also, the BS may notify, in the MIB, the UE of configuration information such as a monitoring periodicity and occasion for the control resource set #0, i.e., configuration information for search space #0. The UE may regard a frequency region configured as the control resource set #0 obtained from the MIB, as the initial BWP for initial access. Here, the ID of the initial BWP may be regarded as 0.

Configuration of the BWP supported by the 5G may be used for various purposes.

According to some embodiments, when a bandwidth supported by the UE is smaller than a system bandwidth, the BS may support the system bandwidth via configuration of the BWP. For example, the BS may configure the UE with a frequency location (configuration information 2) of the BWP, such that the UE may transmit or receive data in a particular frequency location in the system bandwidth.

Also, according to some embodiments, in order to support different numerologies, the BS may configure a plurality of BWPs for the UE. For example, in order to support data transmission and reception using both 15 KHz subcarrier spacing and 30 KHz subcarrier spacing for a certain UE, the BS may configure two BWPs with 15 KHz and 30 KHz subcarrier spacings, respectively. The different BWPs may be frequency division multiplexed, and in a case where a UE attempts to transmit and receive data with particular subcarrier spacing, a BWP configured with the subcarrier spacing may be activated.

Also, according to some embodiments, in order to reduce power consumption of the UE, the BS may configure BWPs with different bandwidth sizes for the UE. For example, when the UE supports very large bandwidth, e.g., 100 MHz bandwidth, and always transmits or receives data in the bandwidth, very high power consumption may occur. In particular, in a situation where there is no traffic, monitoring unnecessary DL control channel in the large 100 MHz bandwidth may be very inefficient in terms of power consumption. In order to reduce the power consumption of the UE, the BS may configure a BWP with relatively small bandwidth, e.g., a 20 MHz BWP, for the UE. In the situation that there is no traffic, the UE may perform monitoring in the 20 MHz BWP, and when data occurs, the UE may transmit or receive the data on the 100 MHz BWP based on an indication from the BS.

In a method of configuring a BWP, UEs before being RRC connected may receive, via the MIB, configuration information for the initial BWP in an initial access process. In more detail, the UE may be configured, based on the MIB of a physical broadcast channel (PBCH), with a control resource set for a DL control channel on which DCI for scheduling a system information block (SIB) may be transmitted. A bandwidth of the control resource set configured based on the MIB may be regarded as the initial BWP, and the UE may receive, on the initial BWP, a physical downlink shared channel (PDSCH) on which the SIB is transmitted. The initial BWP may also be used for other system information (OSI), paging, or random access, in addition to reception of the SIB.

[Switching of BWP]

When one or more BWPs are configured for the UE, the BS may indicate, to the UE, change (or, switching or transition) of BWP by using a BWP indicator field in DCI. For example, in FIG. 3, when a currently-activated BWP of the UE is BWP#1 301, the BS may indicate BWP#2 302 with a bandwidth indicator in DCI to the UE, and the UE may perform BWP switching to the BWP#2 302 indicated with the BWP indicator in the received DCI.

As described above, the DCI-based BWP switching may be indicated by DCI that schedules a PDSCH or a physical uplink shared channel (PUSCH), and thus, when the UE receives a BWP switching request, the UE may need to perform, in the switched BWP without difficulty, transmission or reception of the PDSCH or the PUSCH scheduled by the DCI. For this end, a requirement for a delay time $T_{BWP}$ required for BWP switching is defined in a standard, and, for example, may be defined as below.

[Table 3]

| $\mu$ | NR Slot length (ms) | BWP switch delay $T_{BWP}$ (slots) | |
| | | Type 1[Note 1] | Type 2[Note 1] |
| --- | --- | --- | --- |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirement for BWP switching delay time supports type 1 or type 2 depending on a capability of the UE. The UE may report a supportable BWP delay time type to the BS.

According to the requirement for the BWP switching delay time, when the UE receives DCI including the BWP switching indicator in slot n, the UE may complete switching to a new BWP indicated by the BWP switching indicator no later than slot $n+T_{BWP}$, and may transmit or receive, on the new BWP, a data channel scheduled by the DCI. When the BS attempts to schedule the data channel on the new BWP, the BS may determine to allocate a time domain resource for the data channel by considering the BWP switching delay time ($T_{BWP}$) of the UE. That is, when the BS schedules a data channel on a new BWP, as for a method of determining time domain resource allocation for the data channel, the BS may schedule the data channel after the BWP switching delay time. Accordingly, the UE may not expect the DCI, which indicates BWP switching, to indicate a slot offset value (K0 or K2) smaller than the BWP switching delay time $T_{BWP}$.

If the UE receives DCI indicating BWP switching (e.g., DCI format 1_1 or 0_1), the UE may not perform any transmission or reception during time duration from a third symbol of the slot in which a PDCCH including the DCI is received to a starting point of a slot indicated by a slot offset value (K0 or K2) indicated in a time domain resource allocation indicator field in the DCI. For example, when the UE has received DCI indicating BWP switching in slot n and a slot offset value indicated by the DCI is K, the UE may not perform any transmission or reception from a third symbol of the slot n to a symbol before slot n+k (i.e., a last symbol of slot n+K-1).

[SS/PBCH block]

Hereinafter, a synchronization signal (SS)/PBCH block in the 5G system will now be described.

An SS/PBCH block may refer to a physical layer channel block including primary SS (PSS), secondary SS (SSS), and PBCH. Details are as below.

- **PSS:** a reference signal for DL time/frequency synchronization, which provides partial information of a cell ID.
- **SSS:** a reference signal for DL time/frequency synchronization, which provides the rest of the cell ID information not provided by the PSS. In addition, the SSS may serve as another reference signal for demodulation of the PBCH.
- **PBCH:** The PBCH provides essential system information requested for transmission or reception of data channel and control channel for UE. The essential system information may include search-space-associated control information indicating radio resource mapping information of the control channel, scheduling control information for a separate data channel to transmit system information, and the like.
- **SS/PBCH block:** The SS/PBCH block is a combination of PSS, SSS, and PBCH. One or more SS/PBCH blocks may be transmitted in 5 ms, and each of the SS/PBCH blocks being transmitted may be identified by an index.

The UE may detect the PSS and the SSS in the initial access process, and may decode the PBCH. The UE may obtain an MIB from the PBCH and may be configured, via the MIB, with control resource set (CORESET) #0 (e.g., may correspond to control resource set whose control resource set index is 0). The UE may assume that demodulation reference signals (DMRSs) transmitted in the selected SS/PBCH block and control resource set #0 are quasi-co-located (QCL), and may perform monitoring with respect to the CORESET #0. The UE may receive system information via the DCI transmitted in the control resource set #0. The UE may obtain random-access-channel (RACH) related configuration information required for initial access from the received system information. The UE may transmit, to the BS, a physical RACH (PRACH) by considering the selected SS/PBCH index, and upon reception of the PRACH, the BS may obtain information about the SS/PBCH block index selected by the UE. The BS may identify that the UE has selected a certain block among the SS/PBCH blocks and monitors the control resource set #0 associated with the selected SS/PBCH block.

Hereinafter, DCI in the 5G system will now be described in detail.

In the 5G system, scheduling information for UL data (or PUSCH) or DL data (or PDSCH) is transmitted in the DCI from the BS to the UE. The UE may monitor a fallback DCI format and a non-fallback DCI format for PUSCH or PDSCH. The fallback DCI format may include a fixed field predefined between the BS and the UE, and the non-fallback DCI format may include a configurable field.

DCI may be transmitted on a PDCCH after channel coding and modulation processes. Cyclic redundancy check (CRC) may be added to a DCI message payload, and the CRC may be scrambled by a radio network temporary identifier (RNTI) that corresponds to an ID of the UE. Depending on a purpose of the DCI message, e.g., UE-specific data transmission, power control command, random access response, or the like, different RNTIs may be used. That is, the RNTI is not explicitly transmitted but is transmitted in a CRC calculation process. Upon reception of a DCI message transmitted on the PDCCH, the UE may check CRC by using an allocated RNTI, and when a result of the CRC checking is correct, the UE may identify that the DCI message is transmitted to the UE.

For example, DCI that schedules a PDSCH for system information (SI) may be scrambled by SI-RNTI. DCI that schedules a PDSCH for a random access response (RAR) message may be scrambled by a random access RNTI (RA-RNTI). DCI that schedules a PDSCH for a paging message may be scrambled by a paging RNTI (P-RNTI). DCI that notifies a slot format indicator (SFI) may be scrambled by an SFI-RNTI. DCI that notifies a transmit power control (TPC) may be scrambled by a TPC-RNTI. DCI that schedules UE-specific PDSCH or PUSCH may be scrambled by a cell RNTI (C-RNTI).

DCI format 0_0 may be used for the fallback DCI that schedules a PUSCH, and here, the CRC may be scrambled by a C-RNTI. The DCI format 0_0 with the CRC scrambled by the C-RNTI may include a plurality of pieces of information below.

[Table 4]

| |
|---|
| - Identifier for DCI formats - [1] bit |
| - Frequency domain resource assignment - $[\lceil \log_2(N_{\mathrm{RB}}^{\mathrm{UL,BWP}}(N_{\mathrm{RB}}^{\mathrm{UL,BWP}}+1)/2)\rceil]$ bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - Transmit power control (TPC) command for scheduled PUSCH - [2] bits |
| - UL/Supplementary UL (SUL) indicator - 0 or 1 bit |

DCI format 0_1 may be used for the non-fallback DCI that schedules a PUSCH, and here, the CRC may be scrambled by a C-RNTI. The DCI format 0_1 with the CRC scrambled by the C-RNTI may include a plurality of pieces of information below.

[Table 5]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

. For resource allocation type 0, $\lceil N_{\mathrm{RB}}^{\mathrm{UL,BWP}} / P \rceil$ bits

· For resource allocation type 1, $\lceil \log_2(N_{\mathrm{RB}}^{\mathrm{UL,BWP}}(N_{\mathrm{RB}}^{\mathrm{UL,BWP}}+1)/2) \rceil$ bits

- Time domain resource assignment -1, 2, 3, or 4 bits
- Virtual resource block (VRB)-to-physical resource block (PRB) mapping - 0 or 1 bit, only for resource allocation type 1.
    • 0 bit if only resource allocation type 0 is configured;
    • 1 bit otherwise.
- Frequency hopping flag - 0 or 1 bit, only for resource allocation type 1.
    • 0 bit if only resource allocation type 0 is configured;
    • 1 bit otherwise.
- Modulation and coding scheme - 5 bits
- New data indicator - 1 bit
- Redundancy version - 2 bits
- HARQ process number - 4 bits
- 1st downlink assignment index - 1 or 2 bits
    • 1 bit for semi-static HARQ-ACK codebook;
    • 2 bits for dynamic HARQ-ACK codebook with single HARQ-ACK codebook.
- 2nd downlink assignment index - 0 or 2 bits
    • 2 bits for dynamic HARQ-ACK codebook with two HARQ-ACK sub-codebooks;
    • 0 bit otherwise.
- TPC command for scheduled PUSCH - 2 bits
- SRS resource indicator $\left\lceil \log_2 \left( \sum_{k=1}^{L_{\max}} \binom{N_{\mathrm{SRS}}}{k} \right) \right\rceil$ or $\lceil \log_2(N_{\mathrm{SRS}}) \rceil$ bits
    • $\left\lceil \log_2 \left( \sum_{k=1}^{L_{\max}} \binom{N_{\mathrm{SRS}}}{k} \right) \right\rceil$ bits for non-codebook based PUSCH transmission;
    • $\lceil \log_2(N_{\mathrm{SRS}}) \rceil$ bits for codebook based PUSCH transmission.
- Precoding information and number of layers - up to 6 bits
- Antenna ports - up to 5 bits
- SRS request - 2 bits
- CSI request - 0, 1, 2, 3, 4, 5, or 6 bits
- Code block group (CBG) transmission information - 0, 2, 4, 6, or 8 bits
- PTRS-DMRS association - 0 or 2 bits.
- beta_offset indicator - 0 or 2 bits
- DMRS sequence initialization - 0 or 1 bit

DCI format 1_0 may be used for the fallback DCI that schedules a PDSCH, and here, the CRC may be scrambled by a C-RNTI. The DCI format 1_0 with the CRC scrambled by the C-RNTI may include a plurality of pieces of information below.

[Table 6]

| |
|---|
| - Identifier for DCI formats - [1] bit |
| - Frequency domain resource assignment - $[\lceil \log_2(N_{RB}^{DL,BWP}(N_{RB}^{DL,BWP}+1)/2) \rceil]$ bits |
| - Time domain resource assignment - X bits |
| - VRB-to-PRB mapping - 1 bit. |
| - Modulation and coding scheme - 5 bits |
| - New data indicator - 1 bit |
| - Redundancy version - 2 bits |
| - HARQ process number - 4 bits |
| - Downlink assignment index - 2 bits |
| - TPC command for scheduled PUCCH - [2] bits |
| - Physical uplink control channel (PUCCH) resource indicator - 3 bits |
| - PDSCH-to-HARQ feedback timing indicator - [3] bits |

DCI format 1_1 may be used for the non-fallback DCI that schedules a PDSCH, and here, the CRC may be scrambled by a C-RNTI. The DCI format 1_1 with the CRC scrambled by the C-RNTI may include a plurality of pieces of information below.

[Table 7]

| |
|---|
| - Carrier indicator - 0 or 3 bits |
| - Identifier for DCI formats - [1] bits |
| - Bandwidth part indicator - 0, 1 or 2 bits |
| - Frequency domain resource assignment |
|      • For resource allocation type 0, $\lceil N_{RB}^{DL,BWP}/P \rceil$ bits |
|      • For resource allocation type 1, $\lceil \log_2(N_{RB}^{DL,BWP}(N_{RB}^{DL,BWP}+1)/2) \rceil$ bits |
| - Time domain resource assignment -1, 2, 3, or 4 bits |
| - VRB-to-PRB mapping - 0 or 1 bit, only for resource allocation type 1. |
|      • 0 bit if only resource allocation type 0 is configured; |
|      • 1 bit otherwise. |
| - PRB bundling size indicator - 0 or 1 bit |
| - Rate matching indicator - 0, 1, or 2 bits |
| - ZP CSI-RS trigger - 0, 1, or 2 bits |
| For transport block 1: |
| - Modulation and coding scheme - 5 bits |
| - New data indicator - 1 bit |
| - Redundancy version - 2 bits |
| For transport block 2: |
| - Modulation and coding scheme - 5 bits |
| - New data indicator - 1 bit |
| - Redundancy version - 2 bits |
| - HARQ process number - 4 bits |
| - Downlink assignment index - 0 or 2 or 4 bits |
| - TPC command for scheduled PUCCH - 2 bits |
| - PUCCH resource indicator - 3 bits |

(continued)

> - PDSCH-to-HARQ_feedback timing indicator - 3 bits
> - Antenna ports - 4, 5 or 6 bits
> - Transmission configuration indication - 0 or 3 bits
> - SRS request - 2 bits
> - CBG transmission information - 0, 2, 4, 6, or 8 bits
> - CBG flushing out information - 0 or 1 bit
> - DMRS sequence initialization - 1 bit

[PDCCH: CORESET, REG, CCE, Search Space]

Hereinafter, a DL control channel in the 5G communication system will now be described in detail with reference to drawings.

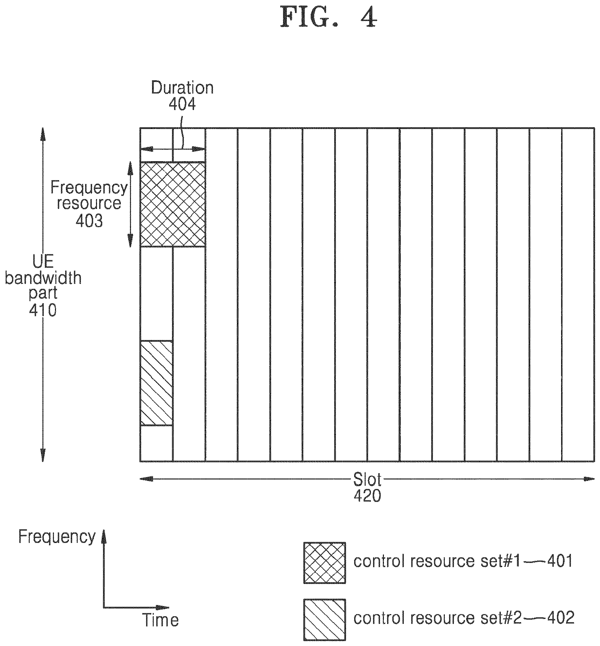

FIG. 4 illustrates an example of a control resource set (CORESET) on which a DL control channel is transmitted in a 5G wireless communication system. FIG. 4 illustrates the example in which UE BWP 410 is configured on the frequency axis, and two control resource sets (control resource set #1 401 and control resource set #2 402) are configured in a slot 420 on the time axis. The control resource sets 401 and 402 may be configured on particular frequency resources 403 in the full UE BWP 410 on the frequency axis. The control resource sets 401 and 402 may be configured as one or more OFDM symbols on the time axis, and may be defined as control resource set duration 404. Referring to the example of FIG. 4, the control resource set #1 401 may be configured as control resource set duration of two symbols, and the control resource set #2 402 may be configured as control resource set duration of one symbol.

The control resource set in the 5G communication system described above may be configured by the BS for the UE by higher layer signaling (e.g., system information (SI), MIB, or RRC signaling). Configuring the UE with a control resource set is understood as providing information such as a control resource set ID, a frequency location of the control resource set, length of symbols of the control resource set, or the like. For example, the control resource set may include a plurality of pieces of information below.

[Table 8]

```
ControlResourceSet ::=                    SEQUENCE {
   -- Corresponds to L1 parameter 'CORESET-ID'

   controlResourceSetId               ControlResourceSetId,
   (control resource set identity)
   frequencyDomainResources           BIT STRING (SIZE (45)),
   (frequency axis resource allocation information)
   duration                           INTEGER (1..maxCoReSetDuration),
   (time axis resource allocation information)
   cce-REG-MappingType                CHOICE {
```

```
(CCE-to-REG mapping type)
  interleaved                          SEQUENCE {

    reg-BundleSize                          ENUMERATED {n2, n3, n6},
    (REG bundle size)

    precoderGranularity                     ENUMERATED {sameAsREG-bundle,
allContiguousRBs},

    interleaverSize                         ENUMERATED {n2, n3, n6}
    (interleaver size)

    shiftIndex
    INTEGER(0..maxNrofPhysicalResourceBlocks-1)
    (interleaver shift)
  },
  nonInterleaved                       NULL
},
tci-StatesPDCCH                        SEQUENCE(SIZE (1..maxNrofTCI-
  StatesPDCCH)) OF TCI-StateId                     OPTIONAL,
(QCL configuration information)
tci-PresentInDCI                       ENUMERATED {enabled}
}
```

In Table 8, tci-StatesPDCCH (simply referred to as transmission configuration indication (TCI) state) configuration information may include information about channel state information reference signal (CSI-RS) indexes or one or more SS/PBCH block indexes having a QCL relation with a DMRS transmitted in the corresponding control resource set.

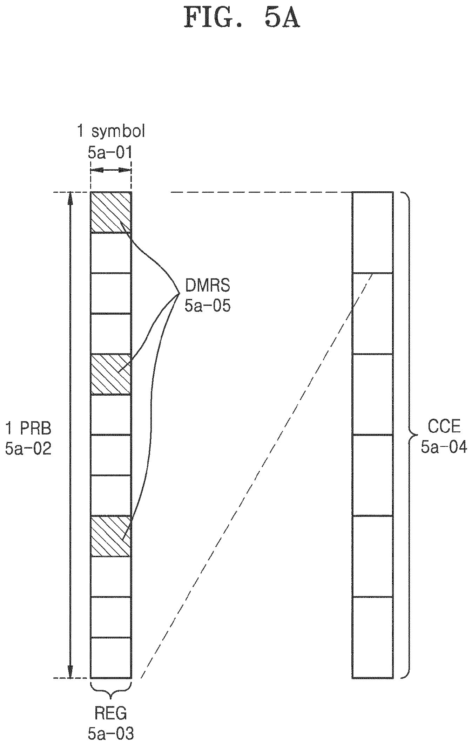

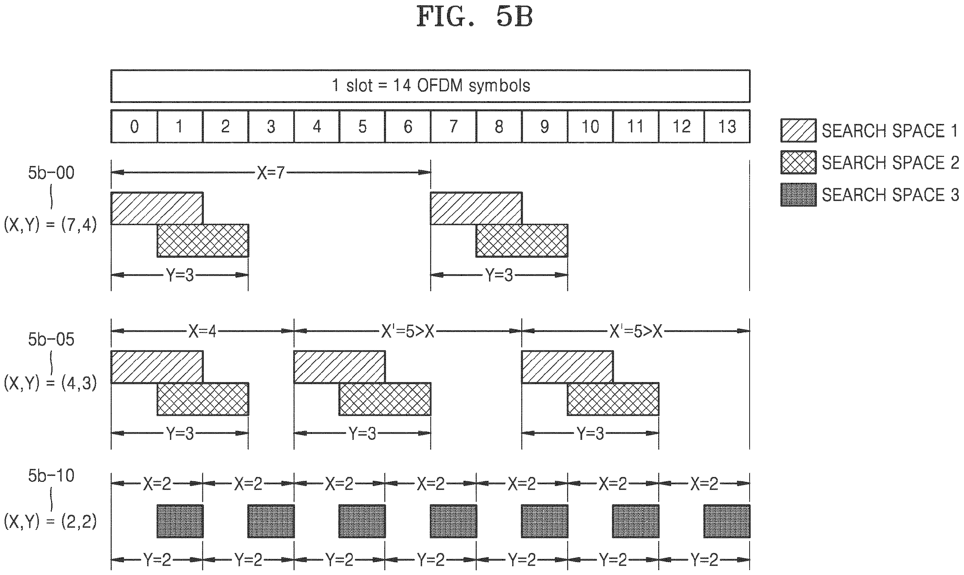

FIG. 5 illustrates an example of a basic unit of time and frequency resources that configure a DL control channel being usable in the 5G. Referring to FIG. 5A, a basic unit of time and frequency resources that configure a control channel may be referred to as a resource element group (REG) 5a03, and the REG 503 may be defined by one OFDM symbol 5a01 on the time axis and one physical resource block (PRB) 5a02, i.e., 12 subcarriers on the frequency axis. The BS may configure a DL control channel allocation unit by connecting REGs 5a03.

As illustrated in FIG. 5A, when a basic unit with which the DL control channel is allocated is referred to as a control channel element (CCE) 5a04 in the 5G, the one CCE 5a04 may include a plurality of REGs 503. When describing, as an example, the REG 503 shown in FIG. 5A, the REG 5a03 may include 12 REs, and when one CCE 5a04 includes 6 REGs 5a03, the one CCE 5a04 may include 72 REs. When the DL control resource set is configured, it may include a plurality of CCEs 5a04, and a particular DL control channel may be transmitted by being mapped to one or more CCEs 5a04 based on an aggregation level (AL) in the control resource set. The CCEs 5a04 in the control resource set may be identified by numbers, and the numbers may be allocated to the CCEs 5a04 in a logical mapping scheme.

The basic unit of the DL control channel shown in FIG. 5A, i.e., the REG 5a03, may include both REs to which DCI is mapped and a region to which DMRS 5a05 that is a reference signal for decoding the DCI is mapped. As shown in FIG. 5A, three DMRSs 5a05 may be transmitted in one REG 5a03. The number of CCEs required to transmit the PDCCH may be 1, 2, 4, 8, or 16 depending on the AL, and different numbers of CCEs may be used to implement link adaptation of the DL control channel. For example, when AL=L, one DL control channel may be transmitted in L CCEs. The UE has to detect a signal without knowing information about the DL control channel, and thus, a search space representing a set of CCEs is defined for the blind decoding. The search space may be defined as a set of DL control channel candidates that include CCEs on which the UE needs to attempt decoding at a given AL, and because there are various ALs each making a bundle with 1, 2, 4, 8, or 16 CCEs, the UE may have a plurality of search spaces. A search space set may be defined as a set of search spaces at all the configured ALs.

The search spaces may be classified into common search spaces and UE-specific search spaces. A certain group of UEs or all the UEs may monitor a common search space of the PDCCH so as to receive dynamic scheduling of the system information or receive cell-common control information such as a paging message. For example, the UE may monitor the common search space of the PDCCH so as to receive PDSCH scheduling allocation information for transmitting an SIB including cell operator information or the like. Because a certain group of UEs or all the UEs need to receive the PDCCH, the common search space may be defined as a set of pre-defined CCEs. The UE may receive UE-specific PDSCH or PUSCH scheduling allocation information by monitoring the UE-specific search space of the PDCCH. The UE-specific search space may be UE-specifically defined as a function of various system parameters and an ID of the UE.

In the 5G communication system, parameters of the search space of the PDCCH may be configured by the BS for the UE by using higher layer signaling (e.g., SIB, MIB, or RRC signaling). For example, the BS may configure the UE with the number of PDCCH candidates at each aggregation level L, monitoring periodicity for the search space, monitoring occasion on symbols in the slot for the search space, a type of the search space (common search space or UE-specific search space), a combination of a DCI format to be monitored in the search space and an RNTI, a control resource set index to monitor the search space, or the like. For example, the search space may include a plurality of pieces of information below.

[Table 9]

```
SearchSpace ::=                        SEQUENCE {
    -- Identity of the search space. SearchSpaceId = 0 identifies the
      SearchSpace configured via PBCH (MIB) or ServingCellConfigCommon.
    searchSpaceId                      SearchSpaceId,
    (search space identity)
    controlResourceSetId               ControlResourceSetId,
    (control resource set identity)
    monitoringSlotPeriodicityAndOffset    CHOICE {
    (monitoring slot level periodicity)
      sl1                              NULL,
      sl2                              INTEGER (0..1),
      sl4                              INTEGER (0..3),
      sl5                            INTEGER (0..4),
      sl8                              INTEGER (0..7),
      sl10                             INTEGER (0..9),
      sl16                             INTEGER (0..15),
      sl20                             INTEGER (0..19)
    }
    duration(monitoring duration)            INTEGER (2..2559)
```

```
monitoringSymbolsWithinSlot                 BIT STRING (SIZE (14))
(monitoring symbol within slot)
nrofCandidates                              SEQUENCE {
(number of PDCCH candidates for each aggregation level)
  aggregationLevel1                         ENUMERATED {n0, n1, n2, n3, n4, n5,
  n6, n8},
  aggregationLevel2                         ENUMERATED {n0, n1, n2, n3, n4, n5,
  n6, n8},
  aggregationLevel4                         ENUMERATED {n0, n1, n2, n3, n4, n5,
  n6, n8},
  aggregationLevel8                         ENUMERATED {n0, n1, n2, n3, n4, n5,
  n6, n8},
  aggregationLevel16                        ENUMERATED {n0, n1, n2, n3, n4,
  n5, n6, n8}
},

searchSpaceType                  CHOICE {
(search space type)
  -- Configures this search space as common search space (CSS) and DCI
  formats to monitor.
  common                         SEQUENCE {
(common search space)
  }
  ue-Specific                    SEQUENCE {
(UE-specific search space)
    -- Indicates whether the UE monitors in this USS for DCI formats 0-0
  and 1-0 or for formats 0-1 and 1-1.
    formats                           ENUMERATED {formats0-0-And-1-0,
  formats0-1-And-1-1},
    ...
      }
```

Based on the configuration information, the BS may configure the UE with one or more search space sets. According to some embodiments, the BS may configure search space set 1 and search space set 2 for the UE, and the BS may configure the UE to monitor DCI format A scrambled by an X-RNTI in the search space set 1 in the common search space and to monitor DCI format B scrambled by a Y-RNTI in the search space set 2 in the UE-specific search space.

Based on configuration information, one or more search space sets may be present in the common search space or the UE-specific search space. For example, search space set #1 and search space set #2 may be configured as the common search space, and search space set #3 and search space set #4 may be configured as the UE-specific search space.

In the common search space, combinations of DCI formats and RNTIs below may be monitored. Obviously, the combinations are not limited to an example below.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI

- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, combinations of DCI formats and RNTIs below may be monitored. Obviously, the combinations are not limited to an example below.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The RNTIs may conform to definitions and purposes below.

C-RNTI (Cell RNTI): for UE-specific PDSCH scheduling
TC-RNTI (Temporary Cell RNTI): for UE-specific PDSCH scheduling
CS-RNTI (Configured Scheduling RNTI): for semi-statically configured UE-specific PDSCH scheduling
RA-RNTI (Random Access RNTI): for PDSCH scheduling in a random access process
P-RNTI (Paging RNTI): for scheduling a PDSCH on which paging is transmitted
SI-RNTI (System Information RNTI): for scheduling a PDSCH on which system information is transmitted
INT-RNTI (Interruption RNTI): for indicating whether to puncture the PDSCH
TPC-PUSCH-RNTI (Transmit Power Control for PUSCH RNTI): for indicating power control command for a PUSCH
TPC-PUCCH-RNTI (Transmit Power Control for PUCCH RNTI): for indicating power control command for a PUCCH
TPC-SRS-RNTI (Transmit Power Control for SRS RNTI): for indicating power control command for an SRS

The DCI formats described above may conform to definitions below.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In the 5G, a search space at aggregation level L with control resource set p and search space set s may be represented as in Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- Cambria Math: aggregation level
- Cambria Math: carrier index
- Cambria Math: a total number of CCEs being present in control resource set p
- Cambria Math: slot index
- Cambria Math: the number of PDCCH candidate groups at aggregation level L
- Cambria Math= 0, ..., Cambria Math -1: index of PDCCH candidate groups at aggregation level L

$$-i = 0, \ldots, L - 1$$

$$-Y_{p,n_{s,f}^{\mu}} = \left(A_p \cdot Y_{p,n_{s,f}^{\mu}-1}\right) \bmod D \;, \quad Y_{p,-1} = n_{RNTI} \neq 0 \;, \quad A_p = 39827 \; for \; p\bmod 3 = 0 \;,$$

$$A_p = 39829 \; for \; p\bmod 3 = 1, \quad A_p = 39839 \; for \; p\bmod 3 = 2, \quad D = 65537$$

- Cambria Math : UE identifier

*Cambria Math* value may correspond to 0 for common search space.

*Cambria Math* value may be a value that changes by a UE Identity (C-RNTI or ID configured by the BS for the UE) and time index for the UE-specific search space.

In the 5G, it is possible to configure a plurality of search space sets with different parameters (e.g., the parameters in Table 9), and thus, a group of search space sets the UE monitors may be different every time. For example, when the search space set #1 is configured with X-slot periodicity and the search space set #2 is configured with Y-slot periodicity, where X and Y are different, the UE may monitor both the search space set #1 and the search space set #2 in a particular slot, and may monitor one of the search space set #1 and the search space set #2 in another particular slot.

[PDCCH: span]

The UE may report, at each subcarrier spacing, UE capability about a case of having a plurality of PDCCH monitoring occasions in a slot, and may use a concept of span. The span refers to consecutive symbols on which the UE may monitor a PDCCH in a slot, and each PDCCH monitoring occasion is in one span. The span may be represented by (X, Y), where X refers to a minimum number of symbols between first symbols of two successive spans and Y refers to the number of consecutive symbols on which to monitor the PDCCH in one span. Here, the UE may monitor the PDCCH in a section in Y symbols from the first symbol of the span within the span.

FIG. 5B illustrates a case in which a UE can have a plurality of PDCCH monitoring occasions in a slot, in terms of spans, in a wireless communication system. There may be spans (X,Y) = (7,3), (4,3), (2,2), and the three cases are respectively represented by reference numerals (5b-00), (5b-05), and (5b-10) in FIG. 5B. For example, (5b-00) indicates a case in which two spans that may be represented by (7,3) in a slot exist. A gap between first symbols of the two spans is represented by X=7, there may be a PDCCH monitoring occasion in a total of Y=3 symbols from the first symbol of each span, and each of search spaces 1 and 2 may be present on symbols represented by Y=3. In another example, (5b-05) indicates a case in which there are a total of three spans that may be represented by (4, 3) in a slot, and in this case, a gap between the second and third spans may be distant by X'=5 symbols being greater than X=4.

[PDCCH: UE capability reporting]

A slot location where the afore-described common search space and UE-specific search space are located may be indicated by onitoringSymbolsWitninSlot parameter of Table 9, and a symbol location in the slot may be indicated by a bitmap via monitoringSymbolsWithinSlot parameter of Table 9. A symbol location in a slot where the UE is able to monitor a search space may be reported to the BS via UE capabilities below.

- UE capability 1 (hereinafter, represented as FG 3-1). The UE capability indicates, when there is one monitoring occasion (MO) for type 1 and type 3 common search spaces or UE-specific search spaces in a slot as in Table 11-1 below, a capability to monitor the MO when the MO is located on the first three symbols in the slot. The UE capability is mandatory capability that has to be supported by every UE supporting NR, and whether to support the UE capability 1 is not explicitly reported to the BS.

[Table 11-1]

| | Index | Feature group | Components | Field name in TS 38.331 [2] |
|---|---|---|---|---|
| | 3-1 | Basic DL control channel | 1) One configured CORESET per BWP per cell in addition to CORESETO<br>- CORESET resource allocation of 6RB bit-map and duration of 1 - 3 OFDM symbols forFR1<br>- For type 1 CSS without dedicated RRC configuration and for type 0, 0A, and 2 CSSs, CORESET resource allocation of 6RB bit-map and duration 1-3 OFDM symbols for FR2<br>- For type 1 CSS with dedicated RRC configuration and for type 3 CSS, UE specific SS, CORESET resource allocation of 6RB bit-map and duration 1-2 OFDM symbols for FR2<br>- REG-bundle sizes of 213 RBs or 6 RBs<br>- Interleaved and non-interleaved CCE-to-REG mapping<br>- Precoder-granularity of REG-bundle size<br>- PDCCH DMRS scrambling determination<br>- TCI state(s) for a CORESET configuration<br>2) CSS and UE-SS configurations for unicast PDCCH transmission per BWP per cell<br>- PDCCH aggregation levels 1, 2, 4, 8, 16<br>- UP to 3 search space sets in a slot for a scheduled SCell per BWP<br>This search space limit is before applying all dropping rules.<br>- For type 1 CSS with dedicated RRC configuration, type 3 CSS, and UE-SS, the monitoring occasion is within the first 3 OFDM symbols of a slot<br>- For type 1 CSS without dedicated RRC configuration and for type 0, 0A, and 2 CSS, the monitoring occasion can be any OFDM symbol(s) of a slot, with the monitoring occasions for any of Type 1- CSS without dedicated RRC configuration, or Types 0, 0A, or 2 CSS configurations within a single span of three consecutive OFDM symbols within a slot<br>3) Monitoring DCI formats 0_0, 1_0, 0_1, 1_1<br>4) Number of PDCCH blind decodes per slot with a given SCS follows Case 1-1 table<br>5) Processing one unicast DCI scheduling DL and one unicast DCI scheduling UL per slot per scheduled CC for FDD<br>6) Processing one unicast DCI scheduling DL and 2 unicast DCI scheduling UL per slot per scheduled CC for TDD | n/a |

- UE capability 2 (hereinafter, represented as FG 3-2) The UE capability may indicate, when there is one monitoring occasion (MO) for common search spaces or UE-specific search spaces in a slot as in Table 11-2 below, a capability of monitoring regardless of where the start symbol location of the MO is. The UE capability is optionally supported by the UE, and whether to support the UE capability is explicitly reported to the BS.

[Table 11-2]

| Index | Feature group | Components | Field name in TS 38.331 [2] |
|---|---|---|---|
| 3-2 | PDCCH monitoring on any span of up to 3 consecutive OFDM symbols of a slot | For a given UE, all search space configurations are within the same span of 3 consecutive OFDM symbols in the slot | *pdcchMonitoringSingleOccasion* |

- UE capability 3 (hereinafter, represented as FG 3-5, 3-5a, or 3-5b) The UE capability indicates, when there are a plurality of monitoring occasions (MOs) for common search spaces or UE-specific search spaces in a slot as in Tables 11-3 below, an MO pattern the UE can monitor. The pattern consists of a gap X between start symbols of different MOs, and a maximum symbol length Y for one MO. Combinations of (X, Y) supported by the UE may be one or more of {(2,2), (4,3), (7,3)}. The UE capability is optionally supported by the UE, and whether to support the UE capability and the combination of (X,Y) is explicitly reported to the BS.

[Table 11-3]

| Index | Feature group | Components | Field name in TS 38.331 [2] |
|---|---|---|---|
| 3-5 | For type 1 CSS with dedicated RRC configuration, type 3 CSS, and UE-SS, monitoring occasion can be any OFDM symbol(s) of a slot for Case 2 | For type 1 CSS with dedicated RRC configuration, type 3 CSS, and UE-SS, monitoring occasion can be any OFDM symbol(s) of a slot for Case 2 | *pdcch-MonitoringAnyOccasions* { 3-5. *withoutDCI-Gap* 3-5a. *withDCI-Gap* } |
| 3-5a | For type 1 CSS with dedicated RRC configuration, type 3 CSS, and UE-SS, monitoring occasion can be any OFDM symbol(s) of a slot for Case 2 with a DCI gap | For type 1 CSS with dedicated RRC configuration, type 3 CSS and UE-SS, monitoring occasion can be any OFDM symbol(s) of a slot for Case 2, with minimum time separation (including the cross-slot boundary case) between two DL unicast DCIs, between two UL unicast DCts, or between a DL and an UL unicast DCI in different monitoring occasions where at least one of them is not the monitoring occasions of FG-3-1, for a same UE as<br>- 2OFDM symbols for 15kHz<br>- 4OFDM symbols for 30kHz<br>- 7OFDM symbols for 60kHz with NCR<br>- 11 OFDM symbols for 120kHz<br>Up to one unicast DL DCI and up to one unicast UL DCI in a monitoring occasion except for the monitoring occasions of FG 3-1.<br>In addition for TDD the minimum separation between the first two UL unicast DCIs within the firsts OFDM symbols of a slot can be zero OFDM symbols, | |

(continued)

| Index | Feature group | Components | Field name in TS 38.331 [2] |
|---|---|---|---|
| 3-5b | All PDCCH monitoring occasion can be any OFDM symbol(s) of a slot for Case 2 with a span gap | PDCCH monitoring occasions of FG-3-1, plus additional PDCCH monitoring occasion(s) can be any OFDM symbol(s) of a slot for Case 2, and for any two PDCCH monitoring occasions belonging to different spans, where at least one of them is not the monitoring occasions of FG-3-1, in same or different search spaces, there is a minimum time separation of X OFDM symbols (including the cross-slot boundary case) between the start of two spans, where each span is of length up to Y consecutive OFDM symbols of a slot. Spans do not overlap. Every span is contained in a single slot. The same span pattern repeats in every slot. The separation between consecutive spans within and across slots may be unequal but the same (X, Y) limit must be satisfied by all spans. Every monitoring occasion is fully contained in one span. In order to determine a suitable span pattern, first a bitmap b(l), 0<=t<=13 is generated, where b(I)=1 if symbol I of any slot is part of a monitoring occasion, b(I)=0 otherwise. The first span in the span pattern begins at the smallest I for which b(I)=1. The next span in the span pattern begins at the smallest I not included in the previous span(s) for which b(I)=1. The span duration is max {maximum value of all CORESET durations, minimum value of Y in the UE reported candidate value} except possibly the last span in a slot which can be of shorter duration. A particular PDCCH monitoring configuration meets the UE capability limitation if the span arrangement satisfies the gap separation for at least one (X, Y) in the UE reported candidate value set in every slot, including cross slot boundary. For the set of monitoring occasions which are within the same span; • Processing one unicast DCI scheduling DL and one unicast DCI scheduling UL per scheduled CC across this set of monitoring occasions for FDD • Processing one unicast DCI scheduling DL and two unicast DCI scheduling UL per scheduled CC across this set of monitoring occasions for TDD - Processing two unicast DCI scheduling DL and one unicast DCI scheduling UL per scheduled CC across this set of monitoring occasions for TDD The number of different start symbol indices of spans for all PDCCH monitoring occasions per slot, including PDCCH monitoring occasions of FG-3-1, is no more than floor(14/X) (X is minimum among values reported by UE). The number of different start symbol indices of PDCCH monitoring occasions per slot including PDCCH monitoring occasions of FG-3-1, is no more than 7. The number of different start symbol indices of PDCCH monitoring occasions per half-slot including PDCCH monitoring occasions of FG-3-1 is no more than 4 in SCell. | |

The UE may report, to the BS, whether to support UE capability 2 and/or the UE capability 3 and associated parameters. The BS may perform time domain resource allocation for the common search space and the UE-specific search space, based on the reported UE capability. When allocating the resource, the BS may not arrange the MO in a location where the UE cannot perform monitoring.

[PDCCH: BD/CCE limit]

When a plurality of search space sets are configured for the UE, conditions below may be considered for a method of determining a search space set to be monitored by the UE.

If the UE is configured with r15monitoringcapability as a value of higher layer signaling monitoringCapability-Config-r16, the UE may define maximum values of the number of PDCCH candidate groups to be monitored and the number of CCEs that configure the whole search spaces (here, the whole search spaces refer to a whole CCE set corresponding to a union region of a plurality of search space sets) for each slot, and if the UE is configured with r16monitoringcapability as a value of monitoringCapabilityConfig-r16, the UE defines maximum values of the number of PDCCH candidate groups to be monitored and the number of CCEs that configure the whole search spaces (here, the whole search spaces refer to a whole CCE set corresponding to a union region of a plurality of search space sets) for each span.

[Condition 1: restriction on maximum number of PDCCH candidate groups]

A maximum number $M^{\mu}$ of PDCCH candidate groups the UE can monitor may conform to Table 12-1 below when defined based on a slot and may conform to Table 12-2 below when defined based on a span on a cell configured with $15 \cdot 2^{\mu}$ kHz subcarrier spacing, according to the configuration value of higher layer signaling as described above.

[Table 12-1]

| $\mu$ | Maximum number of PDCCH candidates per slot and per serving cell ($M^{\mu}$) |
|---|---|
| 0 | 44 |
| 1 | 36 |
| 2 | 22 |
| 3 | 20 |

[Table 12-2]

| | Maximum number $M^{\mu}$ of monitored PDCCH candidates per span for combination (X,Y) and per serving cell | | |
|---|---|---|---|
| $\mu$ | (2,2) | (4,3) | (7,3) |
| 0 | 14 | 28 | 44 |
| 1 | 12 | 24 | 36 |

[Condition 2: restriction on maximum number of CCEs]

A maximum number $C^{\mu}$ of CCEs that configure the whole search spaces (here, the whole search spaces refer to a whole CCE set corresponding to a union region of a plurality of search space sets) may conform to Table 12-3 below when defined based on a slot and may conform to Table 12-4 below when defined based on a span on a cell configured with $15 \cdot 2^{\mu}$ kHz subcarrier spacing, according to the configuration value of higher layer signaling as described above.

[Table 12-3]

| $\mu$ | Maximum number of non-overlapped CCEs per slot and per serving cell ($C^{\mu}$) |
|---|---|
| 0 | 56 |
| 1 | 56 |

(continued)

| $\mu$ | Maximum number of non-overlapped CCEs per slot and per serving cell ($C^\mu$) |
|---|---|
| 2 | 48 |
| 3 | 32 |

[Table 12-4]

| | Maximum number $C^\mu$ of non-overlapped CCEs per span for combination (X,Y) and per serving cell | | |
|---|---|---|---|
| $\mu$ | (2,2) | (4,3) | (7,3) |
| 0 | 18 | 36 | 56 |
| 1 | 18 | 36 | 56 |

For convenience of descriptions, a situation that satisfies both conditions 1 and 2 at a particular time is defined as "condition A". Accordingly, failing to satisfy the condition A may mean that at least one of the condition 1 or the condition 2 is not satisfied.

[PDCCH: Overbooking]

A case where the condition A is not satisfied at a particular time according to configuration of the search space sets by the BS may occur. When the condition A is not satisfied at the particular time, the UE may select and monitor only some of the search space sets configured to satisfy the condition A at the particular time, and the BS may transmit a PDCCH in the selected search space set.
In order to select some search spaces among all of the configured search space sets, a method below may be performed.
In a case where the condition A for the PDCCH is not satisfied at a particular time (or slot), the UE (or the BS) may priorly select a search space set whose search space type is configured as the common search space over a search space set that is configured as the UE-specific search space, from among the search space sets that exist at the particular time.
When all the search space sets configured as the common search space are selected (i.e., when the condition A is satisfied even after all the search space sets configured as the common search space are selected), the UE (or the BS) may select search space sets configured as the UE-specific space. Here, when there are a plurality of search space sets configured as the UE-specific search space, a search space set having a lower search space index may have higher priority. The UE may select UE-specific search space sets within a range in which they satisfy the condition A, in consideration of the priorities.

[QCL, TCI state]

One or more different antenna ports (which may be substituted with one or more channels, signals, or combinations thereof, but for convenience of descriptions in the present disclosure, collectively referred to as different antenna ports) may be associated with each other according to QCL configurations in Table 13 below in a wireless communication system. The TCI state is to announce a QCL relation between a PDCCH (or PDCCH DMRS) and other RS or channel, and when a reference antenna port A (reference RS #A) and other target antenna port B (target RS #B) are QCLed with each other, it means that the UE is allowed to apply some or all of large-scale channel parameters estimated from the antenna port A to measurement of channels from the antenna port B. QCL may need to associate different parameters depending on a situation such as 1) time tracking affected by average delay and delay spread, 2) frequency tracking affected by Doppler shift and Doppler spread, 3) radio resource management (RRM) affected by an average gain, 4) beam management affected by a spatial parameter, or the like. Accordingly, NR supports four types of QCL relations as in Table 13 below.

[Table 13]

| QCL type | Large-scale characteristics |
|:---:|:---:|
| A | Doppler shift, Doppler spread, average delay, delay spread |
| B | Doppler shift, Doppler spread |
| C | Doppler shift, average delay |
| D | Spatial Rx parameter |

The spatial RX parameter may collectively refer to some or all of various parameters such as angle of arrival (AoA), power angular spectrum (PAS) of AoA, angle of departure (AoD), PAS of AoD, transmit/receive channel correlation, transmit/receive beamforming, spatial channel correlation, or the like.

The QCL relation may be configured for the UE via an RRC parameter TCI-state and QCL-Info as described in Table 14 below. Referring to Table 14, the BS may configure the UE with one or more TCI states to notify the UE maximally up to two QCL relations (qcl-Type1 and qcl-Type2) for an RS that refers to an ID of the TCI state, i.e., a target RS. Here, QCL information (QCL-Info) included in each of the TCI states includes a BWP index and a serving cell index of a reference RS indicated by the QCL information, a type and ID of the reference RS, and a QCL type as in Table 13 above.

[Table 14]

```
TCI-State ::=                      SEQUENCE {
    tci-StateId                        TCI-StateId,
    (ID of corresponding TCI state)
    qcl-Type1                          QCL-Info,
    (QCL information of first reference RS of RS(target RS)that refers to corresponding TCI state
ID)
    qcl-Type2                          QCL-Info            OPTIONAL,   -- Need R
    (QCL information of second reference RS of RS(target RS)that refers to corresponding TCI
state ID)
    ...
}
```

```
QCL-Info ::=                       SEQUENCE {
    cell                               ServCellIndex       OPTIONAL,   -- Need R
    (serving cell index of reference RS indicated by corresponding QCL information)
    bwp-Id                             BWP-Id              OPTIONAL, -- Cond CSI-RS-
Indicated
    (BWP index of reference RS indicated by corresponding QCL information)
    referenceSignal                    CHOICE {
        csi-rs                             NZP-CSI-RS-ResourceId,
        ssb                                SSB-Index
        (One of CSI-RS ID or SSB ID indicated by corresponding QCL information)
    },
    qcl-Type                           ENUMERATED {typeA, typeB, typeC, typeD},
    ...
}
```

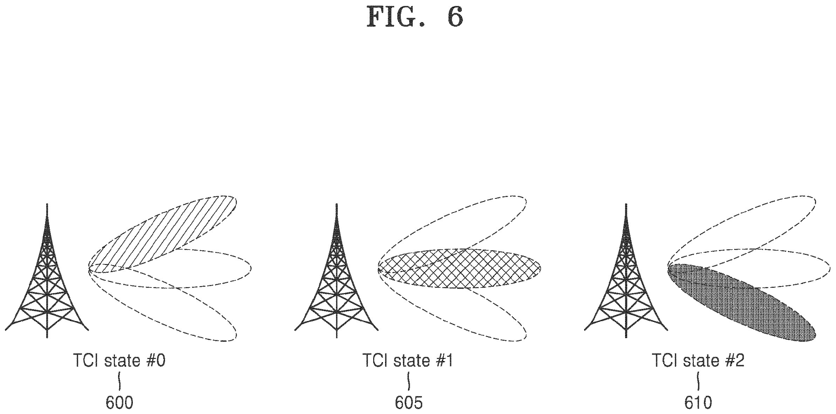

FIG. 6 illustrates examples of BS beam allocation according to TCI state configurations in a wireless communication system, according to an embodiment of the present disclosure.

Referring to FIG. 6, the BS may deliver information about N different beams to the UE via N different TCI states.

For example, in a case of N=3 as shown in FIG. 6, the BS may associate qcl-Type2 parameters included in three TCI states 600, 605, and 610 with CSI-RSs or SSBs corresponding to the different beams and may configure the qci-Type2 parameters as QCL type D, thereby announcing that antenna ports referring to the different TCI states 600, 605, or 610 are associated with different spatial Rx parameters, i.e., different beams.

Tables 15 to 19 below represent valid TCI state configurations according to target antenna port types.

Table 15 represents a valid TCI state configuration when the target antenna port is a CSI-RS for tracking (TRS). The TRS refers to non-zero-power (NZP) CSI-RS in which a repetition parameter is not configured but trs-Info is configured as true. In Table 15, configuration no. 3 may be used for an aperiodic TRS.

[Table 15]

| Valid TCI state Configuration | DL RS 1 | qcl-Type1 | DL RS 2 (if configured) | qcl-Type2 (if configured) |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 16 represents valid TCI state configuration when the target antenna port is a CSI-RS for CSI. The CSI-RS for CSI refers to an NZP CSI-RS in which a parameter indicating repetition (e.g., a repetition parameter) is not configured and trs-Info is not configured to true among CSI-RSs.

[Table 16]

| Valid TCI state Configuration | DL RS 1 | qcl-Type1 | DL RS 2 (if configured) | qcl-Type2 (if configured) |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

Table 17 represents valid TCI state configuration when the target antenna port is a CSI-RS for beam management (meaning the same as BM, CSI-RS for L1 reference signal received power (RSRP) reporting). The CSI-RS for BM refers to NZP CSI-RS in which a repetition parameter is configured and which has a value of 'On' or 'Off' and in which trs-Info is not configured to true among CSI-RSs.

[Table 17]

| Valid TCI state Configuration | DL RS 1 | qcl-Type1 | DL RS 2 (If configured) | qcl-Type2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

Table 18 represents valid TCI state configuration when the target antenna port is a PDCCH DMRS.

[Table 18]

| Valid TCI state Configuration | DL RS 1 | qcl-Type1 | DL RS 2 (if configured) | qcl-Type2 (If configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 19 represents valid TCI state configuration when the target antenna port is a PDSCH DMRS.

[Table 19]

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSi-RS (CSI) | QCL-TypeA | CSI-RS (CSI) | QCL-TypeD |

A QCL configuration method according to Tables 15 to 19 above is to configure and operate a target antenna port and a reference antenna port in each stage as below: "SSB" -> "TRS" -> "CSI-RS for CSI, or CSI-RS for BM, or PDCCH DMRS, or PDSCH DMRS". By doing so, it is possible to help a reception operation by the UE by associating statistical characteristics that may be measured from the SSB and TRS with the respective antenna ports.

[PDCCH: associated with TCI state]

In more detail, TCI state combinations applicable to a PDCCH DMRS antenna port are as described in Table 20 below. In Table 20, the fourth row indicates a combination assumed by the UE before RRC configuration, and configuration after RRC configuration is not possible.

[Table 20]

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

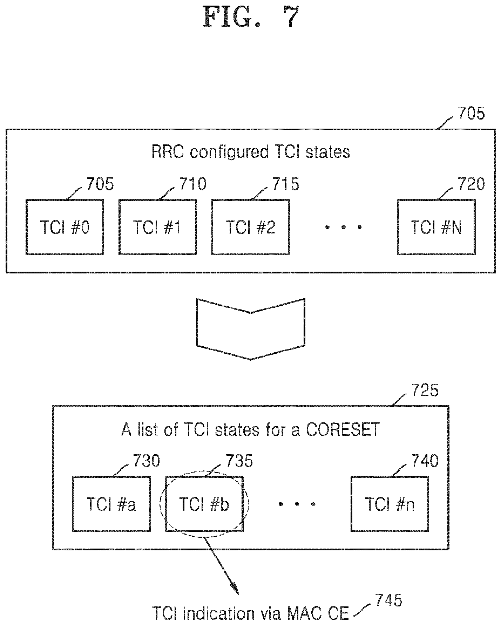

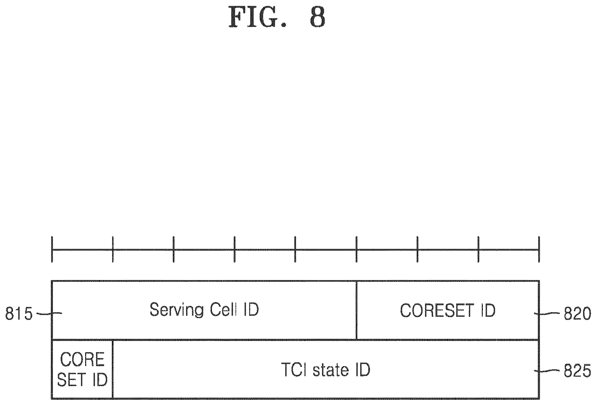

NR may support a hierarchical signaling method as shown in FIG. 8 for dynamic allocation of PCCH beams. This will now be described with reference to FIG. 7.

FIG. 7 illustrates an example of a TCI state allocation method for a PDCCH in a wireless communication system, according to an embodiment of the present disclosure.

Referring to FIG. 7, the BS may configure N TCI states 705, 710, ..., 720 for the UE by RRC signaling 700, and may configure some of them as TCI states for a CORESET (725). Afterward, the BS may indicate one of the TCI states 730, 735, and 740 for the CORESET to the UE by medium access control control element (MAC CE) signaling (745). Afterward, the UE may receive a PDCCH based on beam information included in the TCI state indicated by the MAC CE signaling.

FIG. 8 illustrates a TCI indication MAC CE signaling structure for the PDCCH DMRS in a wireless communication system, according to an embodiment of the present disclosure.

Referring to FIG. 8, TCI indication MAC CE signaling for the PDCCH DMRS may consist of 2 bytes (16 bits) and may include a serving cell ID 815 of 5 bits, a CORESET ID 820 of 4 bits, and a TCI state ID 825 of 7 bits.

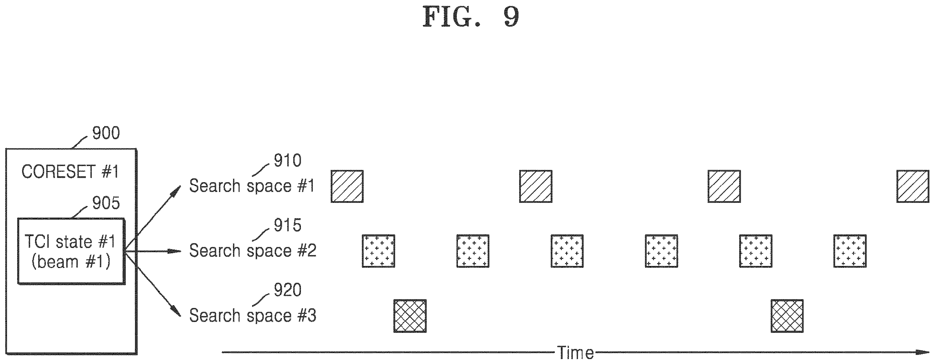

FIG. 9 illustrates an example of beam configuration of a CORESET and search space in a wireless communication system according to an embodiment of the present disclosure.

Referring to FIG. 9, the BS may indicate one in a TCI state list included in CORESET configuration 900 by MAC CE signaling (905). Afterward, the UE may consider that same QCL information (beam #1 905) is applied to all of one or more search spaces 910, 915, and 920 associated with the CORESET until another TCI state is indicated for the CORESET by another MAC CE signaling. The afore-described PDCCH beam allocation method has a problem in indicating beam switching earlier than the MAC CE signaling delay and has a problem in applying the same beam uniformly for each CORESET regardless of search space characteristics, such that it is difficult for flexible PDCCH beam operation. Hereinafter, embodiments of the present disclosure provide a more flexible PDCCH beam configuration and operation method. Although several distinct examples will now be described for convenience of describing the embodiments of the present disclosure, the examples are not mutually exclusive but may be applied in an appropriate combination depending on the situation.

The BS may configure the UE with one or more TCI states for a particular CORESET, and may activate one of the configured TCI states by an MAC CE activation command. For example, TCI states {TCI state#0, TCI state#1, and TCI state#2} may be configured for CORESET #1, and the BS may transmit, to the UE, an activation command to assume TCI state #0 for the TCI state for CORESET #1 via MAC CE. The UE may correctly receive a DMRS of the CORRESET based on QCL information in the activated TCI state, based on the activation command for the TCI state received via the MAC CE.

When the UE fails to receive the MAC CE activation command for a TCI state for a CORESET indexed with 0 (i.e., the CORESET #0), the UE may assume that a DMRS transmitted in CORESET #0 is QCLed with an SS/PBCH block (SSB) identified in an initial access procedure or in a non-contention based random access procedure that is not triggered by a PDCCH command.

With respect to a CORESET (CORESET #X) configured with a different index value instead of index 0, when the UE is not configured with a TCI state for the CORESET #X or is configured with one or more TCI states but fails to receive the MAC CE activation command for activating one of the configured one or more TCI states, the UE may assume that a DMRS transmitted in CORESET #X is QCLed with an SS/PBCH block identified in an initial access procedure.

[PDCCH: associated with QCL prioritization rule]

Hereinafter, an operation of determining QCL priority for a PDCCH will now be described in detail.

When the UE operates with carrier aggregation in a single cell or a band and a plurality of CORESETs existing in an activated BWP in the single or multiple cells have same or different QCL-typeD characteristics and overlap on a time domain in a particular PDCCH monitoring occasion, the UE may select a particular CORESET according to the QCL priority determination operation and may monitor CORESETs having the same QCL-TypeD characteristics as the selected CORESET. That is, when the plurality of CORESETs overlap on the time domain, the UE may receive only one QCL-TypeD characteristic. In this case, a reference for determining QCL priority may be as below.

- Reference 1: A CORESET associated with the common search space of the lowest index in a cell corresponding to the lowest index among cells including the common search space.
- Reference 2: A CORESET associated with the UE-specific search space of the lowest index in a cell corresponding to the lowest index among cells including the UE-specific search space.

As described above, when one of the references is not fulfilled, the other one of the references are applied. For example, in a case where CORESETs overlap on a time domain in a particular PDCCH monitoring occasion, if all the CORESETs are not associated with the common search space but associated with the UE-specific search space, i.e., when the reference 1 is not fulfilled, the UE may skip application of the reference 1 and may apply the reference 2.

When the UE selects a CORESET according to the afore-described references, the UE may additionally consider two conditions below for QCL information configured for the CORESET. First, if CORESET 1 has CSI-RS 1 as a reference signal having QCL-TypeD association and a reference signal having QCL-TypeD association with the CSI-RS 1 is SSB1, and CORESET 2 has a reference signal SSB 1 having QCL-TypeD association, the UE may consider that the two CORESETs 1 and 2 have different QCL-TypeD characteristics. Second, if CORESET 1 has CSI-RS 1 configured for cell 1 as a reference signal having QCL-TypeD association, and a reference signal having QCL-TypeD association with the CSI-RS 1 is SSB 1, and CORESET 2 has a reference signal CSI-RS 2 configured for cell 2 as a reference signal having QCL-TypeD association and a reference signal having the QCL-TypeD association with CSI-RS 2 is a same SSB 1, the UE may consider that the two CORESETs 1 and 2 have same QCL-TypeD characteristics.

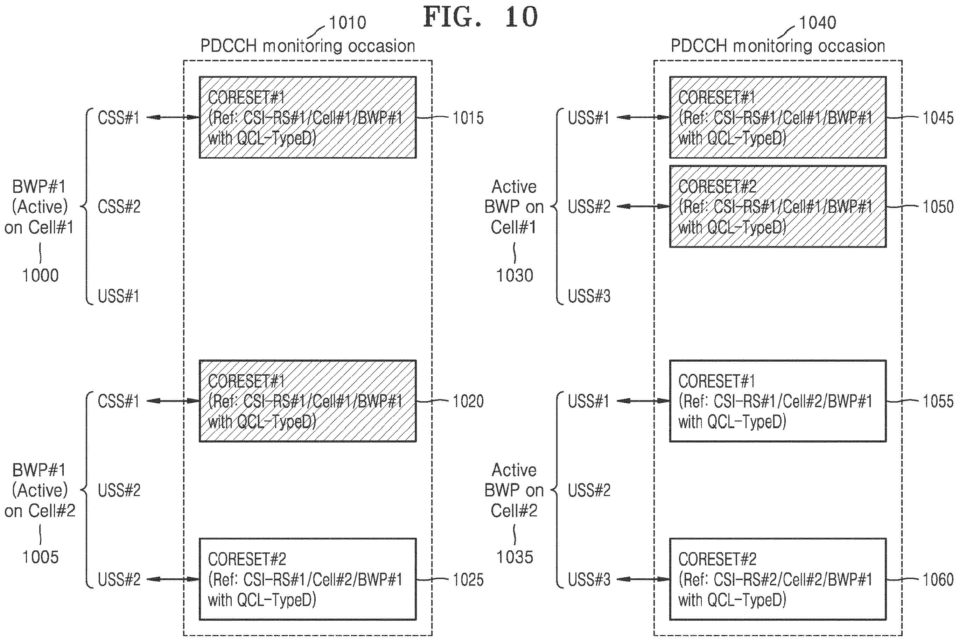

FIG. 10 is a diagram for describing a method by which the UE selects a receivable CORESET by considering priorities in receiving a DL control channel in a wireless communication system, according to an embodiment of the present disclosure.

For example, the UE may be configured to receive a plurality of CORESETs overlapping on a time domain in a particular PDCCH monitoring occasion 1010, and the plurality of CORESETs may be associated with the UE-specific search space or the common search space on a plurality of cells. In a particular PDCCH monitoring occasion, there may be CORESET #1 1015 associated with common search space #1 in BWP #1 1000 of cell #1, and there may be CORESET #1 1020 associated with common search space #1 and CORESET #2 1025 associated with UE-specific search space #2 in BWP #1 1005 of cell #2. The CORESETs 1015 and 1020 may have QCL-TypeD association with CSI-RS resource #1 configured in the BWP #1 of the cell #1, and the CORESET 1025 may have QCL-TypeD association with CSI-RS resource #1 configured in the BWP #1 of the cell #2. Accordingly, when the reference 1 is applied to the PDCCH monitoring occasion 1010, all other CORESETs having a reference signal of the same QCL-TypeD as the CORESET #1 1015 may be received. Accordingly, the UE may receive the CORESETs 1015 and 1020 in the PDCCH monitoring occasion 1010. In another example, the UE may be configured to receive a plurality of CORESETs overlapping on a time domain in a particular PDCCH monitoring occasion 1040, and the plurality of CORESETs may be associated with the common search space on a plurality of cells or the UE-specific search space. In the PDCCH monitoring occasion, there may be CORESET #1 1045 associated with UE-specific search space #1 and CORESET #2 1050 associated with UE-specific search space #2 in BWP #1 1030 of the cell #1, and there may be CORESET #1 1055 associated with UE-specific search space #1 and CORESET #2 1060 associated with UE-specific search space #3 in BWP #1 1035 of the cell #2. The CORESETs 1045 and 1050 may have QCL-TypeD association with the CSI-RS resource #1 configured in the BWP #1 of the cell #1, and the CORESET 1055 may have QCL-TypeD association with the CSI-RS resource #1 configured in the BWP #1 of the cell #2, and the CORESET 1060 may have QCL-TypeD association with the CSI-RS resource #2 configured in the BWP #1 of the cell #2. Because there is no common search space when the reference 1 is applied to the PDCCH monitoring occasion 1040, the next reference 2 may be applied. When the reference 2 is applied to the PDCCH monitoring occasion 1040, all other CORESETs having a reference signal of a same QCL-TypeD as the CORESET 1045 may be received. Accordingly, the UE may receive the CORESETs 1045 and 1050 in the PDCCH monitoring occasion 1040.

[Related to rate matching/puncturing]

Hereinafter, a rate matching operation and a puncturing operation will now be described in detail.

When time and frequency resource A on which a random symbol sequence A is intended to be transmitted overlaps random time and frequency resource B, a rate matching operation or a puncturing operation may be considered for operations of transmission and reception of channel A (or the symbol sequence A), in consideration of resource C of a region on which the resource A and the resource B are overlapped. Detailed operations will now be provided.

[Rate matching operation]

- The BS may transmit the symbol sequence A by mapping channel A (or the symbol sequence A) to the whole resource A on which the symbol sequence A is intended to be transmitted to the UE, except for a region of the resource A which corresponds to the resource C overlapping the resource B. For example, when the symbol sequence A includes {symbol #1, symbol #2, symbol #3, and symbol #4}, the resource A includes {resource #1, resource #2, resource #3 and, resource #4} and the resource B includes {resource #3 and resource #5}, the BS may transmit the symbol sequence A by sequentially mapping the symbol sequence A to resources {resource #1, resource #2, and resource #4} of the resource A excluding {resource #3} that corresponds to a region overlapping the resource B and corresponds to the resource C. As a result, the BS may transmit the symbol sequence {symbol #1, symbol #2, and symbol #3} by respectively mapping them to {resource #1, resource #2, and resource #4}.

The UE may determine the resource A and the resource B from scheduling information for the symbol sequence A from the BS, and thus, may determine the resource C corresponding to the overlapping region between the resource A and the resource B. The UE may receive the symbol sequence A, assuming that the symbol sequence A is transmitted by being mapped to the whole resource A excluding the resource C. For example, when the symbol sequence A includes {symbol #1, symbol #2, symbol #3, and symbol #4}, the resource A includes {resource #1, resource #2, resource #3 and, resource #4} and the resource B includes {resource #3 and resource #5}, the UE may receive the symbol sequence A, assuming that the symbol sequence A is sequentially mapped to resources {resource #1, resource #2, and resource #4} of the resource A excluding {resource #3} corresponding to the resource C. As a result, the UE may assume that the symbol sequence {symbol #1, symbol #2, and symbol #3} is transmitted by being respectively mapped to {resource #1, resource #2, and resource #4}, and may perform a series of next operations.

[Puncturing operation]

When there is the resource C corresponding to an overlapping region between the whole resource A on which the symbol sequence A is intended to be transmitted to the UE and the resource B, the BS may map the symbol sequence A to the whole resource A but may perform transmission in the resource regions of the resource A excluding the resource C corresponding to a region overlapping the resource B and may not perform transmission on the resource region corresponding to the resource C. For example, when the symbol sequence A includes {symbol #1, symbol #2, symbol #3, and symbol #4}, the resource A includes {resource #1, resource #2, resource #3 and, resource #4} and the resource B includes {resource #3 and resource #5}, the BS may map the symbol sequence A {symbol #1, symbol #2, symbol #3, and symbol #4} to the resource A {resource #1, resource #2, resource #3 and resource #4}, and may transmit a symbol sequence {symbol #1, symbol #2, and symbol #4} corresponding to resource regions {resource #1, resource #2, and resource #4} of the resource A excluding {resource #3} corresponding to the resource C without transmitting {symbol #3} mapped to {resource #3} corresponding to the resource C. As a result, the BS may transmit the symbol sequence {symbol #1, symbol #2, and symbol #4} by respectively mapping them to {resource #1, resource #2, and resource #4}.
The UE may determine the resource A and the resource B from scheduling information for the symbol sequence A from the BS, and thus, may determine the resource C corresponding to an overlapping region between the resource A and the resource B. The UE may receive the symbol sequence A assuming that the symbol sequence A is mapped to the whole resource A but transmitted only on the regions of the resource A excluding the resource C. For example, when the symbol sequence A includes {symbol #1, symbol #2, symbol #3, and symbol #4}, the resource A includes {resource #1, resource #2, resource #3 and, resource #4} and the resource B includes {resource #3 and resource #5}, the UE may perform reception, assuming that the symbol sequence A {symbol #1, symbol #2, symbol #3, and symbol #4} are mapped to the resource A {resource #1, resource #2, resource #3 and resource #4} but {symbol #3} mapped to {resource #3} corresponds to the resource C is not transmitted, and assuming that {symbol #1, symbol #2, and symbol #4} of the symbol sequence mapped to {resource #1, resource #2, and resource #4} are transmitted without {resource #3} that overlaps the resource B and corresponds to the resource C. As a result, the UE may assume that the symbol sequence {symbol #1, symbol #2, and symbol #4} are transmitted by being respectively mapped to {resource #1, resource #2, and resource #4}, and may perform a series of next operations.
Hereinafter, a rate matching resource configuring method for rate matching of the 5G communication system will now be described. Rate matching refers to adjustment of a size of a signal, in consideration of a resource amount for transmission of the signal. For example, rate matching of a data channel may refer that the data channel is mapped with respect to a specific time and frequency resource domain but is not transmitted, such that a size of data is adjusted.

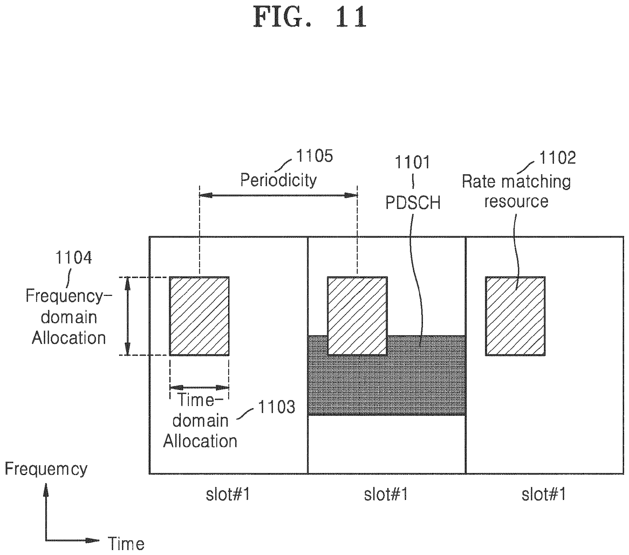

FIG. 11 is a diagram for describing a method by which the BS and the UE transmit or receive data by considering a DL data channel and a rate matching resource.
Referring to FIG. 11, a DL data channel (PDSCH) 1101 and a rate matching resource 1102 are illustrated. The BS may configure the UE with one or more rate matching resources 1102 by higher layer signaling (e.g., RRC signaling). Configuration information for the rate matching resource 1102 may include time-domain resource allocation information 1103, frequency-domain resource allocation information 1104, and periodicity information 1105. Hereinafter, a bitmap corresponding to the frequency-domain resource allocation information 1104 is referred to as a "first bitmap", a bitmap corresponding to the time-domain resource allocation information 1003 is referred to as a "second bitmap", and a bitmap corresponding to the periodicity information 1105 is referred to as a "third bitmap". When all or some of time and frequency resources of the scheduled data channel 1101 overlap the configured rate matching resource 1102, the BS may transmit the data channel 1101 by performing rate matching on the data channel 1101 in a portion of the rate matching resource 1102, and the UE may assume that the data channel 1101 has been rate matched in the portion of the rate matching resource 1102 and then may receive and decode the data channel 1101.
Through additional configuration, the BS may dynamically notify whether to perform rate matching on the data channel in the portion of the configured rate matching resource to the UE via DCI (corresponding to the "rate matching indicator" in the DCI format described above). In more detail, the BS may select and group some of the configured rate matching resources into a rate matching resource group, and may indicate whether to perform rate matching on the data channel for each rate matching resource group to the UE via DCI by using a bitmap scheme. For example, when there are four rate matching resources configured, e.g., RMR#1, RMR#2, RMR#3, and RMR#4, the BS may configure rate matching groups RMG#1={RMR#1, RMR#2} and RMG#2={RMR#3, RMR#4}, and may indicate, by using 2 bits in a DCI field, whether to perform rate matching in each of RMG#1 and RMG#2 to the UE by a bitmap. For example, the BS may indicate "1" when the rate matching needs to be performed and may indicate "0" when the rate matching does not need to be performed.

The 5G supports "RB symbol level" and "RE level" granularities for a method of configuring the rate matching resource for the UE. In more detail, a configuration method below may be performed.

[RB symbol level]

The UE may be configured with maximally up to four RateMatchPatterns for each BWP by higher layer signaling, and each RateMatchPattern may include information below.

- For a reserved resource on a BWP, a resource configured with time and frequency resource region of the reserved resource in a combination of a symbol level bitmap and an RB level bitmap on the frequency axis may be included. The reserved resource may span one or two slots. A time domain pattern (periodicityAndPattern) in which a time and frequency region consisting of an RB-level and symbol-level bitmap pair is repeated may be additionally configured.
- A time and frequency domain resource region configured with a CORESET on a BWP and a resource region corresponding to a time domain pattern configured with a search space configuration in which the time and frequency domain resource region is repeated may be included.

[RE level]

The UE may be configured with conditions below by higher layer signaling.

- configuration information (Ite-CRS-ToMatchAround) for an RE corresponding to an LTE cell-specific reference signal or common reference signal (CRS) pattern which may include the number of LTE CRS ports (nrofCRS-Ports), an LTE-CRS-vshift(s) value (v-shift), center subcarrier location information (carrierFreqDL) of an LTE carrier from a reference frequency point (e.g., reference point A), bandwidth size information of an LTE carrier (carrierBandwidth-DL), subframe configuration information (mbsfn-SubframConfigList) corresponding to a multicast-broadcast single-frequency network (MBSFN). The UE may determine a location of a CRS in an NR slot corresponding to an LTE subframe based on a plurality of pieces of information described above.
- Configuration information about a resource set corresponding to one or multiple zero power (ZP) CSI-RSs in a BWP.

[Related to LTE CRS rate match]

Hereinafter, a rate matching process for the LTE CRS will now be described in detail. For coexistence of LTE and New Radio access technology (New RAT) (or LTE-NR coexistence), NR provides a function to configure an NR UE with a CRS pattern of LTE. In more detail, the CRS pattern may be provided by RRC signaling including at least one parameter in a ServingCellConfig informatin element (IE) or a ServingCellConfigCommon IE. As an example of the parameter, there may be Ite-CRS-ToMatchAround, Ite-CRS-PatternList1-r16, Ite-CRS-PatternList2-r16, crs-RateMatch-PerCORESETPoolIndex-r16, and the like.

Rel-15 NR provides a function to configure one CRS pattern for each serving cell via the parameter Ite-CRS-ToMatchAround. In Rel-16 NR, the function is extended to be able to configure a plurality of CRS patterns for each serving cell. In more detail, one CRS pattern for one LTE carrier may be configured for a single transmission and reception point (TRP) configured UE, and two CRS patterns for one LTE carrier may be configured for a multi-TRP configured UE. For example, maximally up to three CRS patterns for each serving cell may be configured for the single TRP configured UE via the parameter Ite-CRS-PatternList1-r16. In another example, the multi-TRP configured UE may be configured with a CRS for each TRP. For example, a CRS pattern for TRP1 may be configured via the parameter Ite-CRS-PatternList1-r16, and a CRS pattern for TRP2 may be configured via the parameter Ite-CRS-PatternList2-r16. In a case where two TRPs are configured, whether to apply both CRS patterns of the TRP1 and the TRP2 or a CRS pattern of one TRP to a particular PDSCH may be determined via the parameter crs-RateMatch-PerCORESETPoolIndex-r16, and when the parameter crs-RateMatch-PerCORESETPoolIndex-r16 is configured to be enabled, a CRS pattern of one TRP is applied, and otherwise, both CRS patterns of the two TRPs are all applied.

Table 21 represents a ServingCellConfig IE including the CRS pattern, and Table 22 represents a RateMatch-PatternLTE-CRS IE including at least one parameter for a CRS pattern.

[Table 21]

```
ServingCellConfig ::=              SEQUENCE {
    tdd-UL-DL-ConfigurationDedicated    TDD-UL-DL-ConfigDedicated
OPTIONAL,   -- Cond TDD
    initialDownlinkBWP               BWP-DownlinkDedicated
OPTIONAL,   -- Need M
    downlinkBWP-ToReleaseList        SEQUENCE (SIZE (1..maxNrofBWPs)) OF BWP-Id
OPTIONAL,   -- Need N
    downlinkBWP-ToAddModList         SEQUENCE (SIZE (1..maxNrofBWPs)) OF BWP-Downlink
OPTIONAL,   -- Need N
    firstActiveDownlinkBWP-Id        BWP-Id
OPTIONAL,   -- Cond SyncAndCellAdd
    bwp-InactivityTimer              ENUMERATED {ms2, ms3, ms4, ms5, ms6, ms8, ms10, ms20,
ms30,
                                     ms40,ms50, ms60, ms80,ms100, ms200,ms300,
ms500,
                                     ms750, ms1280, ms1920, ms2560, spare10, spare9,
spare8,
                                     spare7, spare6, spare5, spare4, spare3, spare2,
spare1 }  OPTIONAL,   --Need R
    defaultDownlinkBWP-Id            BWP-Id
OPTIONAL,   -- Need S
    uplinkConfig                     UplinkConfig
OPTIONAL,   -- Need M
    supplementaryUplink              UplinkConfig
OPTIONAL,   -- Need M
    pdcch-ServingCellConfig          SetupRelease { PDCCH-ServingCellConfig }
OPTIONAL,   -- Need M
    pdsch-ServingCellConfig          SetupRelease { PDSCH-ServingCellConfig }
OPTIONAL,   -- Need M
    csi-MeasConfig                   SetupRelease { CSI-MeasConfig }
OPTIONAL,   -- Need M
    sCellDeactivationTimer           ENUMERATED {ms20, ms40, ms80, ms160, ms200, ms240,
                                     ms320, ms400, ms480, ms520, ms640, ms720,
                                     ms840, ms1280, spare2,spare1}       OPTIONAL,   -
- Cond ServingCellWithoutPUCCH
    crossCarrierSchedulingConfig     CrossCarrierSchedulingConfig
OPTIONAL,   -- Need M
    tag-Id                           TAG-Id,
    dummy                            ENUMERATED {enabled}
OPTIONAL,   -- Need R
    pathlossReferenceLinking         ENUMERATED {spCell, sCell}
OPTIONAL,   -- Cond SCellOnly
    servingCellMO                    MeasObjectId
OPTIONAL,   -- Cond MeasObject
    ...,
    [[
    lte-CRS-ToMatchAround            SetupRelease { RateMatchPatternLTE-CRS }
OPTIONAL,   -- Need M
    rateMatchPatternToAddModList     SEQUENCE (SIZE (1..maxNrofRateMatchPatterns)) OF
RateMatchPattern       OPTIONAL,   -- Need N
```

```
     rateMatchPatternToReleaseList        SEQUENCE (SIZE (1..maxNrofRateMatchPatterns)) OF
RateMatchPatternId    OPTIONAL,    -- Need N
    downlinkChannelBW-PerSCS-List        SEQUENCE (SIZE (1..maxSCSs)) OF SCS-SpecificCarrier
OPTIONAL    -- Need S
    ]],
    [[
    supplementaryUplinkRelease          ENUMERATED {true}
OPTIONAL,    -- Need N
    tdd-UL-DL-ConfigurationDedicated-IAB-MT-r16    TDD-UL-DL-ConfigDedicated-IAB-MT-r16
OPTIONAL,    -- Cond TDD_IAB
    dormantBWP-Config-r16                SetupRelease { DormantBWP-Config-r16 }
OPTIONAL,    -- Need M
    ca-SlotOffset-r16                CHOICE {
        refSCS15kHz                  INTEGER (-2..2),
        refSCS30KHz                  INTEGER (-5..5),
        refSCS60KHz                  INTEGER (-10..10),
        refSCS120KHz                 INTEGER (-20..20)
    }
OPTIONAL,    -- Cond AsyncCA
    channelAccessConfig-r16              SetupRelease { ChannelAccessConfig-r16 }
OPTIONAL,    -- Need M
    intraCellGuardBandsDL-List-r16      SEQUENCE (SIZE (1..maxSCSs)) OF
IntraCellGuardBandsPerSCS-r16          OPTIONAL,    -- Need S
    intraCellGuardBandsUL-List-r16      SEQUENCE (SIZE (1..maxSCSs)) OF
IntraCellGuardBandsPerSCS-r16          OPTIONAL,    -- Need S
    csi-RS-ValidationWith-DCI-r16        ENUMERATED {enabled}
OPTIONAL,    -- Need R
    lte-CRS-PatternList1-r16             SetupRelease { LTE-CRS-PatternList-r16 }
OPTIONAL,    -- Need M
    lte-CRS-PatternList2-r16             SetupRelease { LTE-CRS-PatternList-r16 }
OPTIONAL,    -- Need M
    crs-RateMatch-PerCORESETPoolIndex-r16 ENUMERATED {enabled}
OPTIONAL,    -- Need R
    enableTwoDefaultTCI-States-r16      ENUMERATED {enabled}
OPTIONAL,    -- Need R
    enableDefaultTCI-StatePerCoresetPoolIndex-r16 ENUMERATED {enabled}
OPTIONAL,    -- Need R
    enableBeamSwitchTiming-r16          ENUMERATED {true}
OPTIONAL,    -- Need R
    cbg-TxDiffTBsProcessingType1-r16    ENUMERATED {enabled}
OPTIONAL,    -- Need R
    cbg-TxDiffTBsProcessingType2-r16    ENUMERATED {enabled}
OPTIONAL    -- Need R
    ]]
}
```

[Table 22]

```
          –    RateMatchPatternLTE-CRS
The IE RateMatchPatternLTE-CRS is used to configure a pattern to rate match
around LTE CRS. See TS 38.214 [19], clause 5.1.4.2.
```

**RateMatchPatternLTE-CRS information element**

```
-- ASN1START
-- TAG-RATEMATCHPATTERNLTE-CRS-START

RateMatchPatternLTE-CRS ::=          SEQUENCE {
    carrierFreqDL                    INTEGER (0..16383),
    carrierBandwidthDL                ENUMERATED {n6, n15, n25, n50, n75, n100, spare2,
spare1},
    mbsfn-SubframeConfigList          EUTRA-MBSFN-SubframeConfigList
OPTIONAL,    -- Need M
    nrofCRS-Ports                    ENUMERATED {n1, n2, n4},
    v-Shift                          ENUMERATED {n0, n1, n2, n3, n4, n5}
}

LTE-CRS-PatternList-r16 ::=          SEQUENCE {SIZE {1..maxLTE-CRS-Patterns-r16}} OF
RateMatchPatternLTE-CRS

-- TAG-RATEMATCHPATTERNLTE-CRS-STOP
-- ASN1STOP
```

| RateMatchPatternLTE-CRS field descriptions |
|---|
| **carrierBandwidthDL** |
| BW of the LTE carrier in number of PRBs (see TS 38.214 [19], clause 5.1.4.2). |
| **carrierFreqDL** |
| Center of the LTE carrier (see TS 38.214 [19], clause 5.1.4.2). |
| **mbsfn-SubframeConfigList** |
| LTE MBSFN subframe configuration (see TS 38.214 [19], clause 5.1.4.2). |
| **nrofCRS-Ports** |
| Number of LTE CRS antenna port to rate-match around (see TS 38.214 [19], clause 5.1.4.2). |
| **v-Shift** |
| Shifting value v-shift in LTE to rate match around LTE CRS (see TS 38.214 [19], clause 5.1.4.2). |

[PDSCH: related to frequency resource allocation]

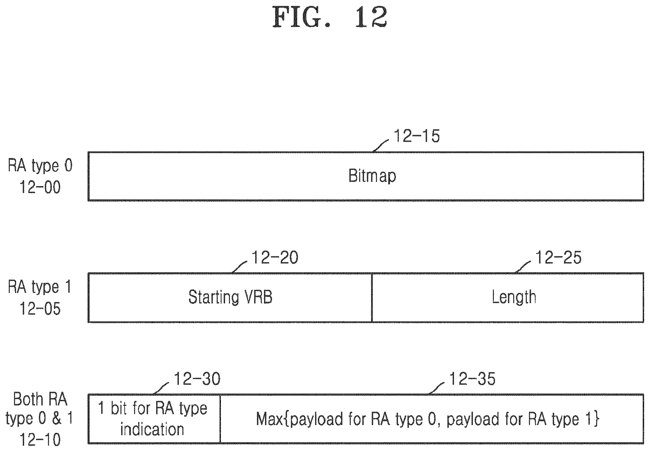

FIG. 12 illustrates an example of PDSCH frequency-axis resource allocation in a wireless communication system, according to an embodiment of the present disclosure.

FIG. 12 illustrates three frequency-axis resource allocation methods, which are type 0 12-00, type 1 12-05, and dynamic switching 12-10, which are configurable by higher layer signaling in an NR wireless communication system.

Referring to FIG. 12, when the UE is configured, by higher layer signaling, to use only resource type 0 (12-00), some DCI to allocate a PDSCH to the UE has a bitmap consisting of NRBG bits. Conditions for the above will be described at a later time. Here, the NRGB refers to the number of resource block groups (RBGs) determined as in Table 23-1 below according to a size of a BWP allocated by the BWP indicator and a higher layer parameter rbg-Size, and data is transmitted on an RBG represented by 1 based in the bitmap.

[Table 23-1]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

If the UE is configured, by higher layer signaling, to use only resource type 1 (12-05), some DCI to allocate a PDSCH to the UE includes frequency-axis resource allocation information consisting of $\left\lceil \log_2 (N_{RB}^{DL,BWP} (N_{RB}^{DL,BWP} +1)/2 \right\rceil$ bits. Conditions for the above will be described at a later time. Accordingly, the BS may configure a starting VRB 12-20 and length of frequency-axis resources 12-25 successively allocated from the starting VRB 12-20.

If the UE is configured, by higher layer signaling, to use both the resource type 0 and the resource type 1 (12-10), some DCI to allocate a PDSCH to the UE includes frequency-axis resource allocation information consisting of bits 12-35 corresponding to a larger value among a payload x12-15 for configuring the resource type 0 and a payloads 12-20 and 12-25 for configuring the resource type 1. Conditions for the above will be described at a later time. In this case, 1 bit may be added to the most significant bit (MSB) of the frequency-axis allocation information in the DCI, and when the bit has a value of '0', it indicates that the resource type 0 is to be used, and when the bit has a value of '1', it indicates that the resource type 1 is to be used.

[PDSCH/PUSCH: related to time resource allocation]

Hereinafter, a time domain resource allocation method for a data channel in the next generation mobile communication system (5G or NR system) will now be described.

The BS may configure the UE with Table of time domain resource allocation information for a DL data channel (PDSCH) and a UL data channel (PUSCH) by higher layer signaling (e.g., RRC signaling). For the PDSCH, Table including maximally up to 16 (maxNrofDL-Allocations=16) entries may be configured, and for the PUSCH, Table including maximally up to 16 (maxNrofUL-Allocations=16) entries may be configured. In an embodiment, the time domain resource allocation information may include PDCCH-to-PDSCH slot timing (corresponding to a time interval in slots between a reception time of PDCCH and a transmission time of PDSCH scheduled by the received PDCCH, and indicated as K0), PDCCH-to-PUSCH slot timing (corresponding to a time interval in slots between a reception time of PDCCH and a transmission time of PUSCH scheduled by the received PDCCH, and indicated as K2), information about location and length of a start symbol scheduled on the PDSCH or the PUSCH in the slot, a mapping type of PDSCH or PUSCH, or the like. For example, information as in Table 23-2 or Table 23-3 below may be transmitted from the BS to the UE.

[Table 23-2]

```
PDSCH-TimeDomainResourceAllocationList information element

PDSCH-TimeDomainResourceAllocationList  ::=   SEQUENCE  (SIZE(1..maxNrofDL-Allocations)) OF
PDSCH-TimeDomainResourceAllocation

PDSCH-TimeDomainResourceAllocation ::=  SEQUENCE {
     k0                                                                       INTEGER(0..32)
OPTIONAL,   -- Need S
        (PDCCH-to-PDSCH timing, slot unit)
     mappingType                           ENUMERATED (typeA, typeB),
     (PDSCH mapping type)
     startSymbolAndLength                  INTEGER (0..127)
     (start symbol and length of PDSCH)
}
```

[Table 23-3]

```
PUSCH-TimeDomainResourceAllocation information element

PUSCH-TimeDomainResourceAllocationList ::=  SEQUENCE    (SIZE(1..maxNrofUL-Allocations))    OF
PUSCH-TimeDomainResourceAllocation

PUSCH-TimeDomainResourceAllocation ::=  SEQUENCE {
     k2                            INTEGER(0..32)       OPTIONAL,    -- Need S
        (PDCCH-to-PUSCH timing, slot unit)
     mappingType                           ENUMERATED (typeA, typeB),
     (PUSCH mapping type)
     startSymbolAndLength                   INTEGER (0..127)
     (start symbol and length of PUSCH)
}
```

The BS may notify the UE of at least one of the entries in Table about the time domain resource allocation information by L1 signaling (e.g., the one entry may be indicated in a 'time domain resource allocation' field in the DCI). The UE may obtain the time domain resource allocation information for the PDSCH or the PUSCH, based on the DCI received from the BS.

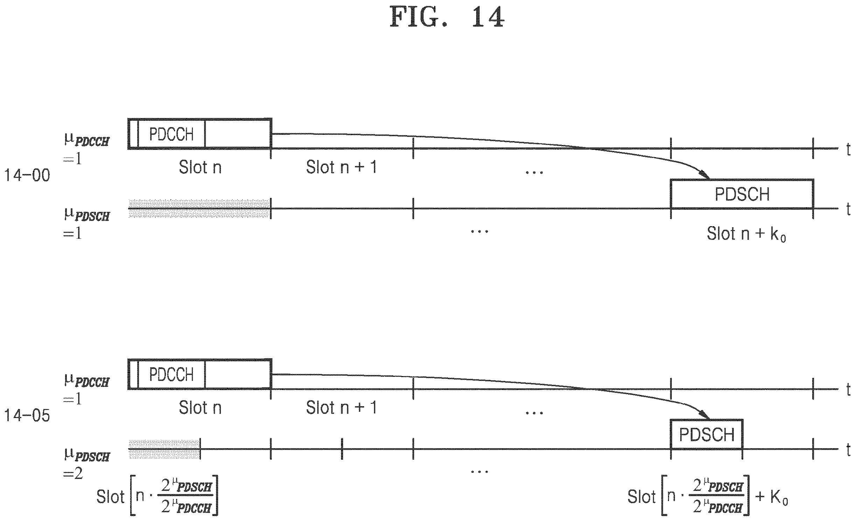

FIG. 14 is a diagram illustrating an example of PDSCH time-axis resource allocation in a wireless communication system according to an embodiment of the present disclosure.

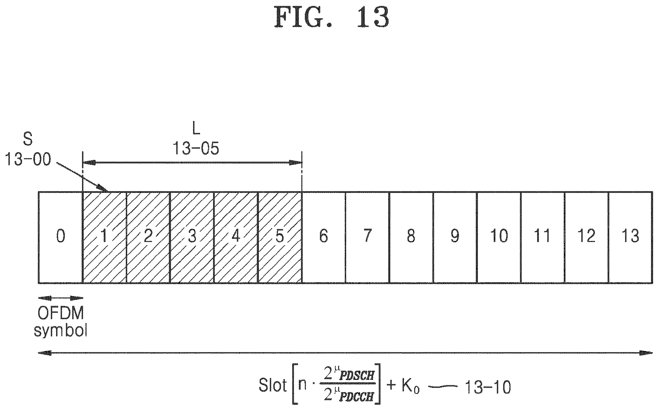

Referring to FIG. 13, the BS may indicate a location of a PDSCH resource in the time axis based on subcarrier spacings (SCSs) ($\mu_{PDSCH}$, $\mu_{PDCCH}$) of a data channel and a control channel and a scheduling offset K0, which are configured by using higher layer signaling, and a start location 13-00 and length 13-05 of OFDM symbols in a slot dynamically indicated in DCI.

FIG. 14 illustrates an example of time-axis resource allocation based on SCSs of a data channel and a control channel in a wireless communication system, according to an embodiment of the present disclosure.

Referring to FIG. 14, when SCSs of the data channel and the control channel are equal, i.e., $\mu_{PDSCH} = \mu_{PDCCH}$ (14-00), slot numbers for data and control are equal, such that the BS and the UE may generate a scheduling offset according to the preset slot offset K0. On the other hand, when SCSs of the data channel and the control channel are different, i.e., $\mu_{PDSCH} \neq \mu_{PDCCH}$ (14-05), slot numbers for data and control are different, such that the BS and the UE may generate a scheduling offset according to the preset slot offset K0 based on the SCS of the PDCCH.

[PDSCH: processing time]

Hereinafter, a PDSCH processing procedure time will now be described. When the BS schedules to transmit a PDSCH to the UE by using DCI format 1_0, 1_1 or 1_2, the UE may need a PDSCH processing time to receive the PDSCH by applying a transmission method (a modulation and coding scheme (MCS) indicator index, information associated with a demodulation reference signal, time and frequency resource allocation information, and the like) indicated by DCI. In consideration of information above, NR defines a PDSCH processing time. The PDSCH processing time of the UE may be calculated using Equation 2 below.

[Equation 2]

$$T_{proc,1} = ( N_1 + d_{1,1} + d_2 )( 2048 + 144 ) \kappa 2^{-\mu} T_c + T_{ext}$$

Variables in Tproc,1 expressed in Equation 2 may have the following meanings.
- N1: the number of symbols determined according to UE processing capability 1 or 2 and numerology $\mu$. When the UE capability 1 is reported in a UE capability report (a case of PDSCH processing capability 1), it may have a value based on Table 24, and when the UE capability 2 is reported and availability of the UE capability 2 is configured by higher layer signaling (a case of PDSCH processing capability 2), it may have a value based on Table 25. The numerology $\mu$ may correspond to a smallest value among $\mu_{PDCCH}$, $\mu_{PDSCH}$, $\mu_{UL}$ to maximize Tproc,1 above, and $\mu_{PDCCH}$, $\mu_{PDSCH}$, $\mu_{UL}$ may respectively refer to numerology of the PDCCH that schedules the PDSCH, numerology of the scheduled PDSCH, and numerology of a UL channel on which HARQ-ACK is to be transmitted.

[Table 24]

| $\mu$ | PDSCH decoding time $N_1$ [symbols] | |
|---|---|---|
| | In case, for both of PDSCH mapping type A and B, dmrs-AdditionalPosition in DMRS-DownlinkConfig is pos0 | In case, for both of PDSCH mapping type A and B, dmrs-AdditionalPosition in DMRS-DownlinkConfig is not pos0 or the higher layer parameter is not configured |
| 0 | 8 | $N_{1,0}$ |
| 1 | 10 | 13 |
| 2 | 17 | 20 |
| 3 | 20 | 24 |

[Table 25]

| $\mu$ | PDSCH decoding time $N_1$ [symbols] |
|---|---|
| | In case, for both of PDSCH mapping type A and B, dmrs-AdditionalPosition in DMRS-DownlinkConfiq is pos0 |
| 0 | 3 |
| 1 | 4.5 |
| 2 | 9 for frequency range 1 |

- $\kappa$: 64
- $T_{ext}$: when the UE uses a shared spectrum channel access scheme, the UE may calculate and apply $T_{ext}$ to the PDSCH

processing time. Otherwise, $T_{ext}$ is assumed to be 0.

- If $I_1$ indicating a PDSCH DMRS location value is 12, N1,0 of [Table 22] above may have a value of 14 and otherwise, may have a value of 13.

- With respect to PDSCH mapping type A, a last symbol of the PDSCH is i-th symbol in a slot in which the PDSCH is transmitted, and $d_{1,1}$ is 7-i when i < 7, and otherwise, $d_{1,1}$ is 0.

- $d_2$: When a PUCCH having a high priority index and a PUCCH or PUSCH having a low priority index overlap on the time domain, $d_2$ of the PUCCH having the high priority index may be configured as a value reported from the UE. Otherwise, $d_2$ is 0.

- When PDSCH mapping type B is used for UE processing capability 1, a value of $d_{1,1}$ may be determined according to L that is the number of symbols of the scheduled PDSCH and d that is the number of symbols overlapping between the PDCCH to schedule the PDSCH and the scheduled PDSCH.

-- When $L \geq 7$, $d_{1,1} = 0$.
-- When $L \geq 4$ and $L \leq 6$, $d_{1,1} = 7 - L$.
-- When $L = 3$, $d_{1,1} = \min(d, 1)$.
-- When $L = 2$, $d_{1,1} = 3 + d$.

- When PDSCH mapping type B is used for UE processing capability 2, a value of $d_{1,1}$ may be determined according to L that is the number of symbols of the scheduled PDSCH and d that is the number of symbols overlapping between the PDCCH to schedule the PDSCH and the scheduled PDSCH.

- When $L \geq 7$, $d_{1,1} = 0$.
- When $L \geq 4$ and $L \leq 6$, $d_{1,1} = 7 - L$.
- When $L = 2$,

--- if the scheduling PDCCH exists in a CORESET consisting of three symbols, and the CORESET and the scheduled PDSCH have a same start symbol, $d_{1,1} = 3$.
--- Otherwise, $d_{1,1} = d$.

- For the UE that supports capability 2 in a given serving cell, a PDSCH processing time according to the UE processing capability 2 may be applied when the UE is configured with 'enable' for processingType2Enabled that is higher layer signaling for the cell.

If a location of the first UL transmission symbol of a PUCCH including HARQ-ACK information (for the location, $K_1$ defined as a transmission point in time of the HARQ-ACK, a PUCCH resource used for HARQ-ACK transmission, and a timing advance effect may be considered) is not started earlier than the first UL transmission symbol that comes in a time of Tproc,1 after the last symbol of the PDSCH, the UE has to transmit a valid HARQ-ACK message. That is, the UE has to transmit a PUCCH including HARQ-ACK only when the PDSCH processing time is sufficient. Otherwise, the UE cannot provide valid HARQ-ACK information corresponding to the scheduled PDSCH to the BS. T-proc,1 above may be used for both normal CP and extended CP. For a PDSCH having two PDSCH transmission locations in one slot, d1,1 is calculated based on the first PDSCH transmission location in the slot.

[Related to UE capability report]

In LTE and NR, the UE may perform a procedure for reporting a capability supported by the UE to a serving BS when the UE is connected to the serving BS. In descriptions below, this procedure is referred to as a UE capability report.

The BS may transmit, to the UE in a connected state, a UE capability enquiry message requesting to report a UE capability report. The message may include a UE capability request for each radio access technology (RAT) type of the BS. The request for each RAT type may include supported frequency band combination information, or the like. Also, for the UE capability enquiry message, UE capability for each of the plurality of RAT types may be requested by an RRC message container transmitted by the BS, or the BS may transmit the UE capability enquiry message including a UE capability request for each RAT type which is repeated multiple times. That is, the UE capability enquiry is repeated multiple times in one message, and the UE may configure a corresponding UE capability information message corresponding thereto and may report it multiple times. In the next generation mobile communication system, a UE capability request for multi-RAT dual connectivity (MR-DC) as well as NR, LTE, EUTRA-NR dual connectivity (EN-DC) may be performed. Also, it is common that the UE capability enquiry message is transmitted in an initial stage after the UE is connected to the BS, but the UE capability enquiry message may be requested in any condition when the BS needs.

When the UE receives a request to report the UE capability from the BS, the UE configures a UE capability according to an RAT type and band information requested from the BS. A method by which the UE configures a UE capability in the NR system is summarized below.

1. If the UE is provided an LTE and/or NR band list in a request for UE capability from the BS, the UE may configure a band combination (BC) for EN-DC and NR stand-alone (SA). That is, the UE configures a candidate BC list for the EN-DC and NR SA, based on bands requested to the BS in FreqBandList. Also, the bands may have priorities in order of being listed in FreqBandList.

2. If the BS requests a UE capability report by setting a flag "eutra-nr-only" or "eutra", the UE completely removes information about NR SA BCs from the configured candidate BC list. This operation may occur only when an LTE BS (eNB) requests a "eutra" capability.

3. Afterward, the UE removes fallback BCs from the candidate BC list configured in operation above. Here, the fallback BC refers to a BC that is obtainable by removing a band corresponding to at least one SCell from a random BC, and may be omitted because the BC before the band corresponding to the at least one SCell being removed may already cover the fallback BC. This operation is also applied in MR-DC, i.e., even to LTE bands. BCs that remain after this operation are a final "candidate BC list".

4. The UE selects BCs to be reported, by selecting BCs being appropriate for a requested RAT type from the final "candidate BC list". In this operation, the UE configures supportedBandCombinationList in a defined order. That is, the UE configures BCs and UE capability to be reported, in order of preset RAT-types. (nr -> eutra-nr -> eutra). Also, the UE may configure featureSetCombination for the configured supportedBandCombinationList, and may configure a "candidate feature set combination" list from the candidate BC list from which a list of the fallback BCs (including equal or low-level capability) is removed. The "candidate feature set combination" includes all feature set combinations for NR and EUTRA-NR BCs, and may be obtained from feature set combinations of UE-NR-Capabilities and UE-MRDC-Capabilities containers.

5. Also, if the requested RAT type is eutra-nr and has an impact on the method by which the UE configures a UE capability, featureSetCombinations are all included in both two containers that are the UE-MRDC-Capabilities and UE-NR-Capabilities. However, a feature set of NR is included only in UE-NR-Capabilities.

After the UE capability is configured, the UE transmits, to the BS, a UE capability information message including the UE capability. The BS performs scheduling and transmission/reception management appropriate for the UE, based on the UE capability received from the UE.

[Related to SRS]

Hereinafter, a UL channel estimation method using sounding reference signal (SRS) transmission of the UE will now be described. The BS may configure the UE with at least one SRS configuration for each UL BWP so as to transmit configuration information for SRS transmission, and may configure the UE with at least one SRS resource set for each SRS configuration. For example, the BS and the UE may exchange higher layer signaling information to deliver information about the SRS resource set.

- srs-ResourceSetId: SRS resource set index
- srs-ResourceIdList: a set of SRS resource indexes referred to from the SRS resource set
- resourceType: time-axis transmission configuration of an SRS resource referred to from the SRS resource set, which may be configured to be one of 'periodic', 'semi-persistent', and 'aperiodic'. If resourceType is configured to 'periodic' or 'semi-persistent', associated CSI-RS information may be provided according to the usage of the SRS resource set. If resourceType is configured to 'aperiodic', an aperiodic SRS resource trigger list and slot offset information may be provided, and associated CSI-RS information may be provided according to the usage of the SRS resource set.
- usage: configuration of the usage of an SRS resource referred to from the SRS resource set, which may be configured to be one of 'beamManagement', 'codebook', 'nonCodebook', and 'antennaSwitching'.
- alpha, p0, pathlossReferenceRS, srs-PowerControlAdjustmentStates: provides parameter configuration for transmission power control for an SRS resource referred to from the SRS resource set.

The UE may determine that an SRS resource included in a set of SRS resource indexes referred to from the SRS resource set follows information configured for the SRS resource set.

Also, the BS and the UE may transmit or receive higher layer signaling information to deliver individual configuration information for an SRS resource. For example, the individual configuration information for the SRS resource may include time-frequency axis mapping information in a slot of the SRS resource, and the time-frequency axis mapping information may include information about intra-slot or inter-slot frequency hopping of the SRS resource. Furthermore, the individual configuration information for the SRS resource may include time-axis transmission configuration for the SRS resource, which may be configured to be one of 'periodic', 'semi-persistent', and 'aperiodic'. This may be limited to having the same time-axis transmission configuration as the SRS resource set including the SRS resource. When the time-axis transmission configuration for the SRS resource is configured to 'periodic' or 'semi-persistent', additional SRS resource transmission periodicity and slot offset (e.g., periodicityAndOffset) may be included in the time-axis transmission configuration.

The BS may activate or deactivate, or trigger SRS transmission to the UE by higher layer signaling including RRC signaling or MAC CE signaling, or L1 signaling (e.g., DCI). For example, the BS may activate or deactivate periodic SRS transmission to the UE by higher layer signaling. The BS may indicate activation of an SRS resource set for which resourceType is configured to 'periodic' by higher layer signaling, and the UE may transmit an SRS resource referred to from the activated SRS resource set. Time-frequency axis resource mapping of the SRS resource to be transmitted in a slot follows resource mapping information configured for the SRS resource, and slot mapping including transmission periodicity and slot offset follows periodicityAndOffset configured for the SRS resource. Furthermore, a spatial domain transmission filter applied to the SRS resource to be transmitted may refer to spatial relation info configured for the SRS resource, or may refer to associated CSI-RS information configured for the SRS resource set including the SRS resource. The UE may transmit the SRS resource in a UL BWP activated for the periodic SRS resource activated by higher layer signaling.

For example, the BS may activate or deactivate semi-persistent SRS transmission to the UE by higher layer signaling. The BS may indicate activation of an SRS resource set by MAC CE signaling, and the UE may transmit an SRS resource referred to from the activated SRS resource set. The SRS resource set activated by MAC CE signaling may be limited to an SRS resource set for which the resource Type is configured to 'semi-persistent'. Intra-slot time-frequency axis resource mapping of the SRS resource to be transmitted follows resource mapping information configured for the SRS resource, and slot mapping including transmission periodicity and slot offset follows periodicityAndOffset configured for the SRS resource. Also, a spatial domain transmission filter applied to the SRS resource to be transmitted may refer to spatial relation info configured for the SRS resource or may refer to associated CSI-RS information configured for the SRS resource set including the SRS resource. If spatial relation info is configured for the SRS resource, the spatial domain transmission filter may not follow the spatial relation info but may be determined by referring to configuration information about spatial relation info delivered by MAC CE signaling that activates semi-persistent SRS transmission. The UE may transmit the SRS resource in a UL BWP activated for the semi-persistent SRS resource activated by higher layer signaling.

For example, the BS may trigger aperiodic SRS transmission to the UE by DCI. The BS may indicate one of aperiodic SRS resource triggers (aperiodicSRS-ResourceTrigger) via an SRS request field of the DCI. The UE may determine that an SRS resource set including the aperiodic SRS resource trigger indicated by the DCI in an aperiodic SRS resource trigger list among configuration information of the SRS resource set has been triggered. The UE may transmit an SRS resource referred to from the triggered SRS resource set. Intra-slot time-frequency axis resource mapping of the SRS resource to be transmitted follows resource mapping information configured for the SRS resource. Also, slot mapping of the SRS resource to be transmitted may be determined by a slot offset between a PDCCH including the DCI and the SRS resource, and may be referred to a value (or values) included in a slot offset set configured for the SRS resource set. In more detail, for the slot offset between the PDCCH including the DCI and the SRS resource, a value indicated by a time domain resource assignment field of the DCI among offset value(s) included in the slot offset set configured for the SRS resource set may be applied. Furthermore, a spatial domain transmission filter applied to the SRS resource to be transmitted may refer to spatial relation info configured for the SRS resource or may refer to associated CSI-RS information configured for the SRS resource set including the SRS resource. The UE may transmit the SRS resource in a UL BWP activated for the aperiodic SRS resource triggered by the DCI.

When the BS triggers aperiodic SRS transmission to the UE by DCI, a minimum time interval between a PDCCH including the DCI that triggers the aperiodic SRS transmission and an SRS to be transmitted may be required for the UE to transmit the SRS by applying configuration information for the SRS resource. The time interval for SRS transmission by the UE may be defined as the number of symbols between a last symbol of the PDCCH including the DCI that triggers the aperiodic SRS transmission and a first symbol to which a SRS resource to be initially transmitted among SRS resource(s) is mapped. The minimum time interval may be determined by referring to a PUSCH preparation procedure time required for the UE to prepare PUSCH transmission. Also, the minimum time interval may have a different value according to the usage of the SRS resource set including the SRS resource to be transmitted. For example, the minimum time interval may be determined to be N2 symbols defined by referring to a PUSCH preparation procedure time of the UE and considering a UE processing capability based on the UE capability. Also, when the usage of the SRS resource set is configured to 'codebook' or 'antennaSwitching' by considering the usage of the SRS resource set including the SRS resource to be transmitted, the minimum time interval may be determined to be N2 symbols, and when the usage of the SRS resource set is configured to 'nonCodebook' or 'beamManagement', the minimum time interval may be determined to be N2+14 symbols. When the time interval for aperiodic SRS transmission is equal to or greater than the minimum time interval, the UE may transmit an aperiodic SRS, and when the time interval for aperiodic SRS transmission is smaller than the minimum time interval, the UE may ignore the DCI that triggers the aperiodic SRS.

[Table 26-1]

```
SRS-Resource ::=                      SEQUENCE {
    srs-ResourceId                    SRS-ResourceId.
    nrofSRS-Ports                     ENUMERATED {port1, ports2, ports4},
    ptrs-PortIndex                    ENUMERATED {n0, n1 }
OPTIONAL,     -- Need R
    transmissionComb                  CHOICE {
        n2                                SEQUENCE {
            combOffset-n2                     INTEGER (0..1),
            cyclicShift-n2                    INTEGER (0..7)
        },
        n4                                SEQUENCE {
            combOffset-n4                     INTEGER (0..3),
            cyclicShift-n4                    INTEGER (0..11)
        }
    },
    resourceMapping                   SEQUENCE {
        startPosition                     INTEGER (0..5),
        nrofSymbols                       ENUMERATED {n1, n2, n4},
        repetitionFactor                  ENUMERATED {n1, n2, n4}
    },
    freqDomainPosition                INTEGER (0..67),
    freqDomainShift                   INTEGER (0..268),
    freqHopping                       SEQUENCE {
        c-SRS                             INTEGER (0..63),
        b-SRS                             INTEGER (0..3),
        b-hop                             INTEGER (0..3)
    },
    groupOrSequenceHopping            ENUMERATED { neither, groupHopping,
sequenceHopping },
    resourceType                      CHOICE {
        aperiodic                         SEQUENCE {
            ...
        },
        semi-persistent                   SEQUENCE {
            periodicityAndOffset-sp               SRS-PeriodicityAndOffset,
            ...
        },
        periodic                          SEQUENCE {
            periodicityAndOffset-p                SRS-PeriodicityAndOffset,
            ...
        }
    },
    sequenceId                        INTEGER (0..1023),
    spatialRelationInfo               SRS-SpatialRelationInfo
OPTIONAL,     -- Need R
    ...
}
```

Configuration information of spatialRelationInfo in [Table 26-1] above is to refer to one reference signal and apply beam information of the reference signal to a beam to be used for the SRS transmission. For example, the configuration of spatialRelationInfo may include information as in [Table 26-2] below.

[Table 26-2]

```
SRS-SpatialRelationInfo ::=      SEQUENCE {
    servingCellId                ServCellIndex          OPTIONAL,    --
Need S
    referenceSignal              CHOICE {
        ssb-Index                    SSB-Index,
        csi-RS-Index                 NZP-CSI-RS-ResourceId,
        srs                          SEQUENCE {
            resourceId                   SRS-ResourceId,
            uplinkBWP                    BWP-Id
        }
    }
}
```

Referring to the spatialRelationInfo configuration, in order to use beam information of a particular reference signal, an SS/PBCH block index, a CSI-RS index or an SRS index may be configured as an index of a reference signal to be referred to. Higher layer signaling referenceSignal is configuration information indicating which beam information of a reference signal is to be referred to for the SRS transmission, and ssb-index refers to an index of an SS/PBCH block, csi-RS-index refers to an index of a CSI-RS, and srs refers to an index of an SRS. If a value of the higher layer signaling referenceSignal is configured to 'ssb-Index', the UE may apply a reception beam, which has been used to receive the SS/PBCH block corresponding to the ssb-index, to a transmission beam for corresponding SRS transmission. If a value of the higher layer signaling referenceSignal is configured to 'csi-RS-Index', the UE may apply a reception beam, which has been used to receive a CSI-RS corresponding to the csi-RS-index, to a transmission beam for corresponding SRS transmission. If a value of the higher layer signaling referenceSignal is configured to 'srs', the UE may apply a transmission beam, which has been used to transmit an SRS corresponding to the srs, to a transmission beam for corresponding SRS transmission.

[PUSCH: related to transmission scheme]

Hereinafter, a PUSCH transmission scheduling scheme will now be described. PUSCH transmission may be dynamically scheduled by UL grant in DCI or may be operated by configured grant Type 1 or Type 2. Dynamic scheduling indication for PUSCH transmission may be indicated by DCI format 0_0 or 0_1.

Configured grant Type 1 PUSCH transmission may be semi-statically configured not by receiving UL grant in DCI but by receiving configuredGrantConfig including rrc-ConfiguredUplinkGrant of [Table 26-3] below by higher layer signaling. Configured grant Type 2 PUSCH transmission may be semi-persistently scheduled by UL grant in DCI after receiving configuredGrantConfig that does not include rrc-ConfiguredUplinkGrant of Table 26-3 by higher layer signaling. When the PUSCH transmission is operated by configured grant, parameters to be applied to the PUSCH transmission are applied by higher layer signaling configuredGrantConfig of [Table 26-4] except for dataScramblingIdentityPUSCH, txConfig, codebookSubset, maxRank, scaling of UCI-OnPUSCH provided by higher layer signaling that is pusch-Config of [Table 26-3]. When the UE receives transform Precoder in higher layer signaling that is configuredGrantConfig of [Table 26-3], the UE applies tp-pi2BPSK in pusch-Config of [Table 26-4] to the PUSCH transmission operated by the configured grant.

[Table 26-3]

```
ConfiguredGrantConfig ::=          SEQUENCE {
    frequencyHopping                   ENUMERATED {intraSlot, interSlot}
OPTIONAL,    -- Need S,
    cg-DMRS-Configuration              DMRS-UplinkConfig,
    mcs-Table                          ENUMERATED {qam256, qam64LowSE}
OPTIONAL,    -- Need S
    mcs-TableTransformPrecoder         ENUMERATED {qam256, qam64LowSE}
OPTIONAL,    -- Need S
    uci-OnPUSCH                        SetupRelease { CG-UCI-OnPUSCH }
OPTIONAL,    -- Need M
    resourceAllocation                 ENUMERATED { resourceAllocationType0,
resourceAllocationType1, dynamicSwitch },
    rbg-Size                           ENUMERATED {config2}
OPTIONAL,    -- Need S
    powerControlLoopToUse              ENUMERATED {n0, n1},
    p0-PUSCH-Alpha                     P0-PUSCH-AlphaSetId,
    transformPrecoder                  ENUMERATED {enabled, disabled}
OPTIONAL,    -- Need S
    nrofHARQ-Processes                 INTEGER(1..16),
    repK                               ENUMERATED {n1, n2, n4, n8},
    repK-RV                            ENUMERATED {s1-0231, s2-0303, s3-0000}
OPTIONAL,    -- Need R
    periodicity                        ENUMERATED {
                                          sym2, sym7, sym1x14, sym2x14, sym4x14,
sym5x14, sym8x14, sym10x14, sym16x14, sym20x14,
                                          sym32x14, sym40x14, sym64x14, sym80x14,
sym128x14, sym160x14, sym256x14, sym320x14, sym512x14,
                                          sym640x14, sym1024x14, sym1280x14, sym2560x14,
sym5120x14,
                                          sym6, sym1x12, sym2x12, sym4x12, sym5x12,
sym8x12, sym10x12, sym16x12, sym20x12, sym32x12,
                                          sym40x12, sym64x12, sym80x12, sym128x12,
sym160x12, sym256x12, sym320x12, sym512x12, sym640x12,
                                          sym1280x12, sym2560x12
    },
    configuredGrantTimer               INTEGER (1..64)
OPTIONAL,    -- Need R
    rrc-ConfiguredUplinkGrant          SEQUENCE {
        timeDomainOffset                   INTEGER (0..5119),
        timeDomainAllocation               INTEGER (0..15),
        frequencyDomainAllocation          BIT STRING (SIZE(18)),
        antennaPort                        INTEGER (0..31),
        dmrs-SeqInitialization             INTEGER (0..1)
OPTIONAL,    -- Need R
        precodingAndNumberOfLayers         INTEGER (0..63),
        srs-ResourceIndicator              INTEGER (0..15)
OPTIONAL,    -- Need R
        mcsAndTBS                          INTEGER (0..31),
        frequencyHoppingOffset             INTEGER (1.. maxNrofPhysicalResourceBlocks-1)
OPTIONAL,    -- Need R
        pathlossReferenceIndex             INTEGER (0..maxNrofPUSCH-PathlossReferenceRSs-
1),
        ...
    }
OPTIONAL,    -- Need R
    ...
}
```

Hereinafter, a PUSCH transmission method will now be described. A DMRS antenna port for PUSCH transmission is equal to an antenna port for SRS transmission. PUSCH transmission may follow a codebook based transmission method or a noncodebook based transmission method depending on whether a value of txConfig in higher layer signaling that is pusch-Config of [Table 26-4] is 'codebook' or 'nonCodebook'.

As described above, PUSCH transmission may be dynamically scheduled by DCI format 0_0 or 0_1, or may be semi-statically configured by the configured grant. If the UE receives an indication of scheduling of PUSCH transmission by DCI format 0_0, the UE performs beam configuration for PUSCH transmission by using pucchspatialRelationInfoID corresponding to a UE-specific PUCCH resource corresponding to a smallest ID in an activated UL BWP in the serving cell, and in this regard, the PUSCH transmission is based on a single antenna port. The UE does not expect scheduling for the PUSCH transmission by DCI format 0_0 in a BWP on which a PUCCH resource including pucchspatialRelationInfo is not configured. If the UE is not configured with txConfig in the pusch-Config of [Table 26-4], the UE does not expect to be scheduled by DCI format 0_1.

[Table 26-4]

```
PUSCH-Config ::=                        SEQUENCE {
        dataScramblingIdentityPUSCH         INTEGER (0..1023)
OPTIONAL,    -- Need S
        txConfig                            ENUMERATED {codebook, nonCodebook}
OPTIONAL,    -- Need S
        dmrs-UplinkForPUSCH-MappingTypeA    SetupRelease { DMRS-UplinkConfig }
OPTIONAL,    -- Need M
        dmrs-UplinkForPUSCH-MappingTypeB    SetupRelease { DMRS-UplinkConfig }
OPTIONAL,    -- Need M

        pusch-PowerControl                  PUSCH-PowerControl
OPTIONAL,    -- Need M
        frequencyHopping                    ENUMERATED {intraSlot, interSlot}
OPTIONAL,    -- Need S
        frequencyHoppingOffsetLists         SEQUENCE (SIZE (1..4)) OF INTEGER (1..
maxNrofPhysicalResourceBlocks-1)

OPTIONAL,    -- Need M
        resourceAllocation                  ENUMERATED { resourceAllocationType0,
resourceAllocationType1, dynamicSwitch},
        pusch-TimeDomainAllocationList      SetupRelease { PUSCH-
TimeDomainResourceAllocationList }            OPTIONAL,    -- Need M
        pusch-AggregationFactor             ENUMERATED { n2, n4, n8 }
OPTIONAL,    -- Need S
        mcs-Table                           ENUMERATED {qam256, qam64LowSE}
OPTIONAL,    -- Need S
        mcs-TableTransformPrecoder          ENUMERATED {qam256, qam64LowSE}
OPTIONAL,    -- Need S
        transformPrecoder                   ENUMERATED {enabled, disabled}
OPTIONAL,    -- Need S
        codebookSubset                      ENUMERATED
{fullyAndPartialAndNonCoherent, partialAndNonCoherent,nonCoherent}

OPTIONAL, -- Cond codebookBased
        maxRank                             INTEGER (1..4)
OPTIONAL, -- Cond codebookBased
        rbg-Size                            ENUMERATED { config2}
OPTIONAL, -- Need S
        uci-OnPUSCH                         SetupRelease { UCI-OnPUSCH}
OPTIONAL, -- Need M
        tp-pi2BPSK                          ENUMERATED {enabled}
OPTIONAL, -- Need S

    ...
}
```

Hereinafter, codebook based PUSCH transmission will now be described. The codebook based PUSCH transmission may be dynamically scheduled by DCI format 0_0 or 0_1, or may be semi-statically operated by the configured grant. When the codebook based PUSCH transmission is dynamically scheduled by DCI format 0_1 or semi-statically configured by the configured grant, the UE determines a precoder for PUSCH transmission based on an SRS resource indicator (SRI), a transmission precoding matrix indicator (TPMI), and a transmission rank (the number of PUSCH transmission layers).

Here, the SRI may be given by an SRS resource indicator that is a field in DCI or may be configured by srs-ResourceIndicator that is higher layer signaling. The UE may be configured with at least one SRS resource for codebook based PUSCH transmission, and may be configured with up to two SRS resources. When the UE receives the SRI by DCI, an SRS resource indicated by the SRI refers to an SRS resource corresponding to the SRI among SRS resources transmitted before the PDCCH including the SRI. Also, the TPMI and the transmission rank may be given by precoding information and number of layers which is a field in the DCI or may be configured by precodingAndNumberOfLayers that is higher layer signaling. The TPMI is used to indicate a precoder to be applied to PUSCH transmission. If the UE is configured with one SRS resource, the TPMI is used to indicate a precoder to be applied in the configured one SRS resource. If the UE is configured with a plurality of SRS resources, the TPMI is used to indicate a precoder to be applied in the SRS resource indicated by the SRI.

The precoder to be used in PUSCH transmission is selected from a UL codebook having the same number of antenna ports as a value of nrofSRS-Ports in SRS-Config that is higher layer signaling. In the codebook based PUSCH transmission, the UE determines a codebook subset based on the TPMI and codebookSubset in pusch-Config that is higher layer signaling. The codebookSubset in the pusch-Config that is higher layer signaling may be configured as one of 'fullyAndPartialAndNonCoherent', 'partialAndNonCoherent', or 'nonCoherent', based on the UE capability reported by the UE to the BS. If the UE reports 'partialAndNonCoherent' in the UE capability, the UE does not expect that a value of codebookSubset that is higher layer signaling is configured to be 'fullyAndPartialAndNonCoherent'. Also, if the UE reports 'noncoherent' in the UE capability, the UE does not expect that a value of codebookSubset that is higher layer signaling is configured to be 'fullyAndPartialAndNonCoherent' or 'partialAndNonCoherent'. When nrofSRS-Ports in SRS-ResourceSet that is higher layer signaling indicates two SRS antenna ports, the UE does not expect that a value of codebookSubset that is higher layer signaling is configured to be 'partialAndNonCoherent'.

The UE may be configured with one SRS resource set with a value of the usage in SRS-ResourceSet that is higher layer signaling being configured to 'codebook', and one SRS resource in the SRS resource set may be indicated by the SRI. If several SRS resources are configured in the SRS resource set in which a value of the usage in SRS-ResourceSet that is higher layer signaling is configured to 'codebook', the UE expects that nrofSRS-Ports in SRS-Resource that is higher layer signaling is configured to have the same value for all SRS resources.

The UE transmits, to the BS, one or multiple SRS resources included in the SRS resource set with a value of the usage configured to 'codebook' by higher layer signaling, and the BS selects one of the SRS resources transmitted from the UE and indicates the UE to perform PUSCH transmission by using transmission beam information of the SRS resource. Here, for the codebook based PUSCH transmission, the SRI is used as information for selecting an index of the one SRS resource and is included in DCI. In addition, the BS may add, to the DCI, information indicating a TPMI and a rank to be used by the UE for PUSCH transmission. The UE performs, by using the SRS resource indicated by the SRI, PUSCH transmission by applying the precoder indicated by the rank and the TPMI indicated based on the transmission beam of the SRS resource.

Hereinafter, non-codebook based PUSCH transmission will now be described. The non-codebook based PUSCH transmission may be dynamically scheduled by DCI format 0_0 or 0_1, or semi-statically operated by the configured grant. When at least one SRS resource in an SRS resource set in which a value of the usage in SRS-ResourceSet that is higher layer signaling is configured to 'nonCodebook' is configured, the UE may be scheduled for non-codebook based PUSCH transmission by DC! format 0_1.

For the SRS resource set with a value of the usage in SRS-ResourceSet that is higher layer signaling being configured to 'nonCodebook', the UE may be configured with one associated non-zero power CSI-RS (NZP CSI-RS) resource. The UE may perform calculation on a precoder for SRS transmission by measuring the NZP CSI-RS resource associated with the SRS resource set. If a difference between a last reception symbol of an aperiodic NZP CSI-RS resource associated with the SRS resource set and a first symbol of aperiodic SRS transmission from the UE is less than 42 symbols, the UE does not expect that information about the precoder for SRS transmission is to be updated.

When a value of resourceType in SRS-ResourceSet that is higher layer signaling is configured to 'aperiodic', an associated NZP CSI-RS is indicated by the field SRS request in DCI format 0_1 or 1_1. Here, when the associated NZP CSI-RS resource is an aperiodic NZP CSI-RS resource, it indicates existence of an NZP CSI-RS associated for a case where the value of the field SRS request in DCI format 0_1 or 1_1 is not '00'. Here, the DCI shall not indicate cross carrier or cross BWP scheduling. Also, if the value of the SRS request indicates the existence of the NZP CSI-RS, the NZP CSI-RS is located in a slot in which a PDCCH including the SRS request field is transmitted. Here, TCI states configured for a scheduled subcarrier are not configured to QCL-TypeD.

If a periodic or semi-persistent SRS resource set is configured, an associated NZP CSI-RS may be indicated by associatedCSI-RS in SRS-ResourceSet that is higher layer signaling. For non-codebook based transmission, the UE does not expect both the spatialRelationInfo that is higher layer signaling for an SRS resource and associatedCSI-RS in the SRS-ResourceSet that is higher layer signaling to be configured.

When the UE is configured with a plurality of SRS resources, the UE may determine a precoder and a transmission rank to be applied to PUSCH transmission, based on the SRI indicated by the BS. Here, the SRI may be indicated by a SRS resource indicator that is a field in DCI or may be configured by srs-ResourceIndicator that is higher layer signaling. Likewise, in regard to the codebook based PUSCH transmission, when the UE is provided the SRI by DCI, an SRS resource indicated by the SRI refers to an SRS resource corresponding to the SRI among SRS resources transmitted before the PDCCH including the SRI. The UE may use one or more SRS resources in SRS transmission, and a maximum number of SRS resources available for simultaneous transmission on the same symbol in one SRS resource set and a maximum number of SRS resources are determined based on UE capability reported by the UE to the BS. In this case, the SRS resources simultaneously transmitted by the UE occupy a same RB. The UE configures one SRS port for each SRS resource. Only one SRS resource set with a value of the usage in SRS-ResourceSet that is higher layer signaling is configured to 'nonCodebook' may be configured, and maximally up to four SRS resources for non-codebook based PUSCH transmission may be configured.

The BS transmits one NZP-CSI-RS associated with the SRS resource set to the UE, and the UE calculates a precoder to be used in transmission of one or more SRS resources in the SRS resource set, based on a result of measurement performed in reception of the NZP_CSI-RS. The UE applies the calculated precoder to transmit, to the BS, one or more SRS resources in the SRS resource set with the usage configured to 'nonCodebook', and the BS selects one or more SRS resources from among the received one or more SRS resources. Here, for the non-codebook based PUSCH transmission, the SRI may indicate an index that can represent a combination of one or more SRS resources, and may be included in DCI. Here, the number of SRS resources indicated by the SRI transmitted from the BS may be the number of transmission layers of the PUSCH, and the UE transmits the PUSCH by applying, to each layer, the precoder applied to SRS resource transmission.

[PUSCH: preparation procedure time]

Hereinafter, a PUSCH preparation procedure time will now be described. When the BS schedules the UE to transmit a PUSCH by using DCI format 0_0, 0_1 or 0-2, the UE may need a PUSCH preparation procedure time to transmit the PUSCH by applying a transmission method (an SRS resource transmission precoding method, the number of transmission layers, or a spatial domain transmission filter) indicated by DCI. In consideration of information above, NR defines a PUSCH preparation procedure time. The PUSCH preparation procedure time of the UE may be calculated using [Equation 3] below.

[Equation 3]

$$T_{proc,2} = \max\left(( N_2 + d_{2,1} + d_2)( 2048 + 144 ) \kappa 2^{-\mu} T_c + T_{ext} + T_{switch}, d_{2,2} \right)$$

Variables in Tproc,2 expressed in Equation 3 may have the following meanings.

- $N_2$: the number of symbols determined according to UE processing capability 1 or 2 according to capability of the UE and numerology $\mu$. When the UE capability 1 is reported in a UE capability report, it may have a value based on [Table 27], and when the UE capability 2 is reported in the UE capability report and when it is configured, by higher layer signaling, that the UE capability 2 is available, it may have a value based on [Table 28].

[Table 27]

| $\mu$ | PUSCH preparation time $N_2$ [symbols] |
|---|---|
| 0 | 10 |
| 1 | 12 |
| 2 | 23 |
| 3 | 36 |

[Table 28]

| $\mu$ | PUSCH preparation time $N_2$ [symbols] |
|---|---|
| 0 | 5 |
| 1 | 5.5 |
| 2 | 11 for frequency range 1 |

- $d_{2,1}$: the number of symbols which is determined to be 0 when resource elements of the first OFDM symbol are all configured to consist of DMRSs, or 1 otherwise.
- k: 64
- $\mu$: This follows a value of $\mu_{DL}$ or $\mu_{UL}$ makes Tproc,2 larger. $\mu_{DL}$ refers to numerology of a DL in which a PDCCH including DCI that schedules the PUSCH is transmitted, and $\mu_{UL}$ refers to numerology of a UL in which the PUSCH is transmitted. $T_c$: $1/(\Delta f_{max} \cdot N_f)$, $\Delta f_{max}=480 \cdot 10^3 Hz$, $N_f=4096$
- $T_c$ has a value of

- $d_{2,2}$: This follows a BWP switching time when the DCI that schedules the PUSCH indicates BWP switching, or has 0 otherwise.

- $d_2$: When OFDM symbols of a PUCCH, a PUSCH having a high priority index and a PUCCH having a low priority index overlap on the time domain, a $d_2$ value of the PUSCH having the high priority index is used. Otherwise, $d_2$ is 0.

- $T_{ext}$: When the UE uses a shared spectrum channel access scheme, the UE may calculate and apply $T_{ext}$ to the PUSCH preparation procedure time. Otherwise, $T_{ext}$ is assumed to be 0.

- $T_{switch}$: When a UL switching interval is triggered, $T_{switch}$ is assumed as a switching interval time. Otherwise, it is assumed to be 0.

In consideration of time-axis resource mapping information of the PUSCH scheduled by the DCI and an impact of timing advance between the UL and the DL, the BS and the UE determine that the PUSCH preparation procedure time is not sufficient when a first symbol of the PUSCH starts before a first UL symbol on which CP starts after Tproc,2 from a last symbol of the PDCCH including the DCI that schedules the PUSCH. Otherwise, the BS and the UE determine that the PUSCH preparation procedure time is sufficient. Only when the PUSCH preparation procedure time is sufficient, the UE may transmit the PUSCH, and when the PUSCH preparation procedure time is not sufficient, the UE may ignore the DCI that schedules the PUSCH.

[PUSCH: related to repetitive transmission]

Hereinafter, UL data channel repetitive transmissions in the 5G system will now be described in detail. The 5G system may support two types of UL data channel repetitive transmission methods, i.e., PUSCH repetitive transmission type A and PUSCH repetitive transmission type B. The UE may be configured with one of the PUSCH repetitive transmission types A or B by higher layer signaling.

PUSCH repetitive transmission type A

- As described above, symbol length and a start symbol position of a UL data channel may be determined in a time domain resource allocation method in one slot, and the BS may notify the UE of the number of repetitive transmissions by higher layer signaling (e.g., RRC signaling) or L1 signaling (e.g., DCI).

- The UE may repetitively transmit a UL data channel having a same length and start symbol as those of the UL data channel in consecutive slots, based on the number of repetitive transmissions received from the BS. In this case, when a slot configured by the BS for the UE in a DL or at least one of symbols of a UL data channel configured for the UE is configured for DL, the UE skips UL data channel transmission but counts the number of repetitive transmissions of the UL data channel.

PUSCH repetitive transmission type B

- As described above, a start symbol and length of a UL data channel may be determined in a time domain resource allocation method in one slot, and the BS may notify the UE of numberofrepetitions that is the number of repetitive transmissions by higher layer signaling (e.g., RRC signaling) or L1 signaling (e.g., DCI).

- Based on the start symbol and length of the UL data channel which are previously configured, nominal repetition of

$$K_s + \left\lfloor \frac{S + n \cdot L}{N_{symb}^{slot}} \right\rfloor$$

the UL data channel is determined as below. A slot in which n-th nominal repetition starts is given by

and a symbol starting in the slot is given by $\mathrm{mod}\left(S + n \cdot L, N_{symb}^{slot}\right)$ . A slot in which the n-th nominal repetition

$$K_s + \left\lfloor \frac{S + (n+1) \cdot L - 1}{N_{symb}^{slot}} \right\rfloor$$

ends is given by , and a symbol that ends in the slot is given by

$$\mathrm{mod}\left(S + (n+1) \cdot L - 1, N_{symb}^{slot}\right)$$

. Here, n=0,..., numberofrepetitions-1, S indicates a start symbol of the configured UL data channel, and L indicates symbol length of the configured UL data channel. $K_s$ indicates a slot

$$N_{symb}^{slot}$$

in which the PUSCH transmission starts, and      indicates the number of symbols per slot.

- The UE determines an invalid symbol for the PUSCH repetitive transmission type B. A symbol configured for DL by tdd-UL-DL-ConfigurationCommon or tdd-UL-DL-Configuration Dedicated is determined as an invalid symbol for the PUSCH repetitive transmission type B. In addition, the invalid symbol may be configured by a higher layer parameter (e.g., InvalidSymbolPattern). The higher layer parameter (e.g., InvalidSymbolPattern) may provide a symbol-level bitmap spanning one slot or two slots such that the invalid symbol may be configured. In the bitmap, 1 represents the invalid symbol. In addition, periodicity and a pattern of the bitmap may be configured by a higher layer parameter (e.g., periodicityAndPattern). If the higher layer parameter (e.g., InvalidSymbolPattern) is configured and parameter InvalidSymbolPatternIndicator-ForDCIFormat0_1 or InvalidSymbolPatternIndicator-ForOCIFormatO_2 indicates 1, the UE applies an invalid symbol pattern, and when the parameter indicates 0, the UE does not apply the invalid symbol pattern. If the higher layer parameter (e.g., InvalidSymbolPattern) is configured and the parameter InvalidSymbolPatternIndicator-ForDCIFormat0_1 or InvalidSymbolPatternIndicator-ForDCIFormat0_2 is not configured, the UE applies the invalid symbol pattern.

After the invalid symbol is determined, the UE may consider symbols other than the invalid symbol as valid symbols for each nominal repetition. When one or more valid symbols are included in each nominal repetition, the nominal repetition may include one or more actual repetitions. Here, each of the actual repetitions includes a set of consecutive valid symbols available for the PUSCH repetitive transmission type B in one slot.

Also, for PUSCH repetitive transmission, the NR release 16 may define additional methods below for UL-grant based PUSCH transmission and configuredgrant based PUSCH transmission that are over a slot boundary.

- Method 1 (mini-slot level repetition): two or more PUSCH repetitive transmissions in one slot or over boundaries of consecutive slots are scheduled by one UL grant. Also, for Method 1, time domain resource allocation information in DCI indicates a resource for the first repetitive transmission. Also, time domain resource information of the remaining repetitive transmissions may be determined according to the time domain resource information of the first repetitive transmission and the UL or DL direction determined for each symbol of each slot. Each repetitive transmission occupies consecutive symbols.
- Method 2 (multi-segment transmission): two or more PUSCH repetitive transmissions in consecutive slots are scheduled by one UL grant. Here, one transmission is designated for each slot, and each transmission may have a different start point or repetition length. Also, in Method 2, time domain resource allocation information in DCI indicates start points and repetition lengths of all the repetitive transmissions. Also, in a case where repetitive transmissions are performed in one slot according to Method 2, when there are several groups of consecutive UL symbols in the slot, each repetitive transmission is performed per each of the UL symbol groups. If there is only one group of consecutive UL symbols in the slot, one PUSCH repetitive transmission is performed according to the method of NR release 15.
- Method 3: two or more PUSCH repetitive transmissions in consecutive slots are scheduled by two or more UL grants. Here, one transmission is designated per each slot, and the n-th UL grant may be received before the PUSCH transmission scheduled by the (n-1)-th UL grant is completed.
- Method 4: By one UL grant or one configured grant, one or more PUSCH repetitive transmissions in one slot, or two or more PUSCH repetitive transmissions over boundaries of consecutive slots may be supported. The number of repetitions indicated by the BS to the UE is a nominal value, and an actual number of PUSCH repetitions performed by the UE may be greater than the nominal number of repetitions. Time domain resource allocation information in DCI or configured grant refers to a resource of a first repetitive transmission indicated by the BS. Time domain resource information of the rest of repetitive transmissions may be determined by referring to at least the resource information of the first repetitive transmission and UL or DL direction of symbols. If the time domain resource information of the repetitive transmission indicated by the BS span boundaries of slots or includes a UL/DL transition point, the repetitive transmission may be divided into a plurality of repetitive transmissions. Here, one repetitive transmission may be included in each UL period in one slot.

[PUSCH: multiplexing rule in AP/SP CSI reporting]

Hereinafter, a method of measuring and reporting a channel state in the 5G communication system will now be described in detail. Channel state information (CSI) may include channel quality information (CQI), a precoding matric indicator (PMI), a CSI-RS resource indicator (CRI), a SS/PBCH block resource indicator (SSBRI), a layer indicator (LI), a rank indicator (RI), and/or L1-reference signal received power (L1-RSRP). The BS may control time and frequency resource for the CSI measurement and reporting by the UE.

For the CSI measurement and reporting, the UE may be configured, by higher layer signaling, setting information for N(≥1) CSI reports (CSI-ReportConfig), setting information for M(≥1) RS transport resources (CSI-ResourceConfig), one or two trigger state (CSI-AperiodicTriggerStateList, CSI-SemiPersistentOnPUSCH-TriggerStateList) list information. The configuration information for the CSI measurement and reporting may be as shown in [Table 29] to [Table 35] below.

## [Table 29] CSI-ReportConfig

The IE CSI-ReportConfig is used to configure a periodic or semi-persistent report sent on PUCCH on the cell in which the CSI-ReportConfig is included, or to configure a semi-persistent or aperiodic report sent on PUSCH triggered by DCI received on the cell in which the CSI-ReportConfig is included (in this case, the cell on which the report is sent is determined by the received DCI). See TS 38.214 [19], clause 5.2.1.

*CSI-ReportConfig* information element

```
-- ASN1START
-- TAG-CSI-REPORTCONFIG-START

CSI-ReportConfig ::=           SEQUENCE {
    reportConfigId                 CSI-ReportConfigId,
    carrier                        ServCellIndex           OPTIONAL,   -- Need S
    resourcesForChannelMeasurement    CSI-ResourceConfigId,
    csi-IM-ResourcesForInterference    CSI-ResourceConfigId        OPTIONAL,   -- Need R
    nzp-CSI-RS-ResourcesForInterference    CSI-ResourceConfigId        OPTIONAL,   -- Need R
    reportConfigType               CHOICE {
        periodic                       SEQUENCE {
            reportSlotConfig               CSI-ReportPeriodicityAndOffset,
            pucch-CSI-ResourceList             SEQUENCE (SIZE (1..maxNrofBWPs)) OF PUCCH-CSI-
Resource
        },
        semiPersistentOnPUCCH          SEQUENCE {
            reportSlotConfig               CSI-ReportPeriodicityAndOffset,
            pucch-CSI-ResourceList             SEQUENCE (SIZE (1..maxNrofBWPs)) OF PUCCH-CSI-
Resource
        },
        semiPersistentOnPUSCH          SEQUENCE {
            reportSlotConfig               ENUMERATED {sl5, sl10, sl20, sl40, sl80, sl160,
sl320},
            reportSlotOffsetList           SEQUENCE (SIZE (1.. maxNrofUL-Allocations)) OF
INTEGER(0..32),
            p0alpha                        P0-PUSCH-AlphaSetId
        },
        aperiodic                      SEQUENCE {
            reportSlotOffsetList           SEQUENCE (SIZE (1..maxNrofUL-Allocations)) OF
INTEGER(0..32)
        }
    },
    reportQuantity                 CHOICE {
        none                           NULL,
        cri-RI-PMI-CQI                 NULL,
        cri-RI-i1                      NULL,
        cri-RI-i1-CQI                  SEQUENCE {
            pdsch-BundleSizeForCSI             ENUMERATED {n2, n4}
OPTIONAL    -- Need S
        },
        cri-RI-CQI                     NULL,
        cri-RSRP                       NULL,
        ssb-Index-RSRP                 NULL,
        cri-RI-LI-PMI-CQI              NULL
    },
    reportFreqConfiguration        SEQUENCE {
        cqi-FormatIndicator                ENUMERATED { widebandCQI, subbandCQI }
OPTIONAL,   -- Need R
        pmi-FormatIndicator                ENUMERATED { widebandPMI, subbandPMI }
OPTIONAL,   -- Need R
        csi-ReportingBand              CHOICE {
            subbands3                      BIT STRING(SIZE(3)),
            subbands4                      BIT STRING(SIZE(4)),
            subbands5                      BIT STRING(SIZE(5)),
            subbands6                      BIT STRING(SIZE(6)),
```

```
          subbands7                              BIT STRING(SIZE(7)),
          subbands8                              BIT STRING(SIZE(8)),
          subbands9                              BIT STRING(SIZE(9)),
          subbands10                             BIT STRING(SIZE(10)),
          subbands11                             BIT STRING(SIZE(11)),
          subbands12                             BIT STRING(SIZE(12)),
          subbands13                             BIT STRING(SIZE(13)),
          subbands14                             BIT STRING(SIZE(14)),
          subbands15                             BIT STRING(SIZE(15)),
          subbands16                             BIT STRING(SIZE(16)),
          subbands17                             BIT STRING(SIZE(17)),
          subbands18                             BIT STRING(SIZE(18)),
          ....,
          subbands19-v1530                       BIT STRING(SIZE(19))
      }   OPTIONAL     -- Need S

      }
  OPTIONAL,   -- Need R
      timeRestrictionForChannelMeasurements        ENUMERATED {configured, notConfigured},
      timeRestrictionForInterferenceMeasurements   ENUMERATED {configured, notConfigured},
      codebookConfig                               CodebookConfig
  OPTIONAL,   -- Need R
      dummy                                        ENUMERATED {n1, n2}
  OPTIONAL,   -- Need R
      groupBasedBeamReporting                      CHOICE {
          enabled                                  NULL,
          disabled                                 SEQUENCE {
              nrofReportedRS                       ENUMERATED {n1, n2, n3, n4}
  OPTIONAL    -- Need S
          }
      },
      cqi-Table                  ENUMERATED {table1, table2, table3, spare1}
  OPTIONAL,   -- Need R
      subbandSize                ENUMERATED {value1, value2},
      non-PMI-PortIndication     SEQUENCE (SIZE (1..maxNrofNZP-CSI-RS-ResourcesPerConfig)) OF
  PortIndexFor8Ranks OPTIONAL,   -- Need R
      ....,
      [[
      semiPersistentOnPUSCH-v1530          SEQUENCE {
          reportSlotConfig-v1530           ENUMERATED {sl4, sl8, sl16}
      }
  OPTIONAL    -- Need R
      ]],
      [[
      semiPersistentOnPUSCH-v1610          SEQUENCE {
          reportSlotOffsetListDCI-0-2-r16    SEQUENCE (SIZE (1.. maxNrofUL-Allocations-r16)) OF
  INTEGER(0..32)  OPTIONAL,    -- Need R
          reportSlotOffsetListDCI-0-1-r16    SEQUENCE (SIZE (1.. maxNrofUL-Allocations-r16)) OF
  INTEGER(0..32)  OPTIONAL     -- Need R
      }
  OPTIONAL,    -- Need R
      aperiodic-v1610                      SEQUENCE {
          reportSlotOffsetListDCI-0-2-r16    SEQUENCE (SIZE (1.. maxNrofUL-Allocations-r16)) OF
  INTEGER(0..32)  OPTIONAL,    -- Need R
          reportSlotOffsetListDCI-0-1-r16    SEQUENCE (SIZE (1.. maxNrofUL-Allocations-r16)) OF
  INTEGER(0..32)  OPTIONAL     -- Need R
      }
  OPTIONAL,    -- Need R
      reportQuantity-r16                   CHOICE {
          cri-SINR-r16                     NULL,
          ssb-Index-SINR-r16               NULL
      }
  OPTIONAL,    -- Need R
      codebookConfig-r16                   CodebookConfig-r16
  OPTIONAL     -- Need R
```

```
      ]]
    }

    CSI-ReportPeriodicityAndOffset ::=  CHOICE {
        slots4                          INTEGER(0..3),
        slots5                          INTEGER(0..4),
        slots8                          INTEGER(0..7),
        slots10                         INTEGER(0..9),
        slots16                         INTEGER(0..15),
        slots20                         INTEGER(0..19),
        slots40                         INTEGER(0..39),
        slots80                         INTEGER(0..79),
        slots160                        INTEGER(0..159),
        slots320                        INTEGER(0..319)
    }

    PUCCH-CSI-Resource ::=              SEQUENCE {
        uplinkBandwidthPartId           BWP-Id,
        pucch-Resource                  PUCCH-ResourceId
    }

    PortIndexFor8Ranks ::=              CHOICE {
        portIndex8                          SEQUENCE{
            rank1-8                             PortIndex8
        OPTIONAL,   -- Need R
            rank2-8                             SEQUENCE(SIZE(2)) OF PortIndex8
        OPTIONAL,   -- Need R
            rank3-8                             SEQUENCE(SIZE(3)) OF PortIndex8
        OPTIONAL,   -- Need R
            rank4-8                             SEQUENCE(SIZE(4)) OF PortIndex8
        OPTIONAL,   -- Need R
            rank5-8                             SEQUENCE(SIZE(5)) OF PortIndex8
        OPTIONAL,   -- Need R
            rank6-8                             SEQUENCE(SIZE(6)) OF PortIndex8
        OPTIONAL,   -- Need R
            rank7-8                             SEQUENCE(SIZE(7)) OF PortIndex8
        OPTIONAL,   -- Need R
            rank8-8                             SEQUENCE(SIZE(8)) OF PortIndex8
        OPTIONAL    -- Need R
        },
        portIndex4                          SEQUENCE{
            rank1-4                             PortIndex4
        OPTIONAL,   -- Need R
            rank2-4                             SEQUENCE(SIZE(2)) OF PortIndex4
        OPTIONAL,   -- Need R
            rank3-4                             SEQUENCE(SIZE(3)) OF PortIndex4
        OPTIONAL,   -- Need R
            rank4-4                             SEQUENCE(SIZE(4)) OF PortIndex4
        OPTIONAL    -- Need R
        },
        portIndex2                          SEQUENCE{
            rank1-2                             PortIndex2
        OPTIONAL,   -- Need R
            rank2-2                             SEQUENCE(SIZE(2)) OF PortIndex2
        OPTIONAL    -- Need R
        },
        portIndex1                          NULL
    }

    PortIndex8::=                       INTEGER (0..7)
    PortIndex4::=                       INTEGER (0..3)
    PortIndex2::=                       INTEGER (0..1)

    -- TAG-CSI-REPORTCONFIG-STOP
    -- ASN1STOP
```

| CSI-ReportConfig field descriptions |
|---|
| **carrier**<br>Indicates in which serving cell the *CSI-ResourceConfig* indicated below are to be found. If the field is absent, the resources are on the same serving cell as this report configuration. |
| **codebookConfig**<br>Codebook configuration for Type-1 or Type-2 including codebook subset restriction. Network does not configure codebookConfig and codebookConfig-r16 simultaneously to a UE. |
| **cqi-FormatIndicator**<br>Indicates whether the UE shall report a single (wideband) or multiple (subband) CQI. (see TS 38.214 [19], clause 5.2.1.4). |
| **cqi-Table**<br>Which CQI table to use for CQI calculation (see TS 38.214 [19], clause 5.2.2.1). |
| **csi-IM-ResourcesForInterference**<br>CSI-IM resources for interference measurement. *csi-ResourceConfigId* of a *CSI-ResourceConfig* included in the configuration of the serving cell indicated with the field "carrier" above. The *CSI-ResourceConfig* indicated here contains only CSI-IM resources. The *bwp-Id* in that *CSI-ResourceConfig* is the same value as the *bwp-Id* in the *CSI-ResourceConfig* indicated by *resourcesForChannelMeasurement*. |
| **csi-ReportingBand**<br>Indicates a contiguous or non-contiguous subset of subbands in the bandwidth part which CSI shall be reported for. Each bit in the bit-string represents one subband. The right-most bit in the bit string represents the lowest subband in the BWP. The choice determines the number of subbands (subbands3 for 3 subbands, subbands4 for 4 subbands, and so on) (see TS 38.214 [19], clause 5.2.1.4). This field is absent if there are less than 24 PRBs (no sub band) and present otherwise, the number of sub bands can be from 3 (24 PRBs, sub band size 8) to 18 (72 PRBs, sub band size 4). |
| **dummy**<br>This field is not used in the specification. If received it shall be ignored by the UE. |
| **groupBasedBeamReporting**<br>Turning on/off group beam based reporting (see TS 38.214 [19], clause 5.2.1.4). |
| **non-PMI-PortIndication**<br>Port indication for RI/CQI calculation. For each CSI-RS resource in the linked ResourceConfig for channel measurement, a port indication for each rank R, indicating which R ports to use. Applicable only for non-PMI feedback (see TS 38.214 [19], clause 5.2.1.4.2).<br>The first entry in *non-PMI-PortIndication* corresponds to the NZP-CSI-RS-Resource indicated by the first entry in *nzp-CSI-RS-Resources* in the *NZP-CSI-RS-ResourceSet* indicated in the first entry of *nzp-CSI-RS-ResourceSetList* of the *CSI-ResourceConfig* whose *CSI-ResourceConfigId* is indicated in a CSI-MeasId together with the above *CSI-ReportConfigId*; the second entry in *non-PMI-PortIndication* corresponds to the NZP-CSI-RS-Resource indicated by the second entry in *nzp-CSI-RS-Resources* in the *NZP-CSI-RS-ResourceSet* indicated in the first entry of *nzp-CSI-RS-ResourceSetList* of the same *CSI-ResourceConfig*, and so on until the NZP-CSI-RS-Resource indicated by the last entry in *nzp-CSI-RS-Resources* in the in the *NZP-CSI-RS-ResourceSet* indicated in the first entry of *nzp-CSI-RS-ResourceSetList* of the same *CSI-ResourceConfig*. Then the next entry corresponds to the NZP-CSI-RS-Resource indicated by the first entry in *nzp-CSI-RS-Resources* in the *NZP-CSI-RS-ResourceSet* indicated in the second entry of *nzp-CSI-RS-ResourceSetList* of the same *CSI-ResourceConfig* and so on. |
| **nrofReportedRS**<br>The number (N) of measured RS resources to be reported per report setting in a non-group-based report. $N \leq N\_max$, where $N\_max$ is either 2 or 4 depending on UE capability.<br>(see TS 38.214 [19], clause 5.2.1.4) When the field is absent the UE applies the value 1. |
| **nzp-CSI-RS-ResourcesForInterference**<br>NZP CSI RS resources for interference measurement. *csi-ResourceConfigId* of a *CSI-ResourceConfig* included in the configuration of the serving cell indicated with the field "carrier" above. The *CSI-ResourceConfig* indicated here contains only NZP-CSI-RS resources. The *bwp-Id* in that *CSI-ResourceConfig* is the same value as the *bwp-Id* in the *CSI-ResourceConfig* indicated by *resourcesForChannelMeasurement*. |
| **p0alpha**<br>Index of the p0-alpha set determining the power control for this CSI report transmission (see TS 38.214 [19], clause 6.2.1.2). |
| **pdsch-BundleSizeForCSI**<br>PRB bundling size to assume for CQI calculation when *reportQuantity* is CRI/RI/i1/CQI. If the field is absent, the UE assumes that no PRB bundling is applied (see TS 38.214 [19], clause 5.2.1.4.2). |
| **pmi-FormatIndicator**<br>Indicates whether the UE shall report a single (wideband) or multiple (subband) PMI. (see TS 38.214 [19], clause 5.2.1.4). |
| **pucch-CSI-ResourceList**<br>Indicates which PUCCH resource to use for reporting on PUCCH. |
| **reportConfigType**<br>Time domain behavior of reporting configuration. |
| **reportFreqConfiguration**<br>Reporting configuration in the frequency domain. (see TS 38.214 [19], clause 5.2.1.4). |
| **reportQuantity**<br>The CSI related quantities to report. see TS 38.214 [19], clause 5.2.1. If the field *reportQuantity-r16* is present, UE shall ignore *reportQuantity* (without suffix). |
| **reportSlotConfig**<br>Periodicity and slot offset (see TS 38.214 [19], clause 5.2.1.4). If the field *reportSlotConfig-v1530* is present, the UE shall ignore the value provided in *reportSlotConfig* (without suffix). |
| **reportSlotOffsetList, reportSlotOffsetListDCI-0-1, reportSlotOffsetListDCI-0-2**<br>Timing offset Y for semi persistent reporting using PUSCH. This field lists the allowed offset values. This list must have the same number of entries as the *pusch-TimeDomainAllocationList* in PUSCH-Config. A particular value is indicated in DCI. The network indicates in the DCI field of the UL grant, which of the configured report slot offsets the UE shall apply. The DCI value 0 corresponds to the first report slot offset in this list, the DCI value 1 corresponds to the second report slot offset in this list, and so on. The first report is transmitted in slot n+Y, second report in n+Y+P, where P is the configured periodicity. Timing offset Y for aperiodic reporting using PUSCH. This field lists the allowed offset values. This list must have the same number of entries as the *pusch-TimeDomainAllocationList* in PUSCH-Config. A particular value is indicated in DCI. The network indicates in the DCI field of the UL grant, which of the configured report slot offsets the UE shall apply. The DCI value 0 corresponds to the first report slot offset in this list, the DCI value 1 corresponds to the second report slot offset in this list, and so on (see TS 38.214 [19], clause 6.1.2.1). The field *reportSlotOffsetList* applies to DCI format 0_0, the field *reportSlotOffsetListDCI-0-1* applies to DCI format 0_1 and the field *reportSlotOffsetListDCI-0-2* applies to DCI format 0_2 (see TS 38.214 [19], clause 6.1.2.1). |
| **resourcesForChannelMeasurement**<br>Resources for channel measurement. *csi-ResourceConfigId* of a *CSI-ResourceConfig* included in the configuration of the serving cell indicated with the field "carrier" above. The *CSI-ResourceConfig* indicated here contains only NZP-CSI-RS resources and/or SSB resources. This *CSI-ReportConfig* is associated with the DL BWP indicated by *bwp-Id* in that *CSI-ResourceConfig*. |
| **subbandSize**<br>Indicates one out of two possible BWP-dependent values for the subband size as indicated in TS 38.214 [19], table 5.2.1.4-2 . If *csi-ReportingBand* is absent, the UE shall ignore this field. |
| **timeRestrictionForChannelMeasurements**<br>Time domain measurement restriction for the channel (signal) measurements (see TS 38.214 [19], clause 5.2.1.1). |
| **timeRestrictionForInterferenceMeasurements**<br>Time domain measurement restriction for interference measurements (see TS 38.214 [19], clause 5.2.1.1). |

[Table 30] CSI-ResourceConfig

The IE CSI-ResourceConfig defines a group of one or more NZP-CSI-RS-ResourceSet, CSI-IM-ResourceSet and/or CSI-SSB-ResourceSet.

**CSI-ResourceConfig information element**

```
-- ASN1START
-- TAG-CSI-RESOURCECONFIG-START

CSI-ResourceConfig ::=      SEQUENCE {
    csi-ResourceConfigId       CSI-ResourceConfigId,
    csi-RS-ResourceSetList     CHOICE {
        nzp-CSI-RS-SSB              SEQUENCE {
            nzp-CSI-RS-ResourceSetList  SEQUENCE (SIZE (1..maxNrofNZP-CSI-RS-
ResourceSetsPerConfig)) OF NZP-CSI-RS-ResourceSetId

OPTIONAL,  -- Need R
            csi-SSB-ResourceSetList    SEQUENCE (SIZE (1..maxNrofCSI-SSB-ResourceSetsPerConfig))
OF CSI-SSB-ResourceSetId OPTIONAL  -- Need R
        },
        csi-IM-ResourceSetList     SEQUENCE (SIZE (1..maxNrofCSI-IM-ResourceSetsPerConfig)) OF
CSI-IM-ResourceSetId

    },

    bwp-Id                     BWP-Id,
    resourceType               ENUMERATED ( aperiodic, semiPersistent, periodic ),
    ...
}

-- TAG-CSI-RESOURCECONFIG-STOP
-- ASN1STOP
```

| CSI-ResourceConfig field descriptions |
|---|
| **bwp-Id** |
| The DL BWP which the CSI-RS associated with this *CSI-ResourceConfig* are located in (see TS 38.214 [19], clause 5.2.1.2. |
| **csi-IM-ResourceSetList** |
| List of references to CSI-IM resources used for beam measurement and reporting in a CSI-RS resource set. Contains up to *maxNrofCSI-IM-ResourceSetsPerConfig* resource sets if *resourceType* is 'aperiodic' and 1 otherwise (see TS 38.214 [19], clause 5.2.1.2). |
| **csi-ResourceConfigId** |
| Used in *CSI-ReportConfig* to refer to an instance of *CSI-ResourceConfig*. |
| **csi-SSB-ResourceSetList** |
| List of references to SSB resources used for beam measurement and reporting in a CSI-RS resource set (see TS 38.214 [19], clause 5.2.1.2). |
| **nzp-CSI-RS-ResourceSetList** |
| List of references to NZP CSI-RS resources used for beam measurement and reporting in a CSI-RS resource set. Contains up to *maxNrofNZP-CSI-RS-ResourceSetsPerConfig* resource sets if *resourceType* is 'aperiodic' and 1 otherwise (see TS 38.214 [19], clause 5.2.1.2). |
| **resourceType** |
| Time domain behavior of resource configuration (see TS 38.214 [19], clause 5.2.1.2). It does not apply to resources provided in the *csi-SSB-ResourceSetList*. |

# [Table 31] NZP-CSI-RS-ResourceSet

The IE NZP-CSI-RS-ResourceSet is a set of Non-Zero-Power (NZP) CSI-RS resources (their IDs) and set-specific parameters.

**NZP-CSI-RS-ResourceSet information element**

```
-- ASN1START
-- TAG-NZP-CSI-RS-RESOURCESET-START
NZP-CSI-RS-ResourceSet ::=        SEQUENCE {
    nzp-CSI-ResourceSetId         NZP-CSI-RS-ResourceSetId,
    nzp-CSI-RS-Resources          SEQUENCE (SIZE (1..maxNrofNZP-CSI-RS-ResourcesPerSet)) OF NZP-CSI-RS-
ResourceId,
    repetition                    ENUMERATED { on, off }                          OPTIONAL,
    -- Need S
    aperiodicTriggeringOffset     INTEGER(0..6)                                   OPTIONAL,
    -- Need S
    trs-Info                      ENUMERATED {true}                               OPTIONAL,
    -- Need R
    ...,
    [[
    aperiodicTriggeringOffset-r16 INTEGER(0..31)                                  OPTIONAL
    -- Need S
    ]]
}

-- TAG-NZP-CSI-RS-RESOURCESET-STOP
-- ASN1STOP
```

| NZP-CSI-RS-ResourceSet field descriptions |
|---|
| **aperiodicTriggeringOffset, aperiodicTriggeringOffset-r16** |
| Offset X between the slot containing the DCI that triggers a set of aperiodic NZP CSI-RS resources and the slot in which the CSI-RS resource set is transmitted. For *aperiodicTriggeringOffset*, the value 0 corresponds to 0 slots, value 1 corresponds to 1 slot, value 2 corresponds to 2 slots, value 3 corresponds to 3 slots, value 4 corresponds to 4 slots, value 5 corresponds to 16 slots, value 6 corresponds to 24 slots. For *aperiodicTriggeringOffset-r16*, the value indicates the number of slots. The network configures only one of the fields. When neither field is included, the UE applies the value 0. |
| **nzp-CSI-RS-Resources** |
| NZP-CSI-RS-Resources associated with this NZP-CSI-RS resource set (see TS 38.214 [19], clause 5.2). For CSI, there are at most 8 NZP CSI RS resources per resource set. |
| **repetition** |
| Indicates whether repetition is on/off. If the field is set to *off* or if the field is absent, the UE may not assume that the NZP-CSI-RS resources within the resource set are transmitted with the same downlink spatial domain transmission filter (see TS 38.214 [19], clauses 5.2.2.3.1 and 5.1.6.1.2). It can only be configured for CSI-RS resource sets which are associated with *CSI-ReportConfig* with report of L1 RSRP or "no report". |
| **trs-Info** |
| Indicates that the antenna port for all NZP-CSI-RS resources in the CSI-RS resource set is same. If the field is absent or released the UE applies the value *false* (see TS 38.214 [19], clause 5.2.2.3.1). |

# [Table 32] CSI-SSB-ResourceSet

The IE CSI-SSB-ResourceSet is used to configure one SS/PBCH block resource set which refers to SS/PBCH as indicated in ServingCellConfigCommon.

**CSI-SSB-ResourceSet information element**

```
-- ASN1START
-- TAG-CSI-SSB-RESOURCESET-START

CSI-SSB-ResourceSet ::=       SEQUENCE {
    csi-SSB-ResourceSetId     CSI-SSB-ResourceSetId,
    csi-SSB-ResourceList      SEQUENCE (SIZE(1..maxNrofCSI-SSB-ResourcePerSet)) OF SSB-Index,
    ...
}

-- TAG-CSI-SSB-RESOURCESET-STOP
-- ASN1STOP
```

# [Table 33] CSI-IM-ResourceSet

The IE CSI-IM-ResourceSet is used to configure a set of one or more CSI Interference Management (IM) resources (their IDs) and set-specific parameters.

**CSI-IM-ResourceSet information element**

```
-- ASN1START
-- TAG-CSI-IM-RESOURCESET-START

CSI-IM-ResourceSet ::=      SEQUENCE {
    csi-IM-ResourceSetId    CSI-IM-ResourceSetId,
    csi-IM-Resources        SEQUENCE (SIZE(1..maxNrofCSI-IM-ResourcesPerSet)) OF CSI-IM-ResourceId,
    ...
}
-- TAG-CSI-IM-RESOURCESET-STOP
-- ASN1STOP
```

| CSI-IM-ResourceSet field descriptions |
|---|
| **csi-IM-Resources** |
| CSI-IM-Resources associated with this CSI-IM-ResourceSet (see TS 38.214 [19], clause 5.2) |

## [Table 34] CSI-AperiodicTriggerStateList

The CSI-AperiodicTriggerStateList IE is used to configure the UE with a list of aperiodic trigger states. Each codepoint of the DCI field "CSI request" is associated with one trigger state. Upon reception of the value associated with a trigger state, the UE will perform measurement of CSI-RS (reference signals) and aperiodic reporting on L1 according to all entries in the associatedReportConfigInfoList for that trigger state.

*CSI-AperiodicTriggerStateList* **information element**

```
-- ASN1START
-- TAC-CSI-APERIODICTRIGGERSTATELIST-START

CSI-AperiodicTriggerStateList ::=  SEQUENCE (SIZE (1..maxNrOfCSI-AperiodicTriggers)) OF CSI-
AperiodicTriggerState

CSI-AperiodicTriggerState ::=    SEQUENCE {
    associatedReportConfigInfoList    SEQUENCE (SIZE(1..maxNrofReportConfigPerAperiodicTrigger)) OF CSI-
AssociatedReportConfigInfo,
    ...
}

CSI-AssociatedReportConfigInfo ::=    SEQUENCE {
    reportConfigId            CSI-ReportConfigId,
    resourcesForChannel        CHOICE {
        nzp-CSI-RS            SEQUENCE {
            resourceSet            INTEGER (1..maxNrofNZP-CSI-RS-ResourceSetsPerConfig),
            qcl-info            SEQUENCE (SIZE(1..maxNrofAP-CSI-RS-ResourcesPerSet)) OF TCI-StateId
OPTIONAL -- Cond Aperiodic
        },
        csi-SSB-ResourceSet        INTEGER (1..maxNrofCSI-SSB-ResourceSetsPerConfig)
    },
    csi-IM-ResourcesForInterference    INTEGER(1..maxNrofCSI-IM-ResourceSetsPerConfig)        OPTIONAL, --
Cond CSI-IM-ForInterference
    nzp-CSI-RS-ResourcesForInterference INTEGER (1..maxNrofNZP-CSI-RS-ResourceSetsPerConfig)    OPTIONAL, --
Cond NZP-CSI-RS-ForInterference
    ...
}

-- TAG-CSI-APERIODICTRIGGERSTATELIST-STOP
-- ASN1STOP
```

| CSI-AssociatedReportConfigInfo field descriptions |
|---|
| **csi-IM-ResourcesForInterference** |
| CSI-IM-ResourceSet for interference measurement. Entry number in csi-IM-ResourceSetList in the CSI-ResourceConfig indicated by csi-IM-ResourcesForInterference in the CSI-ReportConfig indicated by reportConfigId above (1 corresponds to the first entry, 2 to the second entry, and so on). The indicated CSI-IM-ResourceSet should have exactly the same number of resources like the NZP-CSI-RS-ResourceSet indicated in nzp-CSI-RS-ResourcesforChannel. |
| **csi-SSB-ResourceSet** |
| CSI-SSB-ResourceSet for channel measurements. Entry number in csi-SSB-ResourceSetList in the CSI-ResourceConfig indicated by resourcesForChannelMeasurement in the CSI-ReportConfig indicated by reportConfigId above (1 corresponds to the first entry, 2 to the second entry, and so on). |
| **nzp-CSI-RS-ResourcesForInterference** |
| NZP-CSI-RS-ResourceSet for interference measurement. Entry number in nzp-CSI-RS-ResourceSetList in the CSI-ResourceConfig indicated by nzp-CSI-RS-ResourcesForInterference in the CSI-ReportConfig indicated by reportConfigId above (1 corresponds to the first entry, 2 to the second entry, and so on). |
| **qcl-Info** |
| List of references to TCI-States for providing the QCL source and QCL type for each NZP-CSI-RS-Resource listed in nzp-CSI-RS-Resources of the NZP-CSI-RS-ResourceSet indicated by nzp-CSI-RS-ResourcesforChannel. Each *TCI-StateId* refers to the TCI-State which has this value for *tci-StateId* and is defined in *tci-StatesToAddModList* in the *PDSCH-Config* included in the *BWP-Downlink* corresponding to the serving cell and to the DL BWP to which the *resourcesForChannelMeasurement* (in the *CSI-ReportConfig* indicated by *reportConfigId* above) belong to. First entry in qcl-info-forChannel corresponds to first entry in nzp-CSI-RS-Resources of that NZP-CSI-RS-ResourceSet, second entry in qcl-info-forChannel corresponds to second entry in nzp-CSI-RS-Resources, and so on (see TS 38.214 [19], clause 5.2.1.5.1) |
| **reportConfigId** |
| The reportConfigId of one of the CSI-ReportConfigToAddMod configured in CSI-MeasConfig |
| **resourceSet** |
| NZP-CSI-RS-ResourceSet for channel measurements. Entry number in nzp-CSI-RS-ResourceSetList in the CSI-ResourceConfig indicated by resourcesForChannelMeasurement in the CSI-ReportConfig indicated by reportConfigId above (1 corresponds to the first entry, 2 to the second entry, and so on). |

| Conditional Presence | Explanation |
|---|---|
| Aperiodic | The field is mandatory present if the *NZP-CSI-RS-Resources* in the associated *resourceSet* have the resourceType aperiodic. The field is absent otherwise. |
| CSI-IM-ForInterference | This field is optional need M if the *CSI-ReportConfig* identified by *reportConfigId* is configured with *csi-IM-ResourcesForInterference*; otherwise it is absent. |
| NZP-CSI-RS-ForInterference | This field is optional need M if the *CSI-ReportConfig* identified by *reportConfigId* is configured with *nzp-CSI-RS-ResourcesForInterference*; otherwise it is absent. |

## [Table 35] CSI-SemiPersistentOnPUSCH-TriggerStateList

The CSI-SemiPersistentOnPUSCH-TriggerStateList IE is used to configure the UE with list of trigger states for semi-persistent reporting of channel state information on L1. See also TS 38.214 [19], clause 5.2.

*CSI-SemiPersistentOnPUSCH-TriggerStateList* information element

```
-- ASN1START
-- TAG-CSI-SEMIPERSISTENTONPUSCHTRIGGERSTATELIST-START

CSI-SemiPersistentOnPUSCH-TriggerStateList ::= SEQUENCE(SIZE (1..maxNrOfSemiPersistentPUSCH-
Triggers)) OF CSI-SemiPersistentOnPUSCH-TriggerState

CSI-SemiPersistentOnPUSCH-TriggerState ::=     SEQUENCE {
    associatedReportConfigInfo              CSI-ReportConfigId,
    ...
}

-- TAG-CSI-SEMIPERSISTENTONPUSCHTRIGGERSTATELIST-STOP
-- ASN1STOP
```

Regarding the aforementioned CSI report setting (CSI-ReportConfig), each report setting (CSI-ReportConfig) may be associated with CSI resource setting associated with corresponding report setting or one DL BWP identified by a higher layer parameter bwp-id given by CSI-ResourceConfig. A time-domain reporting operation with respect to each report setting (CSI-ReportConfig) may support an aperiodic, semi-persistent, or periodic scheme, and may be configured from the BS for the UE by a reportConfigType parameter configured by a higher layer. A semi-persistent CSI reporting method supports a PUCCH-based semi-persistent (semi-PersistentOnPUCCH) reporting method or a PUSCH-based semi-persistent (semi-PersistentOnPUSCH) reporting method. According to the periodic or semi-persistent CSI reporting method, the UE may be configured, from the BS by higher layer signaling, with a PUCCH or PUSCH resource to transmit CSI. Periodicity and slot offset of the PUCCH or PUSCH resource to transmit CSI may be given by numerology of a UL BWP configured for transmission of a CSI report. According to the aperiodic CSI reporting method, the UE may receive, from the BS by L1 signaling (DCI format 0_1 described above), scheduling of a PUSCH resource to transmit CSI.

Regarding the CSI resource setting (CSI-ResourceConfig), each CSI resource setting CSI-ReportConfig may include S(≥1) CSI resource sets (given by higher layer parameter csi-RS-ResourceSetList). The CSI resource set list may be configured of a non-zero power (NZP) CSI-RS resource set and an SS/PBCH block set or may be configured of a CSI-interference measurement (CSI-IM) resource set. Each CSI resource setting may be located on a DL BWP identified by higher layer parameter bwp-id, and CSI resource setting may be associated with CSI report setting of the same DL BWP. A time-domain operation of a CSI-RS resource in the CSI resource setting may be configured to be one of 'aperiodic', 'periodic' or 'semi-persistent' by higher layer parameter resourceType. For the periodic or semi-persistent CSI resource setting, the number of CSI-RS resource sets may be limited to S=1, and configured periodicity and slot offset may be given by numerology of the DL BWP identified by bwp-id. The UE may be configured, from the BS by higher layer signaling, with one or more CSI resource settings for channel or interference measurement, and for example, the CSI resource settings may include CSI resources below.

- CSI-IM resource for interference measurement
- NZP CSI-RS resource for interference measurement
- NZP CSI-RS resource for channel measurement

For CSI-RS resource sets associated with resource setting configured to 'aperiodic', 'periodic' or 'semi-persistent' by higher layer parameter resourceType, a trigger state with respect to CSI report setting in which reportType is configured to 'aperiodic' and resource setting for channel or interference measurement of one or more component cells (CCs) may be configured by higher layer parameter CSI-AperiodicTriggerStateList.

The aperiodic CSI reporting by the UE may be performed by using a PUSCH, the periodic CSI reporting by the UE may be performed by using a PUCCH, when the semi-persistent CSI reporting is triggered or activated by DCI, the semi-persistent CSI reporting by the UE may be performed by using a PUSCH, and after the semi-persistent CSI reporting is activated by a MAC CE, the semi-persistent CSI reporting by the UE may be performed by using a PUCCH. As described above, CSI resource setting may also be configured to 'aperiodic', 'periodic' or 'semi-persistent'. Combinations of the CSI report setting and the CSI resource setting may be supported based on [Table 36] below.

[Table 36]

| Table 5.2.1.4-1: Triggering/Activation of CSI Reporting for the possible CSI-RS Configurations. | | | |
|---|---|---|---|
| **CSI-RS Configuration** | **Periodic CSI Reporting** | **Semi-Persistent CSI Reporting** | **Aperiodic CSI Reporting** |
| Periodic CSI-RS | No dynamic triggering/ activation | For reporting on PUCCH, the UE receives an activation command [10, TS 38.321]; for reporting on PUSCH, the UE receives triggering on DCI | Triggered by DCI; additionally, activation command [10. TS 38.321] possible as defined in Subclause 5.2.1.5.1. |
| Semi-Persistent CSI-RS | Not Supported | For reporting on PUCCH, the UE receives an activation command [10, TS 36,321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

The aperiodic CSI reporting may be triggered by "CSI request" field of the aforementioned DCI format 0_1 corresponding to scheduling DCI with respect to a PUSCH. The UE may monitor a PDCCH, may obtain the DCI format 0_1, and may obtain scheduling information with respect to a PUSCH and a CSI request indicator. The CSI request indicator may be configured with NTS (=0, 1, 2, 3, 4, 5, or 6) bits, and may be determined by higher layer signaling (reportTriggerSize). One trigger state from among one or more aperiodic CSI report trigger states configurable by higher layer signaling (CSI-AperiodicTriggerStateList) may be triggered by the CSI request indicator.

-   When all bits of the CSI request field are 0, this may indicate that a CSI report is not requested.

-   If the number (M) of CSI trigger states in configured CSI-AperiodicTriggerStateLite is greater than 2NTs-1, M CSI trigger states may be mapped to 2NTs-1 according to a predefined mapping relation, and one trigger state from among 2NTs-1 CSI trigger states may be indicated by the CSI request field.

-   If the number (M) of CSI trigger states in configured CSI-AperiodicTriggerStateLite is equal to or smaller than 2NTs-1, one of M CSI trigger states may be indicated by the CSI request field.

[Table 37] below shows an example of a relation between a CSI request indicator and a CSI trigger state indicative by the indicator.

[Table 37]

| CSI request field | CSI trigger state | CSI-ReportConfigId | CSI-ResourceConfigId |
|---|---|---|---|
| 00 | no CSI request | N/A | N/A |
| 01 | CSI trigger state#1 | CSI report#1 | CSI resource#1. |
| | | CSI report#2 | CSI resource#2 |
| 10 | CSI trigger state#2 | CSI report#3 | CSI resource#3 |
| 11 | CSI trigger state#3 | CSI report#4 | CSI resource#4 |

The UE may perform measurement on a CSI resource in the CSI trigger state triggered by the CSI request field, and may generate CSI (including at least one of CQI, PMI, CRI, SSBRI, LI, RI, or L1-RSRP described above) from a result of the measurement. The UE may transmit the obtained CSI by using the PUSCH scheduled by the corresponding DCI format 0_1. When one bit corresponding to a UL data indicator (UL-SCH indicator) in the DCI format 0_1 indicates "1", the UE may multiplex UL data (UL-SCH) and the obtained CSI with a PUSCH resource scheduled by the DCI format 0_1 and may transmit it. When one bit corresponding to a UL data indicator (UL-SCH indicator) in the DCI format 0_1 indicates "0", the UE may map only the CSI to a PUSCH resource scheduled by the DCI format 0_1, without UL data (UL-SCH), and may transmit it.

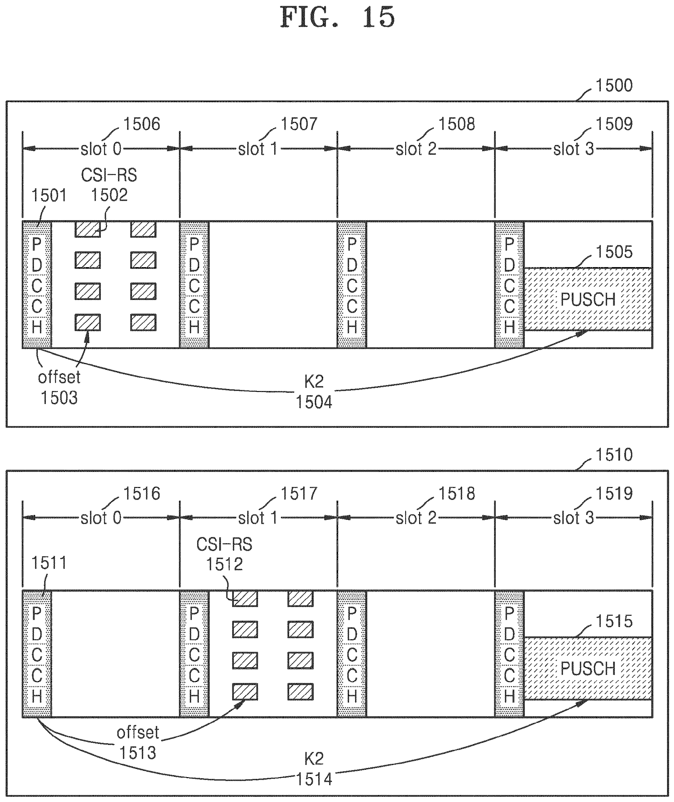

FIG. 15 illustrates examples of an aperiodic CSI reporting method.

In an example 1500 of FIG. 15, the UE may obtain DCI format 0_1 by monitoring a PDCCH 1501, and may obtain, from the DCI format 0_1, scheduling information with respect to a PUSCH 1505 and CSI request information. The UE may obtain, from the received CSI request indicator, resource information with respect to a CSI-RS 1502 to be measured. The UE may determine at what time point to measure transmitted CSI-RS 1502, based on a time point of reception of the DCI format 0_1 and a parameter (aforementioned aperiodicTriggeringOffset) with respect to offset in CSI resource set configuration (e.g., NZP CSI-RS resource set configuration (NZP-CSI-RS-ResourceSet)). In detail, the UE may be configured, from the BS by higher layer signaling, with an offset value X of parameter aperiodicTriggeringOffset in NZP-CSI-RS resource set configuration, and the configured offset value X may indicate offset between a slot in which DCI to trigger an aperiodic CSI report is received and a slot in which a CSI-RS resource is to be transmitted. For example, a value of the parameter aperiodicTriggeringOffset and the offset value X may have mapping relations described in [Table 38] below.

[Table 38]

| aperiodicTriggeringOffset | Offset X |
|---|---|
| 0 | 0 slot |
| 1 | 1 slot |
| 2 | 2 slots |
| 3 | 3 slots |
| 4 | 4 slots |
| 5 | 16 slots |
| 6 | 24 slots |

In the example 1500 of FIG. 15, the offset value is configured as X=0. In this case, the UE may receive a CSI-RS 1502 in a slot (corresponding to a slot 0 1506 of FIG. 13) in which the DCI format 0_1 triggering the aperiodic CSI report is received, and may report CSI information on a PUSCH 1505 to the BS, the CSI information being measured by using the received CSI-RS. The UE may obtain, from the DCI format 0_1, scheduling information (a plurality of pieces of information respectively corresponding to fields of the DCI format 0_1) with respect to the PUSCH 1505 for a CSI report. For example, the UE may obtain information about a slot in which the PUSCH 1505 is to be transmitted, from time-domain resource allocation information of the DCI format 0_1 with respect to the PUSCH 1505. In the example 1500 of FIG. 13, the UE may obtain 3 as K2 value corresponding to a slot offset value for PDCCH-to-PUSCH, and thus, the PUSCH 1505 may be transmitted in a slot 3 1509 that is distant, by 3 slots, from the slot 0 1506 in which the PDCCH 1501 is received.

In an example 1510 of FIG. 15, the UE may obtain DCI format 0_1 by monitoring a PDCCH 1511, and may obtain, from the DCI format 0_1, scheduling information with respect to a PUSCH 1515 and CSI information. The UE may obtain, from a received CSI request indicator, resource information with respect to a CSI-RS 1512 to be measured. In the example 1510 of FIG. 15, the aforementioned offset value for CSI-RS is configured as X=1. In this case, the UE may receive the CSI-RS 1512 in a slot (slot 0 1516 of FIG. 13) in which the DCI format 0_1 triggering an aperiodic CSI report is received, and may report, to the BS via the PUSCH 1515, CSI information measured by using a received CSI-RS.

The aperiodic CSI report may include at least one of CSI part 1 or CSI part 2 or both CSI part 1 and CSI part 2, and when the aperiodic CSI report is to be transmitted on a PUSCH, the aperiodic CSI report and a transport block may be multiplexed. For the multiplexing, a CRC may be inserted into an input bit of aperiodic CSI, and then encoding and rate matching may be performed thereon, and afterward, the input bit may be mapped with a particular pattern to a resource element in a PUSCH and transmitted. The CRC insertion may be omitted depending on a coding method or a length of input bits. The number of modulation symbols to be calculated for rate matching in multiplexing of CSI Part 1 or CSI part 2 included in the aperiodic CSI report may be calculated as in [Table 39] below.

[Table 39]

| For CSI part 1 transmission on PUSCH not using repetition type B with UL-SCH, the number of coded modulation symbols per layer for CSI part 1 transmission, denoted as $Q'_{CSI\text{-}part1}$ , is determined as follows: |
|---|

$$Q'_{\text{CSI-1}} = \min\left\{ \left\lceil \frac{(O_{\text{CSI-1}} + L_{\text{CSI-1}}) \cdot \beta_{\text{offset}}^{\text{PUSCH}} \cdot \sum_{l=0}^{N_{\text{symb,all}}^{\text{PUSCH}}-1} M_{\text{sc}}^{\text{UCI}}(l)}{\sum_{r=0}^{C_{\text{UL-SCH}}-1} K_r} \right\rceil, \left\lceil \alpha \cdot \sum_{l=0}^{N_{\text{symb,all}}^{\text{PUSCH}}-1} M_{\text{sc}}^{\text{UCI}}(l) \right\rceil - \right.$$
$$\left. Q'_{ACK/CG-UCI} \right\}$$

...

For CSI part 1 transmission on an actual repetition of a PUSCH with repetition Type B with UL-SCH, the number of coded modulation symbols per layer for CSI part 1 transmission, denoted as $Q'_{\text{CSI-part1}}$, is determined as follows:

$$Q'_{\text{CSI-1}} = \min\left\{ \left\lceil \frac{(O_{\text{CSI-1}} + L_{\text{CSI-1}}) \cdot \beta_{\text{offset}}^{\text{PUSCH}} \cdot \sum_{l=0}^{N_{\text{symb,nominal}}^{\text{PUSCH}}-1} M_{\text{sc,nominal}}^{\text{UCI}}(l)}{\sum_{r=0}^{C_{\text{UL-SCH}}-1} K_r} \right\rceil, \left\lceil \alpha \right. \right.$$
$$\left. \cdot \sum_{l=0}^{N_{\text{symb,nominal}}^{\text{PUSCH}}-1} M_{\text{sc,nominal}}^{\text{UCI}}(l) \right\rceil - Q'_{ACK/CG-UCI},$$
$$\left. \sum_{l=0}^{N_{\text{symb,actual}}^{\text{PUSCH}}-1} M_{\text{sc,actual}}^{\text{UCI}}(l) - Q'_{ACK/CG-UCI} \right\}$$

...

For CSI part 1 transmission on PUSCH without UL-SCH, the number of coded modulation symbols per layer for CSI part 1 transmission, denoted as $Q'_{\text{CSI-part1}}$, is determined as follows: if there is CSI part 2 to be transmitted on the PUSCH,

$$Q'_{\text{CSI-1}} = \min\left\{ \left\lceil \frac{(O_{\text{CSI-1}} + L_{\text{CSI-1}}) \cdot \beta_{\text{offset}}^{\text{PUSCH}}}{R \cdot Q_m} \right\rceil, \sum_{l=0}^{N_{\text{symb,all}}^{\text{PUSCH}}-1} M_{\text{sc}}^{\text{UCI}}(l) - Q'_{\text{ACK}} \right\}$$

else

$$Q'_{\text{CSI-1}} = \sum_{l=0}^{N_{\text{symb,all}}^{\text{PUSCH}}-1} M_{\text{sc}}^{\text{UCI}}(l) - Q'_{\text{ACK}}$$

end if

...

For CSI part 2 transmission on PUSCH not using repetition type B with UL-SCH, the number of coded modulation symbols per layer for CSI part 2 transmission, denoted as $Q'_{\text{CSI-part2}}$, is determined as follows:

$$Q'_{\text{CSI-2}} = \min\left\{ \left\lceil \frac{(O_{\text{CSI-2}} + L_{\text{CSI-2}}) \cdot \beta_{\text{offset}}^{\text{PUSCH}} \cdot \sum_{l=0}^{N_{\text{symb,all}}^{\text{PUSCH}}-1} M_{\text{sc}}^{\text{UCI}}(l)}{\sum_{r=0}^{C_{\text{UL-SCH}}-1} K_r} \right\rceil, \left\lceil \alpha \cdot \sum_{l=0}^{N_{\text{symb,all}}^{\text{PUSCH}}-1} M_{\text{sc}}^{\text{UCI}}(l) \right\rceil - Q'_{ACK/CG-UCI} - \right.$$
$$\left. Q'_{\text{CSI-1}} \right\}$$

For CSI part 2 transmission on an actual repetition of a PUSCH with repetition Type B with UL-SCH, the number of coded modulation symbols per layer for CSI part 2 transmission, denoted as $Q'_{\text{CSI-part2}}$, is determined as follows:

(continued)

$$Q'_{\text{CSI-2}} = \min\left\{ \left\lceil \frac{(O_{\text{CSI-2}} + L_{\text{CSI-2}}) \cdot \beta^{\text{PUSCH}}_{\text{offset}} \cdot \sum_{l=0}^{N^{\text{PUSCH}}_{\text{symb,nominal}}-1} M^{\text{UCI}}_{\text{sc,nominal}}(l)}{\sum_{r=0}^{C_{\text{UL-SCH}}-1} K_r} \right\rceil, \left\lceil \alpha \right. \right.$$

$$\cdot \sum_{l=0}^{N^{\text{PUSCH}}_{\text{symb,nominal}}-1} M^{\text{UCI}}_{\text{sc,nominal}}(l) \right\rceil - Q'_{\text{ACK/CG-UCI}} - Q'_{\text{CSI-1}},$$

$$\left. \sum_{l=0}^{N^{\text{PUSCH}}_{\text{symb,actual}}-1} M^{\text{UCI}}_{\text{sc,actual}}(l) - Q'_{\text{ACK/CG-UCI}} - Q'_{\text{CSI-1}} \right\}$$

...

For CSI part 2 transmission on PUSCH without UL-SCH, the number of coded modulation symbols per layer for CSI part 2 transmission, denoted as $Q'_{\text{CSI-part2}}$, is determined as follows:

$$Q'_{\text{CSI-2}} = \sum_{l=0}^{N^{\text{PUSCH}}_{\text{symb,all}}-1} M^{\text{UCI}}_{\text{sc}}(l) - Q'_{\text{ACK}} - Q'_{\text{CSI-1}}$$

In particular, in PUSCH repetition types A and B, the UE may multiplex and transmit the aperiodic CSI report only in first repetitive transmission from among PUSCH repetitive transmissions. The aperiodic CSI report information to be multiplexed is encoded by using a polar code scheme, and here, in order to multiplex the aperiodic CSI report information for multiple PUSCH repetitions, each of the PUSCH repetitions has to have the same frequency and time resource allocation, and in particular, in a case of the PUSCH repetition type B, each actual repetition may have a different OFDM symbol length, and thus, the aperiodic CSI report may be multiplexed and transmitted only in first PUSCH repetition.

Also, for the PUSCH repetition type B, in a case where the UE receives DCI to schedule the aperiodic CSI report or to activate a semi-persistent CSI report without scheduling of a transport block, even when the number of PUSCH repetitive transmissions configured by higher layer signaling is greater than 1, the UE may assume a value of nominal repetition as 1. Also, when the aperiodic or semi-persistent CSI report is scheduled or activated without scheduling of a transport block based on the PUSCH repetition type B, the UE may expect that first nominal repetition is the same as first actual repetition. For a PUSCH being transmitted while including semi-persistent CSI based on the PUSCH repetition type B without scheduling of DCI after the semi-persistent CSI report is activated by DCI, if first nominal repetition is different from first actual repetition, transmission with respect to the first nominal repetition may be ignored.

[Related to radio protocol]

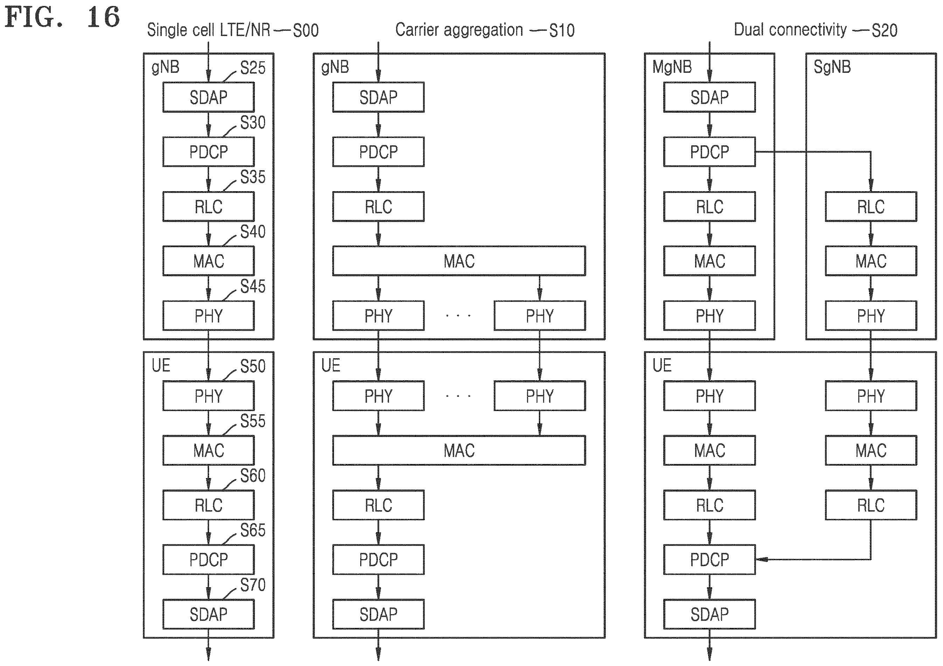

FIG. 16 illustrates radio protocol architecture of a BS and a UE in a single cell, carrier aggregation and performance of dual connectivity according to an embodiment of the present disclosure.

Referring to FIG. 16, a radio protocol of a next generation mobile communication system may include, in each of the UE and the NR BS, an NR service data adaptation protocol (NR SOAP) layer S25 or S70, an NR packet data convergence protocol (NR PDCP) layer S30 or S65, an NR radio link control (NR RLC) layer S35 or S60, and an NR medium access control (NR MAC) layer S40 or S55.

Main functions of the NR SDAP layer S25 or S70 may include some of the following functions.

- Transfer of user plane data
- Mapping between a quality of service (QoS) flow and a data radio bearer (DRB) for both DL and UL
- Marking QoS flow ID in both DL and UL packets
- Reflective QoS flow to DRB mapping for the UL SDAP protocol data units (PDUs).

With respect to the SDAP layer entity, information about whether to use a header of the SDAP layer entity or to use functions of the SDAP layer entity may be configured for the UE by using a RRC message per PDCP layer entity, per bearer, or per logical channel, and when the SDAP header is configured, the UE may direct to update or reconfigure UL and DL QoS flow and data bearer mapping information by using a 1-bit non access stratum (NAS) reflective QoS indicator and a 1-bit access stratum (AS) reflective QoS indicator of the SOAP header. The SOAP header may include QoS flow ID information indicating QoS. QoS information may be used as data processing priority information or scheduling information for seamlessly supporting a service.

Main functions of the NR PDCP layer S30 or S65 may include some of the following functions.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer service data units (SDUs)
- Retransmission of PDCP SDUs
- Ciphering and deciphering
- Timer-based SDU discard in uplink.

The reordering function of the NR PDCP entity may indicate a function of reordering PDCP PDUs received from a lower layer, on a PDCP sequence number (SN) basis, may include a function of delivering the reordered data to an upper layer in order, and may include a function of delivering the reordered data to an upper layer out of order, a function of recording missing PDCP PDUs by reordering the received PDCP PDUs, a function of reporting status information of the missing PDCP PDUs to a transmitter, and a function of requesting to retransmit the missing PDCP PDUs.

Main functions of the NR RLC layer S35 or S60 may include some of the following functions.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The in-sequence delivery function of the NR RLC entity (or layer) S35 or S60 may indicate a function of delivering RLC SDUs received from a lower layer to an upper layer in order and may include a function of reassembling the RLC SDUs and delivering the reassembled RLC SDU when a plurality of RLC SDUs segmented from one RLC SDU are received, a function of reordering received RLC PDUs on a RLC SN or PDCP SN basis, a function of recording missing RLC PDUs by reordering the received RLC PDUs, a function of reporting status information of the missing RLC PDUs to a transmitter, and a function of requesting to retransmit the missing RLC PDUs, may include a function of delivering only RLC SDUs prior to a missing RLC SDU, to an upper layer in order when the missing RLC SDU exists, or a function of delivering all RLC SDUs received before a timer starts, to an upper layer in order although a missing RLC SDU exists when a certain timer expires, or may include a function of delivering all RLC SDUs received so far, to an upper layer in order although a missing RLC SDU exists when a certain timer expires. Also, the NR RLC entity may process the RLC PDUs in order of reception and deliver the RLC PDUs to the NR PDCP entity (regardless of SNs (out-of-sequence delivery)), and when a segment is received, the NR RLC entity may reassemble the segment with other segments stored in a buffer or to be subsequently received, into a whole RLC PDU and may process and deliver the RLC PDU to the NR PDCP entity. The NR RLC layer may not have a concatenation function, and the concatenation function may be performed by the NR MAC layer or be substituted with a multiplexing function of the NR MAC layer.

The out-of-sequence delivery function of the NR RLC entity S35 or S60 may include a function of directly delivering RLC SDUs received from a lower layer to an upper layer out of order, a function of reassembling a plurality of RLC SDUs segmented from one RLC SDU and delivering the reassembled RLC SDU when the segmented RLC SDUs are received, and a function of recording missing RLC PDUs by storing RLC SNs or PDCP SNs of received RLC PDUs and reordering the received RLC PDUs.

The NR MAC layer S40 or S55 may be connected to a plurality of NR RLC layer entities configured for one UE, and main functions of the NR MAC layer S40 or S55 may include some of the following functions.

- Mapping between logical channels and transport channels
- Multiplexing/demultiplexing of MAC SDUs
- Scheduling information reporting

- Error correction through HARQ
- Priority handling between logical channels of one UE
- Priority handling between UEs by means of dynamic scheduling
- MBMS service identification
- Transport format selection
- Padding

The NR PHY layer S45 or S50 may channel-code and modulate upper layer data into OFDM symbols and may transmit the OFDM symbols through a wireless channel, or may demodulate OFDM symbols received through a wireless channel and channel-decode and may deliver the OFDM symbols to an upper layer.

The radio protocol architecture may be variously changed according to carrier (or cell) operation schemes. For example, when the BS transmits data to the UE on a single carrier (or cell), the BS and the UE use protocol architecture having a single structure for each layer, as shown in S00. On the other hand, when the BS transmits data to the UE based on a CA in which multiple carriers are used at a single transmission and reception point (TRP), the BS and the UE use protocol architecture having a single structure up to the RLC layer, in which the PHY layer is multiplexed via the MAC layer, as shown in S10. In another example, when the BS transmits data to the UE based on a dual connectivity (DC) in which multiple carriers are used at multiple TRPs, the BS and the UE use protocol architecture having a single structure up to the RLC layer, in which the PHY layer is multiplexed via the MAC layer, as shown in S20.

[SRS operating scenarios]

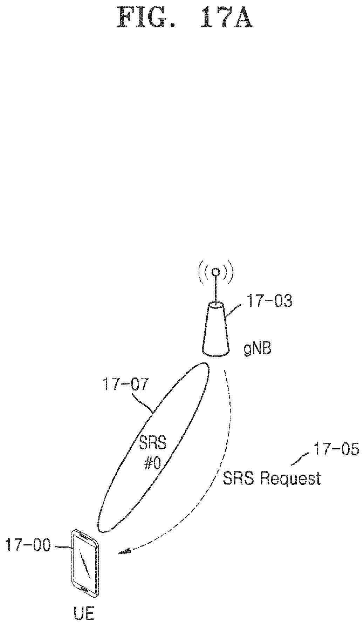

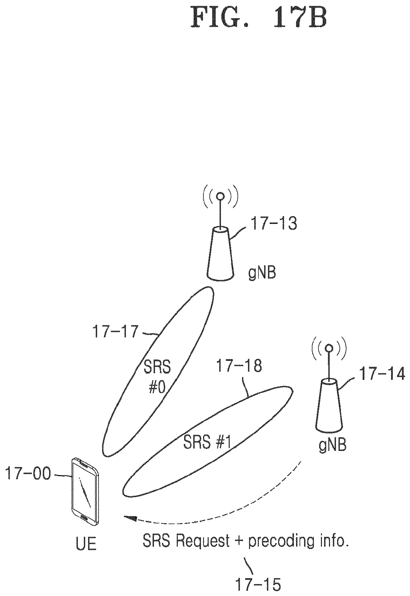

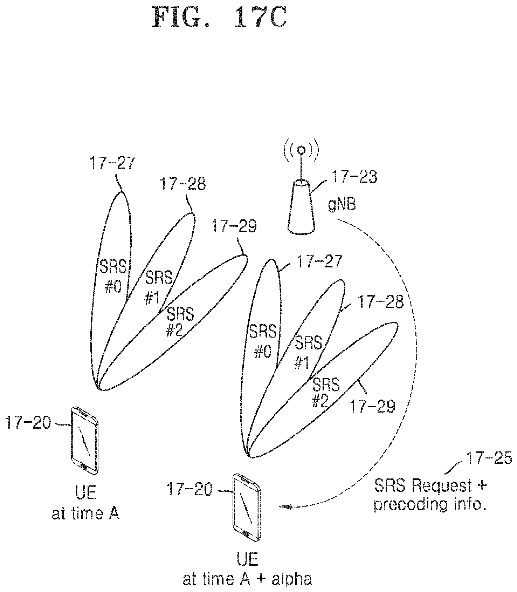

FIGS. 17A, 17B, and 17C illustrate examples of various SRS operating scenarios. Referring to FIGS. 17A, 17B, and 17C, at least three SRS operating scenarios may be considered in an NR system.

1) Referring to FIG. 17A, a gNB 17-03 may configure a UE 17-00 with a beam in one direction. In the present disclosure, configuring, by the gNB 17-03, beam/precoding in one direction may include not applying beam/precoding or applying a wide beam. When an SRS transmission type is a periodic SRS or a semi-persistent SRS, the UE 17-00 may transmit an SRS 17-07 according to SRS periodicity and slot offset, and when an SRS transmission type is an aperiodic SRS, the UE 17-00 may transmit the SRS 17-07 according to an SRS request 17-05 in DCI (within a preset time after the SRS request is detected). Here, for the SRS transmission, additional information for beam/precoding may not be required.

2) Referring to FIG. 17B, gNBs 17-13 and 17-14 may configure a UE 17-10 with beams in one or more directions, and the UE 17-10 may transmit one or more SRSs 17-17 and 17-18 that are beamformed in the one or more directions. For example, it is possible to configure that SRS resource (or port) #0 17-17 is beamformed in a direction toward the gNB 17-13 and SRS resource #1 17-18 is beamformed in a direction toward the gNB 17-14. Here, each of the SRS #0 17-17 and the SRS #1 17-18 may be configured to have an SRS resource and/or antenna port. To this end, unlike in the scenario of FIG. 17A, the gNBs 17-13 and 17-14 may indicate SRS request and SRS beam/precoding information 17-15 to the UE 17-10.

3) Referring to FIG. 17C, a gNB 17-23 may configure a UE 17-20 with beams in one or more directions, and the UE 17-20 may transmit a plurality of SRSs 17-27, 17-28, and 17-29 in the one or more directions. For example, the gNB 17-23 may configure the UE 17-20 to transmit SRSs by respectively applying different beams/precodings to SRS resource (or port) #0 17-27, SRS resource (or port) #1 17-28, and SRS resource (or port) #2 17-29. By doing so, even when mobility of the UE 17-20 is high, seamless communication may be performed via beam/precoder diversity.

For example, the UE 17-20 may provide CSI to the gNB 17-23 via the SRS #2 17-29 at a point in time A, and may provide channel information to the gNB 17-23 via the SRS #0 17-27 at a point in time A + alpha. To this end, unlike in the scenario of FIG. 17A, the gNB 17-23 may notify SRS request and SRS beam/precoding information 17-25 to the UE 17-20.

The descriptions are provided based on SRS transmission, but in a similar manner, this may be extended to other UL channel/RS transmissions such as PRACH, PUSCH, PUCCH, or the like, and in order not to obscure the gist of the present disclosure, detailed descriptions of all other cases are not provided.

[Related to TDD DL-UL configuration]

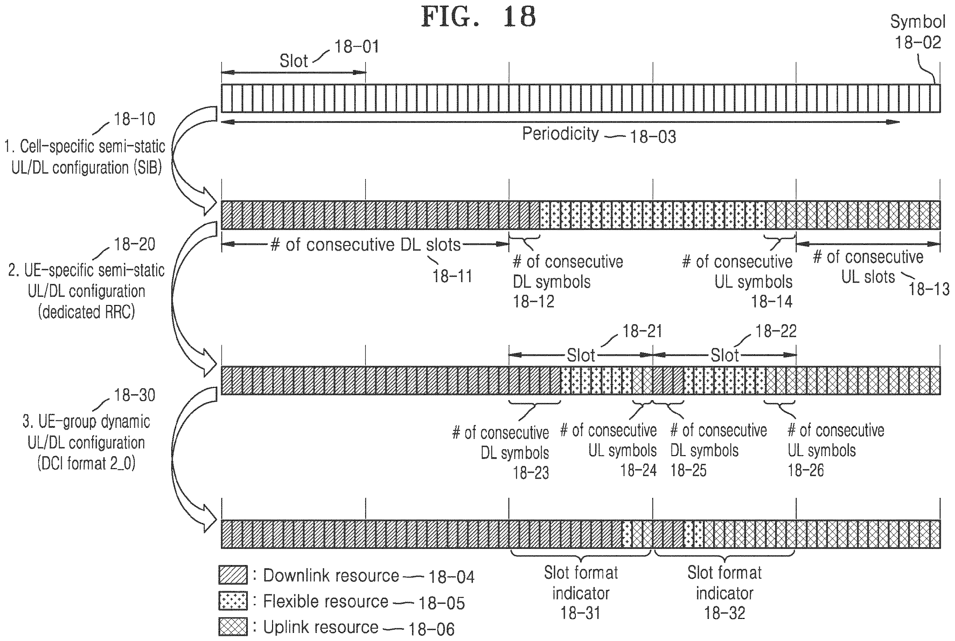

FIG. 18 illustrates an example of a UL and DL resource configuration method in the 5G wireless communication system according to an embodiment of the present disclosure.

Referring to FIG. 18, a slot 18-01 may include 14 symbols 18-02. In the 5G communication system, UL-DL configuration of symbols/slots may be configured in 3 steps. In the first step, UL-DL of symbol/slot may be semi-statically configured via cell-specific configuration information 18-10 via system information in a symbol unit. In detail, cell-specific UL-DL configuration information via system information may include UL-DL pattern information and reference subcarrier information. In the UL-DL pattern information, pattern periodicity 18-03, the number of consecutive DL slots 18-11 from a start point of each pattern, the number of symbols of next slot 18-12, the number of consecutive UL slots 18-13 from an end of the pattern, and the number of symbols of next slot 18-14 may be indicated. Here, slots and symbols not indicated as UL and DL may be determined as flexible slots/symbols.

In the second step, based on UE-specific configuration information by dedicated higher layer signaling, flexible slots or slots 18-21 and 18-22 including flexible symbols may be respectively indicated as the number of consecutive DL symbols 18-23 and 18-25 from each start symbol of slots and the numbers of consecutive UL symbols 18-24 and 18-26 from each end of slots or may be indicated by a full DL slot or a full UL slot.

Also, in the last step, in order to dynamically switch DL signal transmission duration and an UL signal transmission duration, symbols indicated as flexible symbols (that is, symbols that are not indicated as DL and UL) in each slot may be indicated as to whether each symbol is a DL symbol, an UL symbol, or a flexible symbol, via slot format indicators (SFI) 18-31 and 18-32 included in a DL control channel. A SFI may be selected as one index from [Table 40] in which UL-DL configuration of 14 symbols in one slot is configured as in Table below.

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | F | U | U | U |
| 32 | D | D | D | D | D | D | D | D | D | F | F | U | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | F | U | U | U | U |
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |
| 56 – 254 | Reserved | | | | | | | | | | | | | |
| 255 | UE determines the slot format for the slot based on TDD-UL-DL-ConfigurationCommon, or TDD-UL-DL-ConfigDedicated and, if any, on detected DCI formats | | | | | | | | | | | | | |

[Related to XDD DL-UL]

In 5G mobile communication services, an additional coverage extension technology is introduced compared to LTE communication services, but coverage of actual 5G mobile communication services may use a time division duplex (TDD) system that is appropriate for services with a high proportion of DL traffic. Also, as a center frequency is increased to increase the frequency band, the coverage of the BS and the UE is decreased, and thus, coverage enhancement is a key requirement of 5G mobile communication services. In particular, because transmit power of the UE is generally lower than transmit power of the BS, there is a need to support a service in which a proportion of DL traffic is high, and a ratio of a DL in a time domain is higher than that of a UL, the coverage enhancement of a UL channel is a key requirement of 5G mobile communication services. As a method of physically improving coverage of a UL channel between the BS and the UE, there may be a method of increasing time resources of the UL channel, lowering the center frequency, or increasing the transmit power of the UE. However, switching a frequency may be limited because a frequency band is determined for each network operator. Also, there may be restrictions in increasing maximum transmit power of the UE because a maximum value is set to decrease interference, i.e., the maximum transmit power of the UE is set by regulations or rules.

Therefore, in order to enhance the coverage of the BS and the UE, UL and DL resources are not divided in a time domain according to a proportion of UL and DL traffic as in the TDD system but UL and DL resources may also be divided in a frequency domain as in a frequency division duplex (FDD) system. In an embodiment, a system in which UL resources and DL resources may be flexibly divided in a time domain and a frequency domain may be referred to as a time or frequency (X) division duplexing (DD) system, a flexible TDD system, a hybrid TDD system, a TDD-FDD system, a hybrid TDD-FDD system, a subband full duplex, a full duplex system, or the like, and for convenience of descriptions, the present disclosure will now be described with the XDD system. According to an embodiment of the present disclosure, X in the XDD system may refer to time or frequency.

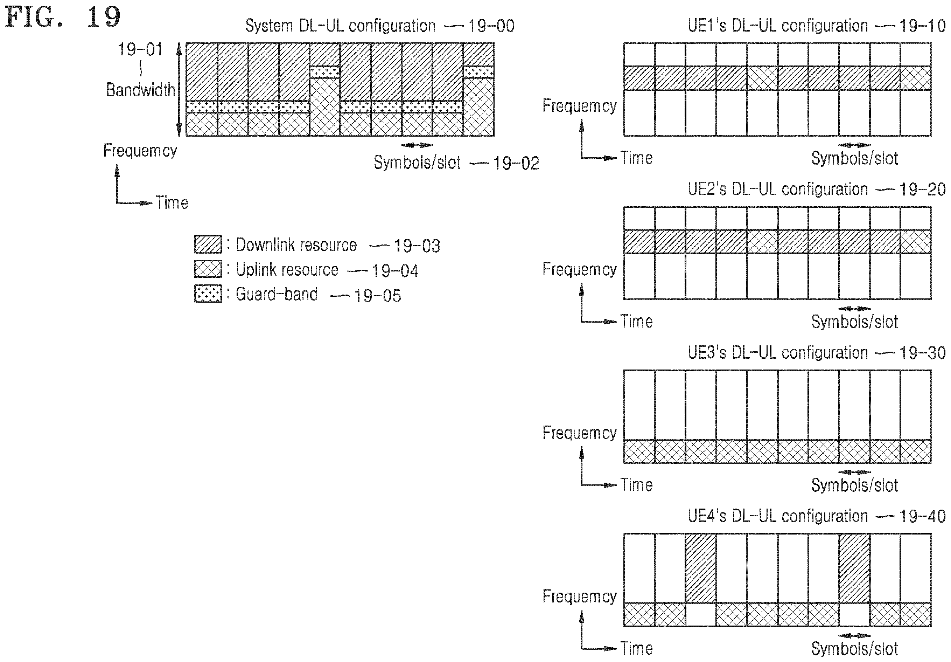

FIG. 19 illustrates UL-DL configurations of the XDD system in which UL and DL resources are flexibly divided in a time domain and a frequency domain, according to an embodiment of the present disclosure.

Referring to FIG. 19, from the BS perspective, entire XDD system UL-DL configuration 19-00 may be configured in a manner that resources can be flexibly allocated to each symbol or slot 19-02 according to traffic proportion of UL and DL in a full frequency band 19-01. In this regard, a guard band 19-05 may be allocated in a gap between a DL resource 19-03 and a UL resource 19-04 in the frequency domain. The guard band 19-05 may be allocated as a measure for decreasing interference applied to a UL channel or signal reception, due to out-of-band emission that occurs when the BS transmits a DL channel or signal on the DL resource 19-03.

A UE 1 19-10 and a UE 2 19-20 in which DL traffic is generally greater than UL traffic may be allocated more DL resources than UL resources, according to configuration by the BS. For example, a ratio of DL resource to UL resource in a time domain may be 4:1. A UE 3 19-30 that operates at an edge of a cell and thus lacks UL coverage may be allocated fewer DL resources than UL resources, according to configuration by the BS. (For example, a ratio of DL resource to UL resource in a time domain may be 1:4). As in the examples above, a UE 4 19-40 with more DL traffic which operates in the center frequency may be allocated more DL resources in the time domain such that DL transmission efficiency may be increased, and UEs that operate in a relatively edge of a cell and lack UL coverage may be allocated more UL resources in the time domain.

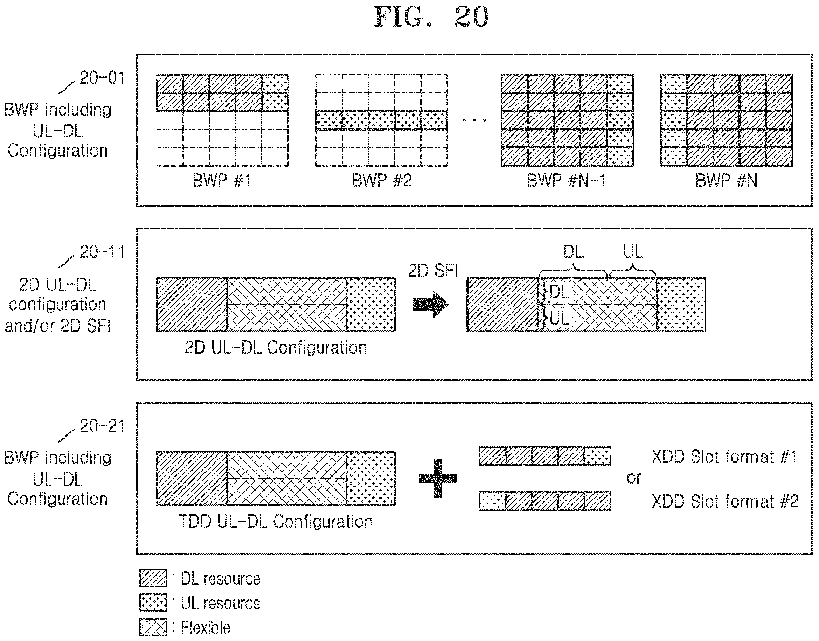

FIG. 20 illustrates an example of a method of configuring UL-DL in a time domain and a frequency domain in an XDD system.

In the XDD system, a required resource may be configured for UL-DL configuration, according to situations of the UE. For example, referring to reference numeral 20-01, UL-DL configuration may be configured in a frequency domain and a time domain via different UL-DL configuration for each BWP. The BS and the UE may change a frequency-domain resource by BWP switching, and may change UL-DL configuration in the frequency domain and the time domain by changing a resource of the time domain via UL-DL configuration associated with a BWP. For another example, referring to 20-11, UL-DL configuration configured by the BS may be configured while resources of a frequency axis are divided for one or more symbols/slots. That is, twodimensional (2D) UL-DL configuration information may be configured, and a resource for symbol/slot may be configured by using a 2D SFI. For another example, referring to 20-21, UL-DL configuration in a time domain is not configured for each BWP but UL-DL configuration may be performed by combining different UL-DL configurations for multiple BWPs. UL-DL configuration in a time domain is not changed in response to BWP switching but a change in UL-DL configuration in a time domain may be performed separately from the BWP switching.

[Related to CLI measurement]

The present disclosure may include a technology of supporting duplex flexibility in a paired spectrum (in a case of FDD) and an unpaired spectrum (in a case of TDD), and may particularly use a dynamic TDD scheme. When dynamic resource allocation is allowed for each cell in a multi-cell environment, CLI between a UL and a DL may occur. In a system supporting dynamic TDD, time durations configured as a DL by BS A may overlap in a time domain with time durations configured as a UL by BS B. In this case, a case where a UL signal (e.g., SRS) transmitted by UE B in a cell of neighboring BS B may cause interference to a UE A that receives a DL signal in a cell of BS A may occur, and such interference may be referred to as UE-to-UE CLI. The UE-to-UE CLI may degrade a data reception quality of UE A that receives a DL.

According to an embodiment for measuring the UE-to-UE CLI, a UE subject to interference (e.g., the UE A described above) may measure a reference signal received power (RSRP) from an SRS and may report an SRS-reference signal received power (SRS-RSRP) to a BS. Another embodiment for measuring the UE-to-UE CLI is to use a cross link interference-received signal strength indicator (CLI-RSSI) for measuring received power of all interferences on a particular resource. In order to measure the SRS-RSRP, the UE may receive, from a serving BS, SRS measurement configuration information associated with SRS transmission configuration information. Measured interference may be reported to the BS, may undergo filtering at L3-level, and then may be used in CLI measurement between BSs. The BS may perform resource allocation based on an interference measurement report received from the UE. Detailed descriptions therefor are provided below with reference to Table below.

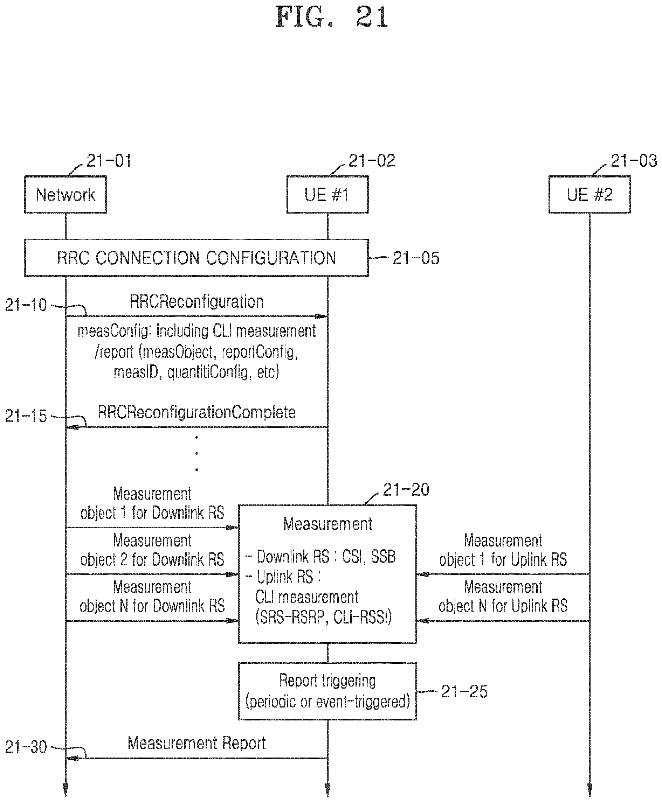

FIG. 21 illustrates an example of a method of measuring UE-to-UE CLI in a Rel-16 NR system, according to an embodiment of the present disclosure. In more detail, FIG. 21 illustrates a whole procedure in which a UE receives measurement configuration including CLI from a BS and transmits a measurement value report thereof.

In operation 21-05, a UE 21-02 may be configured for RRC connection with a network (hereinafter, referred to as BS) 21-01. As the UE 21-02 in the connected mode moves within or outside a cell, the UE 21-02 may be commended, from a different cell/BS, for transition to transmit or receive data via a cell/BS being newly connected after handover. To this end, the BS 21-01 may provide, by an RRC message, configuration for indication of measurement with respect to a different frequency/cell. The measurement configuration information may include an object, a condition, and parameters for which a measurement result shall be reported from the UE 21-02 to the BS 21-01. Also, via the measurement configuration information, the UE 21-02 may be configured, by the BS 21-01, measurement and reporting with respect to CLI, and then may perform measurement and reporting.

In operation 21-10, the BS 21-01 may transmit RRCReconfiguration to the UE 21-02. The BS 21-01 may provide, via RRCReconfiguration, measurement configuration information (measConfig) to the UE 21-02, and the measurement configuration information may include CLI measurement and reporting-associated configuration information in addition to existing DL reference signal measurement configuration and reporting. Also, the measurement configuration information (measConfig) may include measurement object configuration (measObject), report configuration (reportConfig), measurement identifier configuration (measID) associating a measurement object with a report method, configuration indicating a type of a value to be measured (quantityConfig), and the like.

In operation 21-15, the UE 21-02 may transmit RRCReconfigurationComplete to the BS 21-01.

In operation 21-20, the UE 21-02 may perform measurement according to the configured measurement information.

In operation 21-25 and operation 21-30, the UE 21-02 may report a measurement result to the BS 21-01 via a higher layer message, according to a report procedure (periodic or event-based triggered). Detailed descriptions are provided based on a plurality of pieces of information of Abstract Syntax Notation One (ASN.1) in Tables below, and a plurality of pieces of information that are irrelevant to the descriptions may be omitted for a clear description of the meanings.

In order to configure CLI measurement for the UE, the BS may transmit information by adding the information to measConfig that is sub-information of an RRC message (RRCReconfiguration or RRCResume).

With respect to [Table 41] and [Table 42], CLI measurement configuration may be transmitted to the UE via a higher layer message of RRCReconfiguration or RRCResume.

## [Table 41] RRCReconfiguration

```
RRCReconfiguration ::=                   SEQUENCE {
    rrc-TransactionIdentifier       RRC-TransactionIdentifier,
    criticalExtensions              CHOICE {
    rrcReconfiguration                  RRCReconfiguration-IEs,
    criticalExtensionsFuture            SEQUENCE {}
}

RRCReconfiguration-IEs ::=       SEQUENCE {
    radioBearerConfig               RadioBearerConfig OPTIONAL,
    secondaryCellGroup              OCTET STRING (CONTAINING CellGroupConfig) OPTIONAL,
    measConfig                      MeasConfig              OPTIONAL,
    lateNonCriticalExtension        OCTET STRING            OPTIONAL,
    nonCriticalExtension            RRCReconfiguration-v1530-IEs OPTIONAL
}
```

## [Table 42] RRCResume

```
RRCResume ::=                   SEQUENCE {
        rrc-TransactionIdentifier       RRC-TransactionIdentifier,
        criticalExtensions              CHOICE {
        rrcResume                       RRCResume-IEs,
        criticalExtensionsFuture        SEQUENCE {}
    }
}
RRCResume-IEs ::=               SEQUENCE {
        radioBearerConfig               RadioBearerConfig OPTIONAL,
        masterCellGroup                       OCTET STRING (CONTAINING CellGroupConfig)OPTIONAL
        measConfig                      MeasConfig OPTIONAL,
        fullConfig                      ENUMERATED {true} OPTIONAL,
        lateNonCriticalExtension        OCTET STRING OPTIONAL,
        nonCriticalExtension            RRCResume-v1560-IEs OPTIONAL
    }
```

With respect to [Table 43], the BS may configure measConfig as measurement configuration information by including measurement resource configuration information in measObjectToRemoveList, including information about a report in reportConfigToAddModList, including measurement ID configuration in mead I dToAdd Mod List, and including, in QuantityConfig, an indication as to which measurement is to be performed and reported.

## [Table 43] MeasConfig

```
MeasConfig ::=                  SEQUENCE {
        measObjectToRemoveList          MeasObjectToRemoveList OPTIONAL,
        measObjectToAddModList          MeasObjectToAddModList OPTIONAL,
        reportConfigToRemoveList        ReportConfigToRemoveList OPTIONAL,
        reportConfigToAddModList        ReportConfigToAddModList OPTIONAL,
        measIdToRemoveList              MeasIdToRemoveList OPTIONAL,
        measIdToAddModList              MeasIdToAddModList OPTIONAL,
        s-MeasureConfig                 CHOICE {
            ssb-RSRP                        RSRP-Range,
            csi-RSRP                        RSRP-Range
        } OPTIONAL,
        quantityConfig                  QuantityConfig OPTIONAL,
        ...
    }
MeasObjectToRemoveList ::=      SEQUENCE (SIZE (1..maxNrofObjectId)) OF MeasObjectId
MeasIdToRemoveList ::=          SEQUENCE (SIZE (1..maxNrofMeasId)) OF MeasId
ReportConfigToRemoveList ::=    SEQUENCE (SIZE (1..maxReportConfigId)) OF ReportConfigId
```

With respect to [Table 44], CLI measurement report configuration may be configured by a CLI-associated parameter that is sub-information of reportConfigNR. For example, when the BS configures a periodic report for the UE, the BS may configure the periodic report by using a plurality of pieces of sub-information of CLIreportConfigNR-r16 information. On which resource of corresponding measurement ID the UE is to perform measurement may be configured according to each quantity information.

## [Table 44] ReportConfigToAddModList

```
ReportConfigToAddModList ::=    SEQUENCE (SIZE (1..maxReportConfigId)) OF ReportConfigToAddMod
ReportConfigToAddMod ::=        SEQUENCE {
        reportConfigId                  ReportConfigId,
        reportConfig                    CHOICE {
        reportConfigNR                      ReportConfigNR,
        ...,
    }
}
```

With respect to [Table 45] to [Table 47], which resource is to be used to perform CLI measurement may be configured by measObjectCLI that is CLI-dedicated information. The UE may determine whether it is SRS-RSRP measurement or CLI-RSSI measurement, based on corresponding information of information transmitted by the BS. For example, when the UE is configured to perform SRS-RSRP measurement, the UE may identify the configuration via SRS-ResourceConfigCLI-r16 that is sub-information of measObejctCLI. SRS resource information in Rel-16 CLI SRS-RSRP measurement may be configured to be referred to SRS-Resource information that is sub-information of SRS-Config.

## [Table 45] MeasObjectToAddModList

```
MeasObjectToAddModList ::=    SEQUENCE (SIZE (1..maxNrofObjectId)) OF MeasObjectToAddMod

MeasObjectToAddMod ::=        SEQUENCE {
    measObjectId                  MeasObjectId,
    measObject                    CHOICE {
    measObjectNR                  MeasObjectNR,
    ...,
    }
}
```

## [Table 46] ReportConfigNR

```
ReportConfigNR ::=                  SEQUENCE {
    reportType                        CHOICE {
    ...
    cli-Periodical-r16                    CLI-PeriodicalReportConfig-r16,
    cli-EventTriggered-r16                CLI-EventTriggerConfig-r16
    }
    }
    ...

CLI-EventTriggerConfig-r16 ::=    SEQUENCE {
    eventId-r16                       CHOICE {
    eventI1-r16                           SEQUENCE {
    i1-Threshold-r16                          MeasTriggerQuantityCLI-r16,
    reportOnLeave-r16                         BOOLEAN,
    hysteresis-r16                            Hysteresis,
    timeToTrigger-r16                         TimeToTrigger
    },
    ...
    },
    reportInterval-r16                    ReportInterval,
    reportAmount-r16                      ENUMERATED {r1, r2, r4, r8, r16, r32, r64, infinity},
    maxReportCLI-r16                      INTEGER (1..maxCLI-Report-r16),
    ...
}
CLI-PeriodicalReportConfig-r16 ::= SEQUENCE {
    reportInterval-r16                    ReportInterval,
    reportAmount-r16                      ENUMERATED {r1, r2, r4, r8, r16, r32, r64, infinity},
    reportQuantityCLI-r16                 MeasReportQuantityCLI-r16,
    maxReportCLI-r16                      INTEGER (1..maxCLI-Report-r16),
    .
}

MeasTriggerQuantityCLI-r16 ::=    CHOICE {
    srs-RSRP-r16                          SRS-RSRP-Range-r16,
    cli-RSSI-r16                          CLI-RSSI-Range-r16
}
MeasReportQuantityCLI-r16 ::=     ENUMERATED {srs-rsrp, cli-rssi}
```

## [Table 47] MeasObjectCLI-r16

```
MeasObjectCLI-r16 ::=                 SEQUENCE {
    cli-ResourceConfig-r16            CLI-ResourceConfig-r16,
    ...
}

CLI-ResourceConfig-r16 ::=   SEQUENCE {
srs-ResourceConfig-r16                    SetupRelease { SRS-ResourceListConfigCLI-r16 } OPTIONAL,
rssi-ResourceConfig-r16                   SetupRelease { RSSI-ResourceListConfigCLI-r16 } OPTIONAL
}

SRS-ResourceListConfigCLI-r16 ::= SEQUENCE (SIZE (1.. maxNrofCLI-SRS-Resources-r16))
OF SRS-ResourceConfigCLI-r16

RSSI-ResourceListConfigCLI-r16 ::= SEQUENCE (SIZE (1.. maxNrofCLI-RSSI-Resources-r16))
OF RSSI-ResourceConfigCLI-r16

SRS-ResourceConfigCLI-r16 ::=         SEQUENCE {
    srs-Resource-r16                  SRS-Resource,
    srs-SCS-r16                       SubcarrierSpacing,
    refServCellIndex-r16              ServCellIndex OPTIONAL,
    refBWP-r16                        BWP-Id,
    ...
}
RSSI-ResourceConfigCLI-r16 ::=        SEQUENCE {
    rssi-ResourceId-r16               RSSI-ResourceId-r16,
    rssi-SCS-r16                      SubcarrierSpacing,
    startPRB-r16                      INTEGER (0..2169),
    nrofPRBs-r16                      INTEGER (4..maxNrofPhysicalResourceBlocksPlus1),
    startPosition-r16                     INTEGER (0..13),
    nrofSymbols-r16                       INTEGER (1..14),
    rssi-PeriodicityAndOffset-r16         RSSI-PeriodicityAndOffset-r16,
    refServCellIndex-r16              ServCellIndex OPTIONAL,
    ...
}
RSSI-ResourceId-r16 ::=       INTEGER (0.. maxNrofCLI-RSSI-Resources-r16-1)

RSSI-PeriodicityAndOffset-r16 ::=     CHOICE {
    sl10 INTEGER(0..9),
    sl20 INTEGER(0..19),
    sl40 INTEGER(0..39),
    sl80 INTEGER(0..79),
    sl160 INTEGER(0..159),
    sl320 INTEGER(0..319),
    sl640 INTEGER(0..639),
    ...
}
```

With respect to [Table 48] to [Table 50], CLI measured by using configured measurement quantity and resource may be stored in MeasResults. MeasResults stored per ID may be transmitted from the UE to the BS via MeasmentReport that is an RRC message.

## [Table 48] MeasurementReport

```
MeasurementReport ::=             SEQUENCE {
    criticalExtensions               CHOICE {
    measurementReport                MeasurementReport-IEs,
    criticalExtensionsFuture         SEQUENCE {}
}
}
MeasurementReport-IEs ::=   SEQUENCE {
    measResults                      MeasResults,
    lateNonCriticalExtension         OCTET STRING OPTIONAL,
    nonCriticalExtension             SEQUENCE{} OPTIONAL
}
```

## [Table 49] MeasResults

```
MeasResults ::=                    SEQUENCE {
    measId                         MeasId,
    measResultServingMOList            MeasResultServMOList,
    measResultNeighCells               CHOICE {
        measResultListNR               MeasResultListNR,
        . . .
    } OPTIONAL,
    ....,
    [[
    measResultServFreqListNR-SCG   MeasResultServFreqListNR-SCG OPTIONAL,
    ]],
    [[
    . . .
    measResultCLI-r16                  MeasResultCLI-r16 OPTIONAL
    ]]
}
```

## [Table 50] MeasResultCLI-r16

```
MeasResultCLI-r16 ::=                  SEQUENCE {
    measResultListSRS-RSRP-r16         MeasResultListSRS-RSRP-r16 OPTIONAL,
    measResultListCLI-RSSI-r16         MeasResultListCLI-RSSI-r16 OPTIONAL
}

MeasResultListSRS-RSRP-r16 ::= SEQUENCE (SIZE (1.. maxCLI-Report-r16)) OF MeasResultSRS-RSRP-r16

MeasResultSRS-RSRP-r16 ::=     SEQUENCE {
    srs-ResourceId-r16                 SRS-ResourceId,
    srs-RSRP-Result-r16          SRS-RSRP-Range-r16
}

MeasResultListCLI-RSSI-r16 ::= SEQUENCE (SIZE (1.. maxCLI-Report-r16)) OF MeasResultCLI-RSSI-r16

MeasResultCLI-RSSI-r16 ::= SEQUENCE {
    rssi-ResourceId-r16                RSSI-ResourceId-r16,
    cli-RSSI-Result-r16                CLI-RSSI-Range-r16
}
. . .
```

[UE capability related to CLI]

- UE capability information 1. The UE capability, as in [Table 51], indicates capability as to which measurement resource is supported with respect to CLI-RSSI and SRS-RSRP. Also, when each measurement resource capability is reported, at least maximum number of supportable resources may also be reported, and parameter maxNumberCLI-RSSI-r16 or maxNumber-SRS-RSRP-r16 of [Table 51] may indicate maximally supportable UE capability. In particular, for CLI SRS-RSRP measurement in which an SRS transmitted by a UE in a neighboring cell is to be monitored, a maximum number of resources that can be monitored per slot may also be reported, and parameter maxNumberPerSlotCLI-SRS-RSRP-r16 of [Table 51] may indicate UE capability with respect to a maximum number of SRS monitorings per slot for CLI measurement. For example, when UE capability is reported with parameter cli-SRS-RSRP-Meas-r16 of [Table 51], it may indicate that the UE can perform measurement by using a resource of SRS-RSRP, and maxNumber-SRS-RSRP-r16 and maxNumberPerSlotCLI-SRS-RSRP-r16 that are reported together may indicate a maximum number of resources the UE can monitor for CLI measurement and a maximum number of resource monitorings per slot. The UE capability is optionally supported by the UE, and whether to support the UE capability may be explicitly reported to the BS.

[Table 51]

| Index | Feature group | Components | Field name in TS 38.331 [2] |
|-------|---------------|------------|-----------------------------|
| 17-1 | CLI-RSSI measurement | 1. Support CLI-RSSI measurement. The max number of resources across all CCs configured to measure RSSI shall not exceed 64.<br>2. Maximum number of measurement resources configured for CLI-RSSI measurement | cli-RSSI-Meas-r16<br>maxNumberCLI-RSSI-r16 |

(continued)

| Index | Feature group | Components | Field name in TS 38.331 [2] |
|---|---|---|---|
| 17-2 | SRS-RSRP measurement | 1. Support SRS-RSRP measurement. The max number of SRS resources across all CCs configured to measure SRS-RSRP shall not exceed 32. <br>2. Maximum number of measurement resources across all CCs configured for SRS-RSRP measurement <br>3. Maximum number of measurement resources across all CCs configured for SRS-RSRP measurement within a slot <br><br>• A slot is based on minimum SCS among active BWPs across all CCs configured for SRS-RSRP measurement <br>A SRS resource occasion that overlaps with the slot is counted as one measurement resource in the slot | cli-SRS-RSRP-Meas-r16 maxNumber-SRS-RSRPI-r16/ maxNumberPerSlotCLI-SRS-RSRP-r16 |

UE capability information 2. The UE capability may indicate capability as to whether simultaneous receptions are available for the UE when reception of CLI measurement resource and reception of scheduled DL signal and channel concurrently occur. The UE capability may be reported as information about each of measurement resources, and may be reported with parameter cli-RSSI-FDM-DL-r16 or cli-SRS-RSRP-FDM-DL-r16 of [Table 52]. The UE capability is optionally supported by the UE, and whether to support the UE capability may be explicitly reported to the BS.

[Table 52]

| Index | Feature group | Components | Field name in TS 38.331 [2] |
|---|---|---|---|
| 17-3 | Simultaneous reception of DL signals/ channels and CLI-RSSI measurement resource | Support simultaneous reception of DL signals/ channels and CLI-RSSI measurement resource | cli-RSSI-FDM-DL-r16 |
| 17-4 | Simultaneous reception of DL signals/ channels and SRS-RSRP measurement resource | Support simultaneous reception of D L signals/ channels and SRS-RSRP measurement resource | cli-SRS-RSRP-FDM-DL-r16 |

[Table 53] may show UE capability information associated with CLI measurement defined in higher layer signaling information. Information indicating a maximum number of CLI measurement resources may be defined in the sub part of MeasAndMobParametersCommon, and information indicating a supportable CLI measurement resource type may be defined in MeasAndMobParametersFRX-Diff.

[Table 53]

```
MeasAndMobParameters ::=              SEQUENCE {
      measAndMobParametersCommon            MeasAndMobParametersCommon
OPTIONAL,
      measAndMobParametersXDD-Diff              MeasAndMobParametersXDD-Diff
OPTIONAL,
      measAndMobParametersFRX-Diff              MeasAndMobParametersFRX-Diff
OPTIONAL,
}

MeasAndMobParametersCommon ::=        SEQUENCE {
...//
      maxNumberCLI-RSSI-r16                 ENUMERATED {n8, n16, n32, n64}
OPTIONAL,
      maxNumberCLI-SRS-RSRP-r16            ENUMERATED {n4, n8, n16, n32}
OPTIONAL
      maxNumberPerSlotCLI-SRS-RSRP-r16     ENUMERATED {n2, n4, n8}
OPTIONAL,
..//
}

MeasAndMobParametersFRX-Diff ::=      SEQUENCE {
...//
      cli-RSSI-Meas-r16                    ENUMERATED {supported}
OPTIONAL,
      cli-SRS-RSRP-Meas-r16                ENUMERATED {supported}
OPTIONAL
..//
}

}
```

According to the above descriptions about the CLI measurement and periodic or event-triggered reporting, the UE may report, to the BS via an L3 message, SRS-RSRP measured according to periodic SRS resource configuration of the dynamic TDD system and/or CLI-RSSI of a particular resource on which a strength of all received interferences is measured. For coverage enhancement of a UL channel, a new duplex system such as the XDD system may divide a UL resource and a DL resource in a time domain and a frequency domain. Unlike to the TDD system, for the new duplex system such as the XDD system, a UL frequency domain resource and a DL frequency domain resource may be configured at a same point in time in one cell. In this regard, when an interference effect increases as a distance between a UL UE and a DL UE decreases, a reception quality of the DL UE may deteriorate. Therefore, fast measurement and reporting may be requested to prepare a mechanism of the scheme described above. Also, in order to prevent resource waste due to periodic CLI SRS resource configuration and to support flexible CLI measurement, aperiodic CLI configuration-based measurement and reporting may be requested. Hereinafter, configuration of UE capability report, higher layer signaling information, DCI, etc. for supporting aperiodic CLI measurement and L1-triggered reporting, and measurement and reporting based on the configuration will now be described. In more detail, how a BS is to configure a UE with measurement for supporting aperiodic CLI measurement and L1-triggered reporting, and how the UE is to perform the measurement will now be described. By doing so, DL reception performance may be maximized, and furthermore, performance of the XDD system may be enhanced.

Hereinafter, in the present disclosure, when a UE measures interference between UEs, the measurement may be referred to as various terms including CLI, inter-UE interference, interference measurement, CLI measurement, and the like. For clear descriptions of the present disclosure, all the terms described above may be interpreted to have the same meaning as CLI measurement. Also, in measurement, when there is no specific citation of a 'periodic', 'aperiodic', or 'semi-persistent' operation indicating a time-domain operation, the CLI measurement may be performed regardless of the time-domain operation.

Hereinafter, in the present disclosure, CLI measurement may be variously expressed for one scenario such as in-cell, the same cell, the same serving cell, or the like. The expressions above may indicate that an interference-causing UE and a measuring UE are present together in one cell.

Hereinafter, embodiments of the present disclosure will be described in detail with reference to accompanying drawings. Hereinafter, a base station is an entity that allocates resources to a terminal, and may be at least one of gNode B, gNB, eNode B, Node B, BS, a radio access unit, a BS controller, or a node on a network. A terminal may include a UE, an MS, a cellular phone, a smartphone, a computer, or a multimedia system capable of performing a communication function. Although 5G system is described as an example for embodiments of the present disclosure, the embodiments of the present disclosure may also be applied to other communication systems having similar technical backgrounds or

70

channel types. For example, mobile communication technologies developed after LTE or LTE-A mobile communication and 5G may be included therein. Therefore, the embodiments of the present disclosure may also be applied to other communication systems through partial modification without greatly departing from the scope of the present disclosure based on determination by one of ordinary skill in the art. The embodiments of the present disclosure may be applied to a XDD system as well as FDD and TDD systems.

In the descriptions of the present disclosure, detailed explanations of the related art are omitted when it is deemed that they may unnecessarily obscure the essence of the present disclosure. The terms used in the specification are defined in consideration of functions used in the present disclosure, and can be changed according to the intent or commonly used methods of users or operators. Accordingly, definitions of the terms are understood based on the entire descriptions of the present specification.

Hereinafter, in the following description of the present disclosure, higher layer signaling may include at least one of signaling below or may refer to signaling including a combination of signaling below.

- MIB (Master Information Block)
- SIB (System Information Block) or SIB X (X=1, 2, ...)
- RRC (Radio Resource Control)
- MAC (Medium Access Control) CE (Control Element)

Also, L1 signaling may refer to signaling corresponding to at least one or a combination of signaling methods using a physical layer channel or signaling below.

- PDCCH (Physical Downlink Control Channel)
- DCI (Downlink Control Information)
- UE-specific DCI
- Group common DCI
- Common DCI
- scheduling DCI (e.g., DCI used for scheduling DL or UL data)
- non-scheduling DCI (e.g., DCI not used for scheduling DL or UL data)
- PUCCH (Physical Uplink Control Channel)
- UCI (Uplink Control Information)

Hereinafter, in the present disclosure, determining priorities between A and B may refer to selecting one of A and B which has a higher priority according to a preset priority rule and performing an operation corresponding thereto or omitting or dropping an operation for the other one having a lower priority.

Hereinafter, in the present disclosure, the above examples will now be described in several embodiments, but the examples are not independent and one or more embodiments may be applied simultaneously or in combination.

[Aperiodic CLI measurement and L1-triggered reporting method]

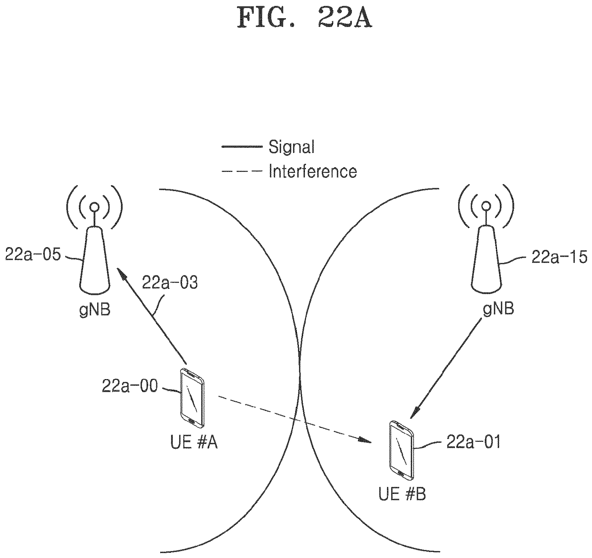

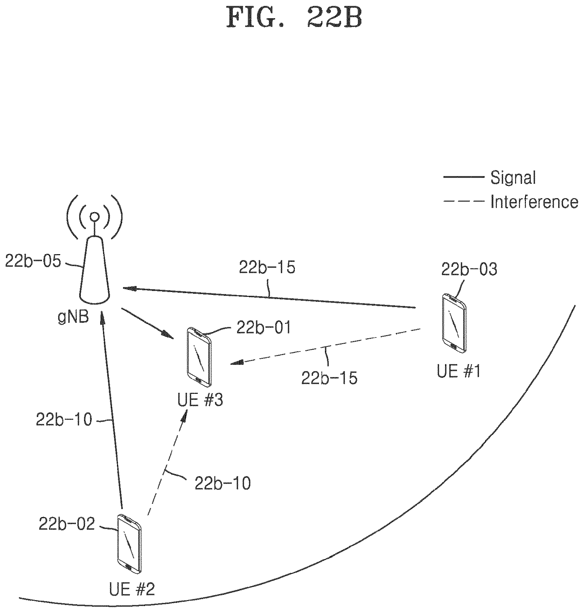

FIGS. 22A and 22B illustrate CLI measurement scenario examples in a wireless communication system, according to an embodiment of the present disclosure.

FIG. 22A is a diagram for describing a measurement and reporting scenario for CLI that may occur between neighboring UEs in different cells. In more detail, provided is a case in which two different gNBs 22a-05 and 22a-15 exist, a UE #A 22a-00 is connected to the gNB #A 22a-05, and a UE #B 22a-01 is connected to the gNB #B 22a-15. Here, the gNB #A 22a-05 may configure, by a higher layer signal or a physical signal, the UE #A 22a-00 to transmit a UL signal 22a-03 (e.g., an SRS), and the UE #A 22a-00 may receive configuration or indication from the gNB #A 22a-05 and may transmit the UL signal 22a-03 to the gNB #A 22a-05. The gNB #B 22a-15 may configure, by a higher layer signal, the UE #B 22a-01 to measure CLI in response to reception of the UL signal 22a-03, and the UE #B 22a-01 may measure the SRS 22a-03 transmitted by the UE #A 22a-00, in response to reception of configuration of SRS measurement from the gNB #B 22a-15 or physical layer indication. The UE #B 22a-01 may measure the SRS 22a-03 and may report a measurement result of the SRS 22a-03 to the gNB #B 22a-15. The UE #B 22a-01 may previously receive, from the gNB #B 22a-15 by a higher layer signal, a plurality of pieces of information such as information including at least a transport resource and a transmit time necessary for reporting of the measurement result.

FIG. 22B is a diagram for describing a scenario for measuring and reporting CLI that can occur between UEs in a same cell. In more detail, a UE #1 22b-03, a UE #2 22b-02, and a UE #3 22b-01 which are connected to a gNB 22b-05 are considered. The afore-described UEs are all connected to the gNB 22b-05. Here, the gNB 22b-05 may configure, by a higher layer signal or a physical signal, the UE #1 22b-03 and the UE #2 22b-02 to transmit UL signals 22b-15 and 22b-10 (e.g., SRS), and the UE #1 22b-03 and the UE #2 22b-02 may receive configuration or indication from the gNB 22b-05 and thus may transmit the UL signals 22b-15 and 22b-10. The gNB 22b-05 may indicate the UE #3 22b-01 to measure the UL signal 22b-15 and/or 22b-10 and then to report a measurement result of the UL signal 22b-15 and/or 22b-10 to the gNB 22b-05. The UE #3 22b-01 may previously receive, from the gNB 22b-05 by a higher layer signal, a plurality of pieces of information such as information including at least a transport resource and a transmit time necessary for reporting of the measurement result.

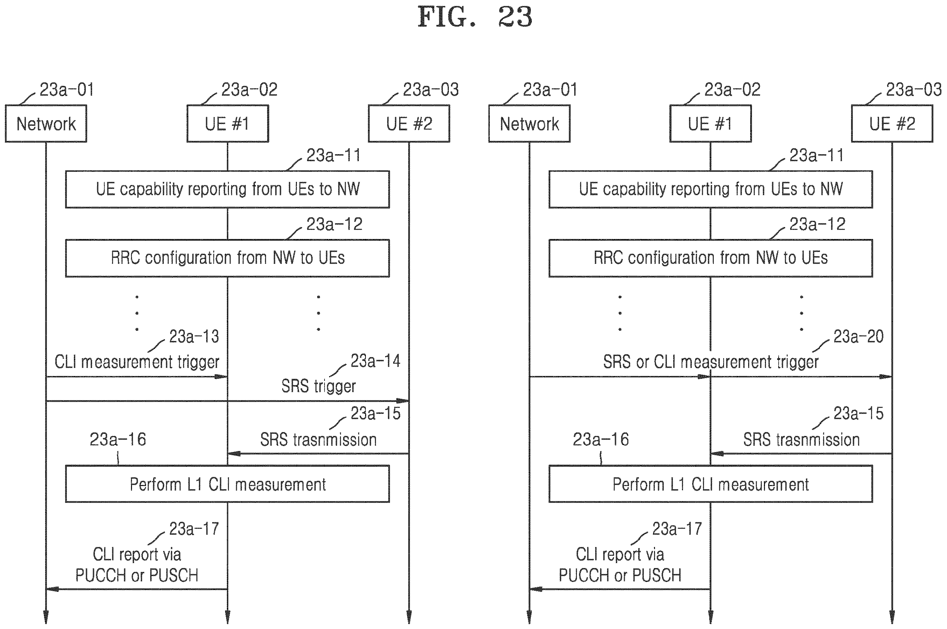

FIG. 23 is a diagram for describing a whole flow of an aperiodic CLI measurement and L1-triggered reporting method proposed by the present disclosure.

In operation 23a-11, a network 23a-01 may receive reporting of UE capability from a UE #1 23a-02 and a UE #2 23a-03.

in operation 23a-12, the network 23a-01 may configure, via a higher layer message (e.g., an RRC configuration message), UEs with a plurality of pieces of information associated with CLI measurement, based on the capability of the UEs 23a-02 and 23a-03. In an embodiment of the present disclosure, the network 23a-01 may configure the UE #1 23a-02 to transmit a plurality of pieces of information for CLI measurement via a UL signal (e.g., an SRS) to the UE #2 23a-03.

In operation 23a-13, the network 23a-01 may indicate CLI measurement for the UE #1 23a-02.

In operation 23a-14, the network 23a-01 may indicate the UE #2 23a-03 to transmit a UL signal 23a-15. In another embodiment of the present disclosure, as in operation 23a-20, the network 23a-01 may indicate CLI measurement and/or SRS transmission for the UE #1 23a-02 and the UE #2 23a-03 via group common DCI.

In operation 23a-15, the UE #1 23a-02 may receive the UL signal 23a-15 from the UE #2 23a-03.

In operation 23a-16, the UE #1 23a-02 may perform measurement on the received UL signal 23a-15.

In operation 23a-17, the UE #1 23a-02 may report, to the network 23a-01, a measurement result 23a-16 that is L1 filtered via a plurality of pieces of information such as a transport resource and a transmit time which are configured or indicated by the network 23a-01.

The aperiodic CLI measurement and L1-triggered reporting method according to an embodiment of the present disclosure may be configured or implemented according to five embodiments below.

1) UE capability information generation and reporting
2) measurement and reporting configuration by higher layer signaling
3) DCI for aperiodic SRS triggering and CLI measurement
4) measurement of CLI by correcting BWP mismatch
5) reporting of measurement CLI

Detailed contents of each embodiment will now be described via embodiments to be described below.

<First embodiment: UE capability information generation and reporting >

Hereinafter, a plurality of pieces of UE capability information for aperiodic CLI measurement and L1-triggered reporting are defined, and a method by which a UE reports the plurality of pieces of UE capability information to a BS will now be described. UE capability information associated with CLI measurement may include a maximum number of resources per each measurement resource, and whether CLI measurement is supported.

According to an embodiment of the present disclosure, a UE measuring CLI may not receive, during measurement, a DL signal transmitted from the BS. However, when the UE can support FDM reception by reporting, to the BS, cli-SRS-RSRP-FDM-DL or cli-RSSI-FDM-DL which is UE capability information, the BS may simultaneously configure CLI measurement and DL signal reception for the UE, based on the UE capability information.

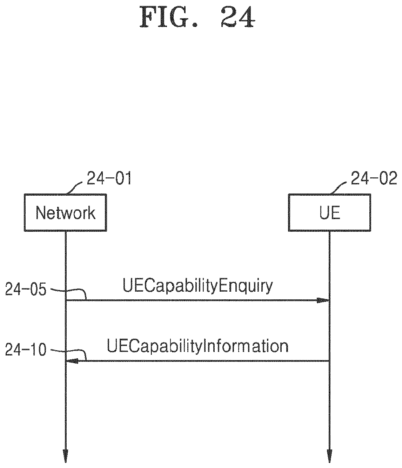

FIG. 24 is a diagram for describing UE capability reporting, according to an embodiment of the present disclosure.

In operation 24-05, a network 24-01 may request a UE 24-02 for UE capability reporting (24-05).

In operation 24-10, the UE 24-02 may report capability information, in response to the request of the network 24-01. According to an embodiment of the present disclosure, the UE capability information may include capability associated with aperiodic CLI measurement and reporting. In this regard, there may be three methods of configuring the capability information associated with aperiodic CLI measurement and L1-triggered reporting.

[Method 1-1] Method of including information about aperiodic SRS-RSRP measurement capability in existing CLI UE capability reporting information.

The method 1-1 may include determining whether a UE supports aperiodic CLI measurement and L1-triggered reporting, based on a parameter of a maximum number of resources for SRS-SRSP measurement. That is, when capability information about a maximum number of aperiodic SRS-RSRP measurement resources for CLI (e.g., max-Number-AP-SRS-RSRP) is reported to be 1 or more from the UE to a BS, the BS may determine that aperiodic CLI measurement and L1-triggered reporting are supported. Also, the UE capability information may include at least one of the number of aperiodic SRS-RSRP measurement resources (maxNumber-AP-SRS-RSRP), the number of periodic SRS-RSRP measurement resources (maxNumber-P-SRS-RSRP), and a total number of SRS-RSRP measurement resources (maxNumber-SRS-RSRP) which are the sum of the numbers. For example, when capability of the UE is K aperiodic SRS resources and N periodic SRS resources, the UE may report, to the BS, both or each of UE capability information and SRS resource operation capability for CLI measurement of the UE as to be up to K + N.

Referring to [Table 54] below, maxNumber-P-SRS-RSRP and maxNumber-AP-SRS-RSRP may indicate UE capabilities respectively for a periodic SRS-RSRP measurement resource and an aperiodic SRS-RSRP measurement resource in [Method 1-1]. Also, it may include that the afore-mentioned maxNumber-SRS-RSRP indicates a total sum of the periodic and aperiodic SRS-RSRP measurement resources. Also, when maxNumber-AP-SRS-RSRP is reported to be as at least 1, the BS may determine that the UE supports aperiodic CLI measurement and L1-triggered reporting. According to an embodiment of the present disclosure, maxNumberPerSlotCLI-SRS-RSRP, and maxNumberPerSlotCLI-P-SRS-RSRP, maxNumberPerSlotCLI-AP-SRS-RSRP which indicate a maximum number of SRS-RSRP measurement resources per slot may be used as UE capability for measuring SRS-RSRP. Names of the afore-described parameters are merely an example and are not limited to names of the present disclosure.

[Table 54] and [Table 55] are examples of UE capability information.

[Table 54]

| Index | Feature group | Components | Field name in TS 38.331 [2] |
|---|---|---|---|
| 17-1 | CLI-RSSI measurement | 1. Support CLI-RSSI measurement. The max number of resources across all CCs configured to measure RSSI shall not exceed 64.<br>2. Maximum number of measurement resources configured for CLI-RSSI measurement | cli-RSSI-Meas-r16<br>maxNumberCLI-RSSI-r16 |
| 17-2 | SRS-RSRP measurement | 1. Support SRS-RSRP measurement. The max number of SRS resources across all CCs configured to measure SRS-RSRP shall not exceed 32.<br>2. Maximum number of measurement resources across all CCs configured for SRS-RSRP measurement<br><br>3. Maximum number of measurement resources across all CCs configured for SRS-RSRP measurement within a slot<br>• A slot is based on minimum SCS among active BWPs across all CCs configured for SRS-RSRP measurement<br>A SRS resource occasion that overlaps with the slot is counted as one measurement resource in the slot | cli-SRS-RSRP-Meas-r16<br>maxNumber-SRS-RSRP-r161 maxNumberPerSlotCLI-SRS-RSRP-r16<br>e.g. )maxNumber-P-SRS-RSRP<br>e.g.) maxNumberPerSlotCLI-P-SRS-RSRP<br>e.g.) maxNumber-AP-SRS-RSRP<br>e.g.) maxNumberPerSlotCLI-AP-SRS-RSRP |

[Table 55]

```
MeasAndMobParameters ::=              SEQUENCE {
    measAndMobParametersCommon            MeasAndMobParametersCommon
OPTIONAL,
    measAndMobParametersXDD-Diff              MeasAndMobParametersXDD-Diff
OPTIONAL,
    measAndMobParametersFRX-Diff              MeasAndMobParametersFRX-Diff
OPTIONAL,
}

MeasAndMobParametersCommon ::=        SEQUENCE {
..//
    maxNumberCLI-RSSI-r16                 ENUMERATED {n8, n16, n32, n64}
OPTIONAL,
    maxNumberCLI-SRS-RSRP                 ENUMERATED {...}
OPTIONAL,
    maxNumberCLI-P-SRS-RSRP              ENUMERATED {...}
OPTIONAL,
    maxNumberCLI-AP-SRS-RSRP             ENUMERATED {...}
OPTIONAL
    maxNumberPerSlotCLI-SRS-RSRP          ENUMERATED {...}
OPTIONAL
    maxNumberPerSlotCLI-P-SRS-RSRP        ENUMERATED {...}
OPTIONAL
    maxNumberPerSlotCLI-AP-SRS-RSRP       ENUMERATED {...}
OPTIONAL,
..//
}

MeasAndMobParametersFRX-Diff ::=      SEQUENCE {
..//
    cli-RSSI-Meas-r16                    ENUMERATED {supported}
OPTIONAL,
    cli-SRS-RSRP-Meas                    ENUMERATED {supported}
OPTIONAL
..//
}

}
```

[Method 1-2] Method of configuring aperiodic SRS-RSRP resource information for CLI measurement

The method 1-2 includes explicitly reporting, to a BS via an additional UE capability parameter, whether aperiodic CLI measurement and L1-triggered reporting are supported. That is, a UE may configure and report, to the BS, UE capability information configured of whether an SRS-RSRP measurement resource supports a time domain operation. For example, parameters respectively indicating whether periodic SRS-RSRP measurement is supported (e.g., cli-SRS-RSRP-Meas) and aperiodic SRS-RSRP measurement is supported (cli-SRS-RSRP-Meas-r18) may be configured and reported from the UE to the BS.

Also, when the UE reports capability information, the UE may include, in reporting signaling, capability of a maximum number of resources associated with support or non-support of CLI measurement (cli-SRS-RSRP-Meas and/or cli-SRS-RSRP-Meas-r18). For example, when the UE reports UE capability (cli-SRS-RSRP-Meas-r18) indicating support of SRS-RSRP measurement, the UE may include, in capability information, at least one of a maximum number of aperiodic SRS-RSRP measurement resources (maxNumber-AP-SRS-RSRP) and a maximum number of aperiodic SRS-RSRP measurement resources per slot (maxNumberPerSlot-AP-SRS-RSRP).

Referring to [Table 56] below, cli-SRS-RSRP-Meas may indicate that periodic SRS-RSRP CLI measurement is supported. cli-SRS-RSRP-Meas-r18 may indicate that aperiodic CLI measurement and L1-triggered reporting are supported. maxNumber-P-SRS-RSRP and maxNumber-AP-SRS-RSRP may respectively indicate the number of periodic SRS-RSRP measurement resources and the number of aperiodic SRS-RSRP measurement resources which are supportable by the UE. Also, MaxNumber-SRS-RSRP may indicate a total sum of the periodic and aperiodic SRS-RSRP measurement resources.

Also, maxNumberPerSlotCLI-SRS-RSRP and maxNumberPerSlotCLI-A-SRS-RSRP and maxNumberPerSlot-CLI-AP-SRS-RSRP which indicate a maximum number of SRS resources per slot may be used as UE capability information for measuring SRS-RSRP. Names of the afore-described parameters are merely an example and are not limited to names of the present disclosure.

[Table 56] and [Table 57] are examples of UE capability information.

[Table 56]

| Index | Feature group | Components | Field name in TS 38.331 [2] |
|---|---|---|---|
| 17-1 | CLI-RSSI measurement | 1. Support CLI-RSSI measurement. The max number of resources across all CCs configured to measure RSSI shall not exceed 64.<br><br>2. Maximum number of measurement resources configured for CLI-RSSI measurement | cli-RSSI-Meas-r16<br>maxNumberCLI-RSSI-r16 |
| 17-2 | SRS-RSRP measurement | 1. Support periodic SRS-RSRP measurement. The max number of SRS resources across all CCs configured to measure SRS-RSRP shall not exceed N.<br><br>1. Support aperiodic SRS-RSRP measurement. The max number of SRS resources across all CCs configured to measure SRS-RSRP shall not exceed N.<br><br>2. Maximum number of measurement resources across all CCs configured for SRS-RSRP measurement<br><br>3. Maximum number of measurement resources across all CCs configured for SRS-RSRP measurement within a slot<br>　　• A slot is based on minimum SCS among active BWPs across all CCs configured for SRS-RSRP measurement<br>A SRS resource occasion that overlaps with the slot is counted as one measurement resource in the slot | e.g.) cli-P-SRS-RSRP-Meas<br>e.g.) cli-AP-SRS-RSRP-Meas<br>e.g.)maxNumber-P-SRS-RSRP<br><br>e.g.) maxNumberPerSlotCLI-P-SRS-RSRP<br>e.g.) maxNumber-AP-SRS-RSRP<br>e.g.) maxNumberPerSlotCLi-AP-SRS-RSRP |

[Table 57]

```
MeasAndMobParameters ::=              SEQUENCE {
    measAndMobParametersCommon            MeasAndMobParametersCommon
OPTIONAL,
    measAndMobParametersXDD-Diff              MeasAndMobParametersXDD-Diff
OPTIONAL,
    measAndMobParametersFRX-Diff              MeasAndMobParametersFRX-Diff
OPTIONAL,
}

MeasAndMobParametersCommon ::=        SEQUENCE {
..//
    maxNumberCLI-RSSI-r16                 ENUMERATED {n8, n16, n32, n64}
OPTIONAL,
    maxNumberCLI-SRS-RSRP                 ENUMERATED {...}
OPTIONAL,
    maxNumberCLI-P-SRS-RSRP              ENUMERATED {...}
OPTIONAL,
    maxNumberCLI-AP-SRS-RSRP             ENUMERATED {...}
OPTIONAL
    maxNumberPerSlotCLI-SRS-RSRP          ENUMERATED {...}
OPTIONAL
    maxNumberPerSlotCLI-P-SRS-RSRP        ENUMERATED {...}
OPTIONAL
    maxNumberPerSlotCLI-AP-SRS-RSRP       ENUMERATED {...}
OPTIONAL,
..//
}

MeasAndMobParametersFRX-Diff ::=      SEQUENCE {
..//
    cli-RSSI-Meas-r16                     ENUMERATED {supported}
OPTIONAL,
    cli-SRS-RSRP-Meas                     ENUMERATED {supported}
OPTIONAL
    cli-SRS-RSRP-Meas-r18                 ENUMERATED {supported}
OPTIONAL
..//
}

}
```

[Method 1-3] XDD-dedicated slot UE capability configuration

The method 1-3 includes configuring XDD slot and symbol-dedicated CLI measurement information in UE capability information. In XDD where a DL and a UL can exist at a same point in time, XDD-dedicated slot or symbol may be configured in DL-UL configuration, dynamic resource allocation (SFI), or the like. Accordingly, according to an embodiment of the present disclosure, for an SRS-RSRP measurement resource for CLI measurement, UE capability for XDD-dedicated slot and symbol may be additionally considered, unlike in UE capability for which only TDD slot and symbol are considered. In more detail, UE capability for the XDD-dedicated slot and symbol may be included in Feature Group (MeasAndMobParametersCommon and MeasAndMobParameterFRX-Diff) configuring measurement and mobility capability information of the UE or may be included in separate Feature Group for XDD. Also, Feature Group may include at least whether XDD-dedicated periodic and aperiodic CLI measurements are supported, the number of CLI measurement resources dedicated for XDD slot and symbol, or the like. The method 1-3 may include reporting XDD-dedicated UE capability information, thereby preventing confusion or collision with other duplex system information. Names of the afore-described parameters are merely an example for descriptions and thus the present disclosure is not limited to the names.

<Second embodiment: Higher layer signaling configuration, in consideration of CLI measurement and reporting configuration>

Hereinafter, a method by which a BS configures a UE with CLI measurement by higher layer signaling CSI-MeasConfig, for aperiodic CLI measurement and L1-triggered reporting, will now be described.
The second embodiment includes a method by which a UE transmits a CLI measurement result to a BS via L1-triggered reporting. For example, CSI may include channel quality information (CQI), a precoding matric indicator (PMI), a CSI-RS resource indicator (CRI), a SS/PBCH block resource indicator (SSBRI), a layer indicator (LI), a rank indicator (RI), and/or L1-reference signal received power (L1-RSRP). On the other hand, according to an embodiment of the present disclosure, CSI may include a CLI resource indicator for L1-triggered CLI reporting, L1-filtered SRS-RSRP and/or CLI-RSSI. The BS may configure the UE with time and frequency resources for "aperiodic CLI measurement and L1-triggered reporting", and the configuration may include one or more parameters for CLI measurement and reporting.

<2-1 embodiment: Configuration of L1-triggered CLI reporting information>

In order to perform aperiodic CLI measurement and L1-triggered reporting, CLI measurement and reporting configuration information may be included in CSI configuration information (CSI-ReportConfig). A detailed method will now be described with reference to each method below.

[Method 2-1-1] Method of adding CLI information to CSI-ReportConfig and ReportQuantity

The method 2-1-1 includes a CLI measurement associated parameter in ReportQuantity of the CSI configuration information. In more detail, cri-RSRP or ssb-Index-RSRP indicating L1-RSRP measurement and reporting together with CLI measurement index (CLI-Index-SRS-RSRP or CLI-index-RSSI) associated with L1-triggered CLI reporting (e.g., L1 SRS-RSRP or L1 CLI-RSSI) are included (see Table 58). For example, when the UE is configured by the BS with CLI-index-SRS-RSRP as ReportQuantity, the UE may determine to measure and report L1 filtered SRS-RSRP.

According to another embodiment of the present disclosure, a CLI measurement identifier (resource information ID and reporting ID) may be included in CSI-ReportConfig that is higher layer signaling information including CSI configuration information. In this case, CSI-ReportConfig may include configuring, for reporting of the CLI measurement identifier, whether a time domain operation is periodic, aperiodic, or semi-persistent (semi-PersistentOnPUCCH / semi-PersistentOnPUSCH).

Also, with respect to the CLI measurement identifier, CSI-ReportConfig may include at least one CLI-associated parameter (e.g., cli-formatIndicator) in reportFreqConfiguration indicating a frequency domain operation. Names of the aforedescribed parameters are merely an example for descriptions and thus the present disclosure is not limited to the names.

As the method 2-1-1 uses a part of the CSI configuration information, there is no additional higher layer signaling, and in view of the BS, the BS may configure the UE with CLI measurement and reporting by using small overhead.

[Table 58]

```
CSI-ReportConfig ::=              SEQUENCE {
    reportConfigId                   CSI-ReportConfigId,
    carrier                          ServCellIndex              OPTIONAL,
    resourcesForChannelMeasurement   CSI-ResourceConfigId,
    csi-IM-ResourcesForInterference  CSI-ResourceConfigId         OPTIONAL,
    nzp-CSI-RS-ResourcesForInterference  CSI-ResourceConfigId     OPTIONAL,
    reportConfigType                 CHOICE {
        periodic                         SEQUENCE {
            reportSlotConfig                 CSI-ReportPeriodicityAndOffset,
            pucch-CSI-ResourceList               SEQUENCE (SIZE (1..maxNrofBWPs)) OF PUCCH-CSI-
Resource
        },
        semiPersistentOnPUCCH            SEQUENCE {
            reportSlotConfig                 CSI-ReportPeriodicityAndOffset,
            pucch-CSI-ResourceList               SEQUENCE (SIZE (1..maxNrofBWPs)) OF PUCCH-CSI-
Resource
        },
        semiPersistentOnPUSCH            SEQUENCE {
            reportSlotConfig                 ENUMERATED {s15, s110, s120, s140, s180, s1160,
s1320},
            reportSlotOffsetList             SEQUENCE (SIZE (1.. maxNrofUL-Allocations)) OF
INTEGER(0..32),
            pOalpha                          P0-PUSCH-AlphaSetId
        },
        aperiodic                        SEQUENCE {
            reportSlotOffsetList             SEQUENCE (SIZE (1..maxNrofUL-Allocations)) OF
INTEGER(0..32)
        }
    },
    reportQuantity                   CHOICE {
        none                             NULL,
        cri-RI-PMI-CQI                   NULL,
        cri-RI-i1                        NULL,
        cri-RI-i1-CQI                    SEQUENCE {
            pdsch-BundleSizeForCSI               ENUMERATED {n2, n4}
OPTIONAL
        },
        cri-RI-CQI                       NULL,
        cri-RSRP                         NULL,
        ssb-Index-RSRP                   NULL,
        cri-RI-LI-PMI-CQI                NULL
        CLI-Index-SRS-RSRP           NULL
    },
    reportFreqConfiguration          SEQUENCE {
        cqi-FormatIndicator                  ENUMERATED { widebandCQI, subbandCQI }
OPTIONAL,
        pmi-FormatIndicator                  ENUMERATED { widebandPMI, subbandPMI }
OPTIONAL,
        cli-formatIndicator          ENUMERATED { widebandCLI, subbandCLI }
OPTIONAL,
        csi-ReportingBand                    CHOICE {
            subbands3                            BIT STRING(SIZE(3)),
            subbands4                            BIT STRING(SIZE(4)),
            subbands5                            BIT STRING(SIZE(5)),
            subbands6                            BIT STRING(SIZE(6)),
            subbands7                            BIT STRING(SIZE(7)),
            subbands8                            BIT STRING(SIZE(8)),
            subbands9                            BIT STRING(SIZE(9)),
            subbands10                           BIT STRING(SIZE(10)),
            subbands11                           BIT STRING(SIZE(11)),
            subbands12                           BIT STRING(SIZE(12)),
            subbands13                           BIT STRING(SIZE(13)),
            subbands14                           BIT STRING(SIZE(14)),
            subbands15                           BIT STRING(SIZE(15)),
            subbands16                           BIT STRING(SIZE(16)),
            subbands17                           BIT STRING(SIZE(17)),
            subbands18                           BIT STRING(SIZE(18)),
            ...,
            subbands19-v1530                     BIT STRING(SIZE(19))
    } OPTIONAL   -- Need S

    }
}
```

[Method 2-1-2] Method of configuring ReportQuantity for CLI measurement and reporting in CSI-ReportConfig

The method 2-1-2 includes configuring new reportQuantity for CLI measurement. That is, new higher layer signaling information (e.g., reportQuantity-CLI) is generated, and may include at least one CLI index (e.g., CLI-index-SRS-RSRP and/or CLI-index-RSSI) including aperiodic CLI measurement and L1-triggered reporting (e.g., L1 SRS-RSRP and/or L1 CLI-RSSI) information. For example, when a UE is configured, by a BS, CLI-index-SRS-RSRP via reportQunatity-CLI, the UE may determine to measure and report L1 filtered SRS-RSRP.

According to another embodiment of the present disclosure, a CLI measurement identifier (CLI resource ID or reporting ID) may be included in CSI-reportConfig that is higher layer signaling information associated with CSI configuration information. Also, CSI-ReportConfig may include configuring, for reporting of the CLI measurement identifier, whether a time domain operation is periodic, aperiodic, or semi-persistent (semi-PersistentOnPUCCH / semi-PersistentOnPUSCH).

Also, with respect to the CLI measurement identifier, CSI-ReportConfig may include a CLI-associated parameter (e.g., cli-formatIndicator) in reportFreqConfiguration indicating at least a frequency domain operation. Names of the afore-described parameters are merely an example and are not limited to names of the present disclosure.

The method 2-1-2 configures CLI measurement associated information as independent higher layer information, and thus, may be used in more various scenarios.

[Table 59] indicates an example of the method 2-1-2.

## [Table 59]

```
CSI-ReportConfig ::=                  SEQUENCE {
    reportConfigId                        CSI-ReportConfigId,
    carrier                               ServCellIndex              OPTIONAL,
    resourcesForChannelMeasurement        CSI-ResourceConfigId,
    csi-IM-ResourcesForInterference       CSI-ResourceConfigId        OPTIONAL,
    nzp-CSI-RS-ResourcesForInterference   CSI-ResourceConfigId        OPTIONAL,
    reportConfigType                      CHOICE {
        periodic                              SEQUENCE {
            reportSlotConfig                      CSI-ReportPeriodicityAndOffset,
            pucch-CSI-ResourceList                SEQUENCE (SIZE (1..maxNrofBWPs)) OF PUCCH-CSI-Resource
        },
        semiPersistentOnPUCCH                 SEQUENCE {
            reportSlotConfig                      CSI-ReportPeriodicityAndOffset,
            pucch-CSI-ResourceList                SEQUENCE (SIZE (1..maxNrofBWPs)) OF PUCCH-CSI-Resource
        },
        semiPersistentOnPUSCH                 SEQUENCE {
            reportSlotConfig                      ENUMERATED {s15, s110, s120, s140, s180, s1160, s1320},
            reportSlotOffsetList                  SEQUENCE (SIZE (1.. maxNrofUL-Allocations)) OF INTEGER(0..32),
            p0alpha                               P0-PUSCH-AlphaSetId
        },
        aperiodic                             SEQUENCE {
            reportSlotOffsetList                  SEQUENCE (SIZE (1..maxNrofUL-Allocations)) OF INTEGER(0..32)
        }
    },
    reportQuantity                       CHOICE {
        none                                 NULL,
        cri-RI-PMI-CQI                       NULL,
        cri-RI-i1                            NULL,
        cri-RI-i1-CQI                        SEQUENCE {
            pdsch-BundleSizeForCSI               ENUMERATED {n2, n4}                              OPTIONAL
        },
        cri-RI-CQI                           NULL,
        cri-RSRP                             NULL,
        ssb-Index-RSRP                       NULL,
        cri-RI-LI-PMI-CQI                    NULL
    },
    reportFreqConfiguration              SEQUENCE {
        cqi-FormatIndicator                  ENUMERATED { widebandCQI, subbandCQI }
OPTIONAL,
        pmi-FormatIndicator                  ENUMERATED { widebandPMI, subbandPMI }
OPTIONAL,
        cli-formatIndicator                  ENUMERATED { widebandCLI, subbandCLI }              OPTIONAL,
        csi-ReportingBand                    CHOICE {
            subbands3                            BIT STRING(SIZE(3)),
            subbands4                            BIT STRING(SIZE(4)),
            subbands5                            BIT STRING(SIZE(5)),
            subbands6                            BIT STRING(SIZE(6)),
            subbands7                            BIT STRING(SIZE(7)),
            subbands8                            BIT STRING(SIZE(8)),
            subbands9                            BIT STRING(SIZE(9)),
            subbands10                           BIT STRING(SIZE(10)),
            subbands11                           BIT STRING(SIZE(11)),
            subbands12                           BIT STRING(SIZE(12)),
            subbands13                           BIT STRING(SIZE(13)),
            subbands14                           BIT STRING(SIZE(14)),
            subbands15                           BIT STRING(SIZE(15)),
            subbands16                           BIT STRING(SIZE(16)),
            subbands17                           BIT STRING(SIZE(17)),
            subbands18                           BIT STRING(SIZE(18)),
            . . . ,
            subbands19-v1530                     BIT STRING(SIZE(19))
        } OPTIONAL    -- Need S
    . . .
    reportQuantity-r16                   CHOICE {
        cri-SINR-r16                         NULL,
        ssb-Index-SINR-r16                   NULL
    . . .
    reportQuantity-CLI
        CLI-Index-SRS-RSRP                   NULL
```

<2-2 embodiment: Configuration of measurement report information for aperiodic CLI measurement and L1-triggered reporting >

According to an embodiment of the present disclosure, in order to perform aperiodic CLI measurement and L1-triggered reporting, CLI resource configuration information may be included in CSI configuration information (CSI-ResourceConfig). A detailed method will now be described with reference to each method below.

[Method 2-2-1] Method of including CLI measurement resource in CSI-ResourceConfig

The method 2-2-1 may include, for aperiodic CLI measurement and L1-triggered reporting, a CLI measurement resource (e.g., SRS-ResourceConfigCLI-r18 or RSSI-ResourceConfigCLI-r18) in CSI resource configuration information (CSI-ResourceConfig). Configuration of the CLI measurement resource may include at least one of an SRS-RSRP measurement resource (SRS-ResourceConfigCLI-r18) and a CLI-RSSI measurement resource (RSSI-ResourceCon-figCLI-r18). In an embodiment of the present disclosure, a UE may receive at least one CSI resource configuration information for a channel or interference or CLI measurement by higher layer signaling from a BS, and the CSI resource configuration information may include resource information below.

- CSI-IM resource for interference measurement
- NZP CSI-RS resource for interference measurement
- NZP CSI-RS resource for channel measurement
- SRS resource information for CLI measurement
- CLI-RSSI resource for CLI measurement

Also, the CLI measurement resource may include at least time domain and/or frequency domain resource information. In an embodiment of the present disclosure, a time domain operation of the CLI measurement resource may be configured to be one of 'aperiodic', 'periodic' or 'semi-persistent' from resourceType in CSI resource configuration information (CSI-ResourceConfig). For an aperiodic operation, CSI resource configuration (SRS-ResourceConfigCLI-r18 or RSSI-ResourceConfigCLI-r18) may include at least an aperiodic trigger offset (e.g., aperiodicTriggeringOffset-r18).

Also, a frequency domain operation of the CLI measurement resource may be included in DL BWP configuration information identified by a higher layer parameter bwp-id, and CLI measurement resource configuration (e.g., SRS-ResourceConfigCLI-r18 or RSSI-ResourceConfigCLI-r18) may use corresponding resource configuration information via CLI reporting configuration of the corresponding DL BWP.

For example, when the UE is configured SRS-ResourceConfigCLI-r18 via CSI-ResourceConfig and configured 'aperiodic' via resourceType, by the BS, the UE may determine to measure SRS-RSRP from an SRS on a configured time resource and BWP, the SRS being aperiodically transmitted. Names of the afore-described parameters are merely an example and are not limited to names of the present disclosure.

[Method 2-2-2] Method of including CLI measurement resource in CSI-ResourceConfig

The method 2-2-2 may include a CLI measurement resource (e.g., SRS-ResourceConfigCLI-r18 or RSSI-ResourceConfigCLI-r18) in higher layer signaling MeasObjectCLI. In an embodiment of the present disclosure, configuration of MeasObjectCLI may include at least one of an SRS-RSRP measurement resource (SRS-ResourceConfigCLI-r18) and a CLI-RSSI measurement resource (RSSI-ResourceConfigCLI-r18). A UE may need information as to which resource is to be used, for L1-triggered reporting. To this end, CSI-ResourceConfig may include a MeasObjectCLI indicator (e.g., MeasObejctCLI-Indicator) for referring to a corresponding CLI measurement resource. In an embodiment of the present disclosure, a UE may receive at least one CSI resource configuration information for a channel or interference or CLI measurement by higher layer signaling from a BS, and the CSI resource configuration information may include resource information below.

- CSI-IM resource for interference measurement
- NZP CSI-RS resource for interference measurement
- NZP CSI-RS resource for channel measurement
- Resource reference indicator for CLI measurement (MeasObejctCLI-Indicator)

As the method 2-2-2 uses higher layer signaling configuring existing CLI resource configuration information, in view of the BS, the BS may configure the UE with measurement by using small overhead. Names of the afore-described parameters are merely an example and are not limited to names of the present disclosure.

<Third embodiment: Triggering for aperiodic CLI measurement>

Hereinafter, a method of configuring CLI measurement request information in DCI, for triggering aperiodic CLI measurement and L1-triggered reporting, will now be described. According to an embodiment of the present disclosure, at least one of UE-specific DCI including scheduling information, UE-specific DCI excluding scheduling information, and group common DCI may include information for triggering CLI measurement, based on information about a scheduling format including information of the at least one, by higher layer signaling. Also, Trigger State that is higher layer configuration information corresponding to or being a pair with the CLI request information may be included at least one of the UE-specific DCI including scheduling information, the UE-specific DCI excluding scheduling information, and the group common DCI.

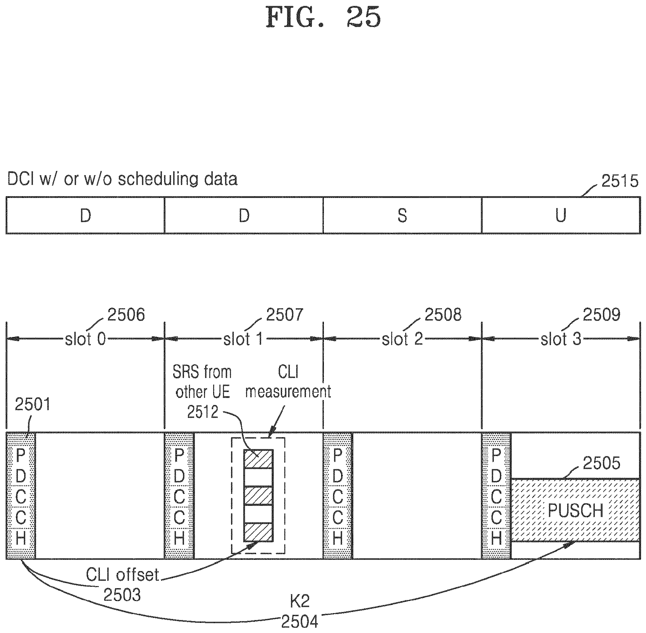

FIG. 25 is a diagram for describing aperiodic CLI measurement triggering, according to an embodiment of the present disclosure.

A UE may receive monitor a PDCCH 2501, may receive DCI, and may be indicated CLI measurement request information (e.g., CLI request) from the DCI. The UE may obtain, from the CLI measurement request information, resource information (e.g., resource information 2512 about an SRS of a neighboring UE) about CLI to be measured. The UE may determine when measurement of a transmitted CLI measurement resource has to be performed, based on a point in time the DCI was received and a parameter about offset 2503 (e.g., aperiodicTriggeringOffset-r18) in CLI measurement resource configuration. In more detail, the UE may be configured an offset value X (i.e., CLI offset 2503) of aperiodic-TriggeringOffset-r18 parameter in the CLI measurement resource configuration, by higher layer signaling from the BS, and the configured offset X may indicate offset between a slot in which the DCI triggering aperiodic CLI measurement is received and a slot in which the CLI measurement resource is transmitted.

<3-1 embodiment: Configuration of CLI measurement request information in DCI including scheduling data>

Hereinafter, a method of configuring a CLI measurement request (e.g., CLI request) in DCI including scheduling data will now be described. In order to request aperiodic CLI measurement and reporting, there may be a method of using a part of an SRS request (srs request) or CSI request (CSI request) bit field or extending the field, or a method of configuring a CLI request-dedicated field. A detailed method will now be described with reference to subcontents below.

[Method 3-1-1] Method of using a part of an SRS transmission request bit field for aperiodic CLI measurement and reporting

The method 3-1-1 includes using a part of a bit field of an SRS transmission request field (srs request) in DCI so as to indicate an aperiodic CLI measurement and reporting request. For example, when SRS transmission request bit fields in DCI are '00', '01', '10', and '11', '01' bit field may correspond to a bit field indicating a CLI measurement reporting request, and '10' and '11' may be bit fields indicating SRS transmission request trigger (if '00' is indicated, it may mean that the CLI measurement reporting request and/or an SRS transmission request is not indicated).
Also, the method 3-1-1 may include using, for CLI measurement and reporting, a part of codepoint of aperiodic SRS trigger state configuration information (aperiodicSRS-ResouceTrigger) configured for a UE by higher layer signaling. For example, when codepoints of aperiodic SRS trigger information (aperiodicSRS-ResourceTrigger) configured for the UE by higher layer signaling are available up to M codepoints, N codepoints among them may be configured as CLI measurement reporting trigger information (e.g., aperiodicCLI-ResourceTrigger), and M - N codepoints may be configured as aperiodic SRS trigger information.
As the method 3-1-1 includes triggering CLI measurement without additional indication information and extension of configuration information, both the UE and a BS may be operated with small overhead. Examples described above are merely provided to describe the method, and names of CLI-associated parameters, lengths of bit fields, and the number of codepoints are not limited to the descriptions above.

[Method 3-1-2] Method of extending and using an SRS transmission request bit field for aperiodic CLI measurement and reporting

The method 3-1-2 includes extending and using a bit field of SRS transmission request information (srs request) in DCI so as to indicate an aperiodic CLI measurement and reporting request (e.g., CLI request). For example, when an SRS transmission request (srs request) supports legacy N bits, N bits may be extended to K ($K \geq N$) bits for a CLI measurement reporting request (CLI request), and a particular bit field among them may be used for the CLI measurement reporting request (CLI request).
Also, the method 3-1-2 may allocate separate codepoint for CLI measurement reporting trigger state information (e.g., aperiodicCLI-ResourceTrigger), without using a part of codepoint of aperiodic SRS trigger state information (aperiodicSRS-ResourceTrigger) configured for the UE by higher layer signaling. For example, up to S aperiodic SRS trigger state information, and up to X CLI measurement reporting trigger state information may be allocated.
As additional bit field and codepoint are allocated for CLI, the method 3-1-2 may be operated without collision with an existing operative SRS transmission request. Examples described above are merely provided to describe the method, and names of CLI-associated parameters, lengths of bit fields, and the number of codepoints are not limited to the descriptions above.

[Method 3-1-3] Method of using a part of a CSI reporting request bit field for aperiodic CLI measurement and reporting

The method 3-1-3 is characterized in using a part of "CSI request" bit field of DCI format 0_1 so as to indicate an aperiodic CLI measurement and reporting request. For example, a CSI request indicator may be configured as NTS (=0, 1, 2, 3, 4, 5 or 6) bits, and some bit fields (e.g., N bit fields) among them may be used as CLI measurement request information (e.g., CLI request).

Also, the method 3-1-3 may include using, for a CLI measurement and reporting request, a part of codepoint of aperiodic CSI trigger state information (CSI-AperiodicTriggerStateList) configured for a UE by higher layer signaling. For example, S codepoints from among X codepoints of aperiodic CSI trigger state (CSI-AperiodicTriggerStateList) configured by higher layer signaling may be configured for aperiodic CLI measurement trigger state (e.g., CLI-AperiodicTriggerState).

That is, the UE may receive DCI format 0_1 by monitoring a PDCCH, and may be indicated scheduling information about a PUSCH and a CLI measurement reporting request indicator (e.g., CLI request). Aperiodic CLI measurement trigger state (CLI-AperiodicTriggerState) may consist of one or more trigger state information, and one trigger state may be triggered by a CLI measurement and reporting request (CLI request).

As the method 3-1-3 includes triggering CLI measurement without additional indication information and extension of configuration information, both the UE and a BS may be operated with small overhead. Examples described above are merely provided to describe the method, and names of CLI-associated parameters, lengths of bit fields, and the number of codepoints are not limited to the descriptions above.

[Method 3-1-4] Method of extending and using a CSI reporting request bit field for aperiodic CLI measurement and reporting

The method 3-1-4 includes extending and using a part of "CSI request" bit field of DCI format 0_1 so as to indicate an aperiodic CLI measurement and reporting request. For example, a CSI request indicator (CSI request) supporting up to N bits may be extended to K (K ≥ N) bits for a CLI measurement reporting request (CLI request), and a particular bit field among them may be used for a CLI measurement reporting request (CLI request).

Also, the method 3-1-4 may allocate separate codepoint for CLI measurement reporting trigger state information (e.g., aperiodicCLI-ResourceTrigger), without using a part of codepoint of CSI trigger state (CSI-AperiodicTriggerStateList) information configured for a UE by higher layer signaling. For example, up to S aperiodic CSI trigger state information, and up to X CLI measurement reporting trigger state information may be allocated.

That is, the UE may receive DCI format 0_1 by monitoring a PDCCH, and may be indicated scheduling information about a PUSCH and a CLI measurement reporting request indicator (e.g., CLI request). Aperiodic CLI measurement trigger state (CLI-AperiodicTriggerState) may consist of one or more trigger state information, and one trigger state may be triggered by a CLI measurement and reporting request (CLI request).

The method 3-1-4 includes extending, for CLI measurement and reporting, a bit field of indication information and codepoint of configuration information, and thus, may include operating the UE and a BS, without collision with a plurality of pieces of existing operative information. Examples described above are merely provided to describe the method, and names of CLI-associated parameters, lengths of bit fields, and the number of codepoints are not limited to the descriptions above.

[Method 3-1-5] Method of using dedicated indication information in DCI, for aperiodic CLI measurement and reporting.

The method 3-1-5 involves including CLI measurement request indication information in DCI so as to indicate an aperiodic CLI measurement request. That is, an aperiodic CLI measurement and reporting request may include a separate CLI measurement request (e.g., cli request), without use of an SRS transmission indicator (srs request) or a CSI request indicator (CSI request). For example, information for triggering CLI measurement and reporting may have up to N bit fields.

Also, aperiodic CLI measurement reporting trigger state (e.g., cli-AperiodicTriggerState) information configured for a UE by higher layer signaling may include information of one or more trigger states, and one trigger state may be triggered by a CLI measurement reporting indicator (cli request).

The method 3-1-5 may be independently operated by allocating CLI measurement-dedicated DCI bit field and trigger state information, and thus, may be used in various scenarios.

<3-2 embodiment: Configuration of CLI measurement request information in DCI excluding scheduling data>

Hereinafter, a method of configuring a CLI measurement request (e.g., CLI request) in DCI excluding scheduling data will now be described.

In order to support more flexible aperiodic SRS transmission, the Rel-17 NR system may configure a DCI field that does not have scheduling and CSI request information. For configuration of the DCI, a field except for SRS transmission request and offset value-associated indication information may not be used. By using such characteristic, methods below may include using some of unused fields of DCI excluding scheduling and CSI request information, as CLI measurement reporting request information.

[Method 3-2-1] Method of using dedicated DCI indication information for aperiodic CLI measurement and reporting

The method 3-2-1 involves including, in DCI, a CLI measurement request information (e.g., CLI request) field that does not have scheduling and CSI request information so as to indicate an aperiodic CLI measurement and reporting request. For example, information for triggering CLI measurement and reporting may have up to N bit fields. Also, a corresponding DCI field may include at least one offset value from among a time domain operation indication offset value for requesting CLI measurement and/or an offset value for synchronizing a time domain point with an SRS transmitted from another UE.

Also, aperiodic CLI measurement reporting trigger state (e.g., cli-AperiodicTriggerState) information configured for a UE by higher layer signaling may include information of one or more trigger states, and one trigger state may be triggered by a CLI measurement reporting indicator.

The method 3-2-1 includes separately configuring a CLI measurement and reporting request field in DCI, and thus, may be enabled for independent CLI measurement operation or may be used in various scenarios.

[Method 3-2-2] Method of using SRS transmission request bit field for aperiodic CLI measurement and reporting

The method 3-2-2 includes using a bit field of aperiodic SRS request information, for an aperiodic CLI measurement request. For example, in a particular point of time, a BS in a same cell may indicate SRS transmission to one UE and may indicate CLI measurement to another UE. In this regard, the UE indicated CLI measurement does not perform SRS transmission in the same point of time, and thus, SRS request information in a DCI field may be empty. Therefore, a separate CLI measurement bit field is not added but a bit field of SRS request information may be partly used for a CLI measurement request.

Also, in order for a UE to determine whether information indicated by the BS is an SRS transmission request or a CLI measurement request, DCI may include at least one of an SRS transmission indicator (e.g., SRS request indicator) or a CLI measurement request indicator (e.g., CLI request indicator). Also, a corresponding DCI field may include at least one offset value from among a time domain operation indication offset value for requesting CLI measurement and/or an offset value for synchronizing a time domain point with an SRS transmitted from another UE.

Also, aperiodic CLI measurement reporting trigger state (e.g., cli-AperiodicTriggerState) information configured for a UE by higher layer signaling may include information of one or more trigger states, and one trigger state may be triggered by a CLI measurement reporting indicator.

As the method 3-2-2 is capable of indicating CLI measurement and reporting without allocating an additional bit, the BS may be operated with small overhead.

<3-3 embodiment: Configuration of CLI measurement request information in group common DCI>

Hereinafter, a method of configuring a CLI measurement request (e.g., CLI request)) in group common DCI will now be described.

Group common DCI (e.g., DCI format 2_3) may indicate both a TPC command and SRS transmission to one UE or a group including one or more UEs, without information for scheduling a PUCCH and a PUSCH. Also, the group common DCI may consist of one or more blocks, and each of the blocks may include information of indication to a UE.

In order to indicate CLI measurement by using a group common DCI characteristic, there may be a method of configuring CLI measurement request information in DCI format 2_3 or a method of configuring separate group common DCI only for CLI measurement indication.

According to an embodiment of the present disclosure, a UE may determine which block in group common DCI is a block indicated to the UE, by using various methods, wherein, in the various methods, PDCCH(s) for triggering CLI measurement or SRS transmission has a particular format, PDCCH(s) for triggering CLI measurement or SRS transmission includes a particular indicator for information a location of the block, PDCCH(s) for triggering CLI measurement or SRS transmission is scrambled with a particular RNTI or assumes to check a particular block in a particular period indicated by a higher layer, and the like. Hereinafter, for convenience of descriptions, it is assumed that, when a UE receives group common DCI, the UE knows a location of a block indicated to the UE as one or more conditions from among similar conditions described above are reflected.

[Method 3-3-1] Method of using SRS transmission request bit field for aperiodic CLI measurement and reporting

The method 3-3-1 includes using a bit field of aperiodic SRS request information included in each block in DCI format 2_3, for an aperiodic CLI measurement request. For example, in a particular point of time, a BS in a same cell may indicate SRS transmission to one UE and may indicate CLI measurement to another UE. In this regard, the UE indicated CLI measurement does not perform SRS transmission in the same point of time, and thus, SRS request information in a DCI field may be empty. Therefore, a CLI measurement bit field is not added in each block of DCI but a bit field of SRS request information may be partly used for a CLI measurement request.

Also, in order for a UE to determine whether information indicated by the BS is an SRS transmission request or a CLI measurement request, the UE may configure an SRS transmission indicator (e.g., SRS request indicator) or a CLI measurement request indicator (e.g., CLI request indicator).

Also, a corresponding DCI field may include at least one offset value from among an offset value for indicating a time domain operation for triggering CLI measurement and/or an offset value for synchronizing a time domain point with an SRS transmitted from another UE.

Also, aperiodic CLI measurement reporting trigger state (e.g., cli-AperiodicTriggerState) information configured for a UE by higher layer signaling may include information of one or more trigger states, and one trigger state may be triggered by a CLI measurement reporting indicator.

As the method 3-3-1 does not request additional indication information or extension of configuration information, a BS and a UE may be operated with small overhead.

[Method 3-3-2] Method of using dedicated DCI indication information for aperiodic CLI measurement and reporting

The method 3-3-2 involves including a CLI measurement request information (e.g., CLI request) field in one block of DCI format 2_3 so as to indicate an aperiodic CLI measurement request. For example, information for triggering CLI measurement reporting may have up to N bit fields. When one block of DCI format 2_3 indicates a CLI measurement request (CLI request) to a UE, a field of an SRS transmission request (SRS request) may be empty.

Also, a corresponding DCI field may include at least one offset value from among an offset value for indicating a time domain operation for triggering CLI measurement and/or an offset value for synchronizing a time domain point with an SRS transmitted from another UE.

Also, aperiodic CLI measurement reporting trigger state (e.g., cli-AperiodicTriggerState) information configured for a UE by higher layer signaling may include information of one or more trigger states, and one trigger state may be triggered by a CLI measurement reporting indicator.

The method 3-3-2 may be independently operated by configuring a separate field for a CLI measurement and reporting request, and thus, may be used in various scenarios.

[Method 3-3-3] Method of configuring new DCI for CLI measurement request

The method 3-3-3 includes generating a new DCI format for an aperiodic CLI measurement request. One UE or UEs of a group including one or more UEs for monitoring corresponding DCI may monitor a common search space so as to receive indication information of the corresponding DCI. With respect to the new DCI according to an embodiment of the present disclosure, a combination with the new DCI from among combinations of aforedescribed DCI formats and RNTIs may be added to the common search space. DCI format 2_x below is an example, and names thereof and DCI format numberings are not limited to the example.

- DCI format 2_x with CRC scrambled by CLI-SRS-RNTI
- CLI-SRS-RNTI (Cross Link Interference and SRS RNTI): For indication of CLI measurement and SRS transmission command

DCI according to an embodiment of the present disclosure may include one or more of a plurality of indication information below.

- SRS transmission request
- CLI measurement request
- SRS/CLI identifier
- BWP switching indicator

Also, a corresponding DCI field may include at least one offset value from among an offset value for indicating a time domain operation for triggering CLI measurement and/or an offset value for synchronizing a time domain point with an SRS transmitted from another UE.

The method 3-3-3 is capable of indicating CLI measurement and reporting by using independent DCI, and thus, may be used in various cases and scenarios.

<Fourth embodiment: CLI measurement by considering BWP mismatch between DL and UL>

Hereinafter, a method of performing CLI measurement when a BWP mismatch occurs between a DL UE for measuring CLI and a UL UE for transmitting a UL signal will now be described.

When a UE measures CLI, if some of "information about a frequency-axis start location and its width of a DL BWP ", "information about a frequency-axis start location and its width of a UL BWP ", "information about a frequency-axis start location and its width with respect to a UL reference signal such as SRS", and "information about a frequency-axis start location and its width with respect to a UL channel such as a PUCCH or a PUSCH" do not match, a CLI measurement accuracy may be effected or measurement may be limited. In particular, as in an XDD system in which it is configured that DL-UL configuration may be divided or shared on a frequency domain and thus a DL and a UL exist in a same point in time, a CLI measurement accuracy may deteriorate due to a BWP mismatch.

Hereinafter, methods of performing CLI measurement by changing a BWP when a BWP mismatch occurs will now be described. Through the proposed methods, a situation of CLI measurement limitation may be prevented and a measurement accuracy may be improved.

<4-1 embodiment: CLI measurement when BWP mismatch occurs in UL UE and DL UE>

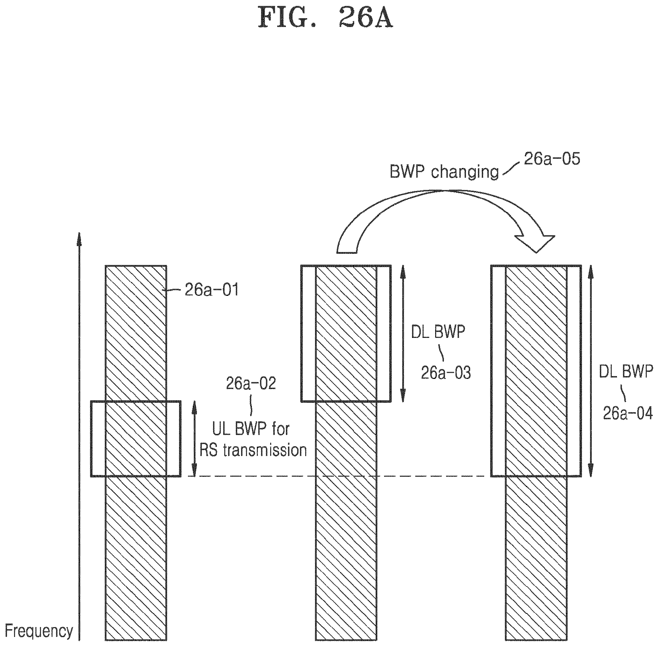

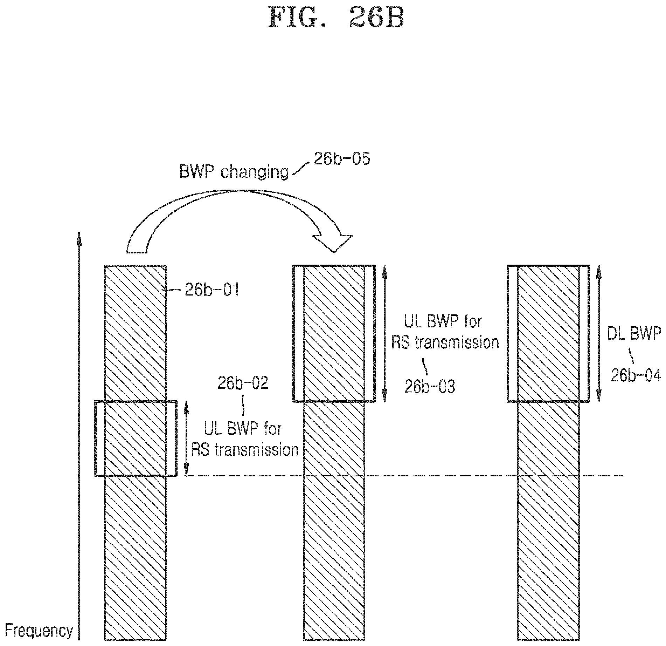

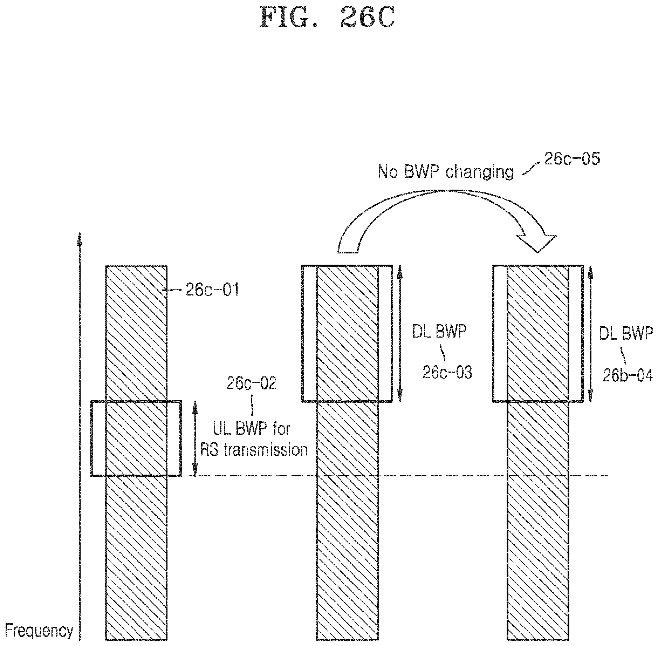

FIGS. 26A, 26B, and 26C are diagrams for describing BWP changing examples for performing CLI measurement when BWPs of a UL and a DL do not match with each other, according to an embodiment of the present disclosure. Each drawing will now be described in detail with methods proposed below.

[Method 4-1-1] Method of measuring CLI by changing DL BWP

The method 4-1-1 includes performing CLI measurement by changing a BWP of a DL UE when BWPs of a UL UE and the DL UE do not match with each other.

Referring to FIG. 26A, a UE that measures CLI performs the measurement on a DL BWP 26a-03, and a UE that transmits a UL signal (e.g., SRS) may perform transmission on a UL BWP 26a-02. As illustrated in FIG. 26A, when the DL BWP 26a-03 and the UL BWP 26a-02 do not match with each other, the UE may change (26a-05) a configured DL BWP and thus may measure an interference signal of a neighboring UE.

For BWP changing, configuration may be performed by using at least one of methods below.

1) A BS may configure a UE with one BWP covering a DL BWP and a UL BWP from among BWPs configured for the UE, and may configure the UE to change to the corresponding BWP when a BWP mismatch occurs.

2) The BS may configure in such a manner that a DL BWP is referred to a BWP of a UL UE and may be changed to a BWP that matches with a UL.

3) By using a BWP including UL-DL configuration that may be operated in an XDD system, it may be configured in such a manner that a DL BWP may be changed to a BWP including or overlapping a BWP on which a UL resource of another UE is transmitted.

4) By using 2D SFI that may be operated in an XDD system, it may be configured in such a manner that a DL BWP may be changed to a DL BWP including or overlapping a BWP on which a UL resource of another UE is transmitted.

[Method 4-1-2] Method of measuring CLI by changing UL BWP

The method 4-1-2 includes enabling CLI measurement by changing a BWP of a UL UE and transmitting a UL signal when BWPs of the UL UE and a DL UE do not match with each other.

As illustrated in FIG. 26B, when a DL BWP 26b-04 and a UL BWP 26b-02 do not match with each other, a UE that transmits a UL signal may change (26b-05) a configured UL BWP and may transmit a signal. By doing so, a DL receiving UE may measure an interference signal of a neighboring UE.

For BWP changing, configuration may be performed by using at least one of methods below.

1) A BS may configure a UE with one BWP covering a DL BWP and a UL BWP from among BWPs configured for the UE, and may configure the UE to change to the corresponding BWP when a BWP mismatch occurs.

2) The BS may configure in such a manner that a UL BWP is referred to a BWP of a DL UE and may be changed to a BWP that matches with a DL.

3) By using a BWP including UL-DL configuration that may be operated in an XDD system, it may be configured in such a manner that a UL BWP may be changed to a BWP including or overlapping a BWP on which a DL resource of another UE is transmitted.

4) By using 2D SFI that may be operated in an XDD system, it may be configured in such a manner that a UL BWP may be changed to a UL BWP including or overlapping a BWP on which a DL resource of another UE is transmitted.

[Method 4-1-3] Method of not changing BWP

When BWPs of a UL UE and a DL UE do not match with each other, the method 4-1-3 includes not changing a BWP, and measuring leakage interference of a neighboring channel.

When a DL BWP is changed, DL reception may not be performed on a frequency resource on which a DL is supposed to be received, or unused frequency resources may be wasted. FIG. 26C illustrates an example in which a BWP is not changed even when BWPs of a UL and a DL do not match with each other, according to an embodiment of the present disclosure.

Referring to FIG. 26C, a UE may perform CLI measurement on a DL BWP 26c-03, and a UE that transmits a UL signal (e.g., SRS) may transmit a UL signal on a UL BWP 26c-02. As illustrated in FIG. 26C, even when the DL BWP 26c-02 and the UL BWP 26c-02 do not match with each other, the UE may not change (26c-05) a configured UL BWP, and may measure leakage interference of a neighboring channel and may report it to a BS. The BS may perform scheduling by referring to the reported CLI measurement value.

<4-2 embodiment: Indication of BWP changing>

Hereinafter, a method of indicating BWP changing for performing CLI measurement will now be described.

As described above, a BS may transmit, to a UE, indication as to whether to measure CLI by changing a BWP or to measure CLI without changing. Hereinafter, a method by which the BS indicates BWP changing to a UE will now be described.

With respect to BWP changing for CLI measurement, L1 signaling (DCI) may include a CLI-dedicated BWP changing indicator, and may be indicated by using at least one of methods below.

1) Method of using UE-specific DCI: A DCI field may be configured in UE-specific DCI by using at least one of methods below.

1-1) Method of using a part of a BWP changing indicator: S bits for a BWP changing indicator (e.g., CLI BWP indicator) for CLI measurement may be configured in up to N bits of a BWP indicator (e.g., BWP indicator) used in DCI 1_1 or 0_1.

1-2) Method of configuring a CLI-dedicated BWP changing indicator: Up to X bits of a BWP changing indicator (e.g., CLI BWP indicator) for CLI measurement may be allocated to a DCI payload.

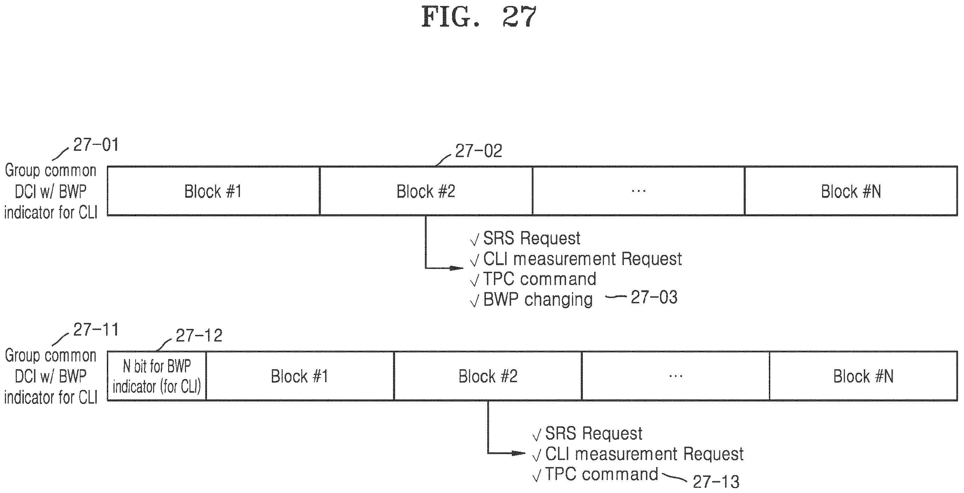

2) Method of configuring a BWP changing indicator in each block of group common DCI: FIG. 27 illustrates an example of a plurality of pieces of information that may be included in group common DCI, according to an embodiment of the present disclosure. In more detail, FIG. 27 illustrates an example of group common DCI 27-01 including a CLI-dedicated BWP changing indicator. By including the CLI-dedicated BWP changing indicator in the group common DCI, BWP changing and a CLI measurement request may be indicated together. As illustrated in FIG. 27, in a block to be monitored by a UE group or a UE, an SRS request, a CLI measurement request, a TPC command, and a BWP changing indicator 27-03 may be included together. Here, the BWP changing indicator may be included with the SRS request or the CLI measurement request in DCI configuration and may be transmitted to a UE.

3) Method of configuring a BWP changing indicator at the foremost of group common DCI: FIG. 27 illustrates an example of group common DCI 27-11 in which a CLI-dedicated BWP changing indicator is located at the foremost of a DCI payload. In an entire payload of group common DCI, foremost N bits are configured for a BWP changing indicator 27-12, and it may be indicated that UEs that receive the DCI change to a same BWP, via the BWP changing indicator. As illustrated in FIG. 27, by locating the BWP changing indicator at the foremost of a DCI payload (see 27-12), a UE or a UE group which monitors the DCI may change a BWP, based on the indicated BWP changing indicator, and then, may perform SRS transmission or CLI measurement.

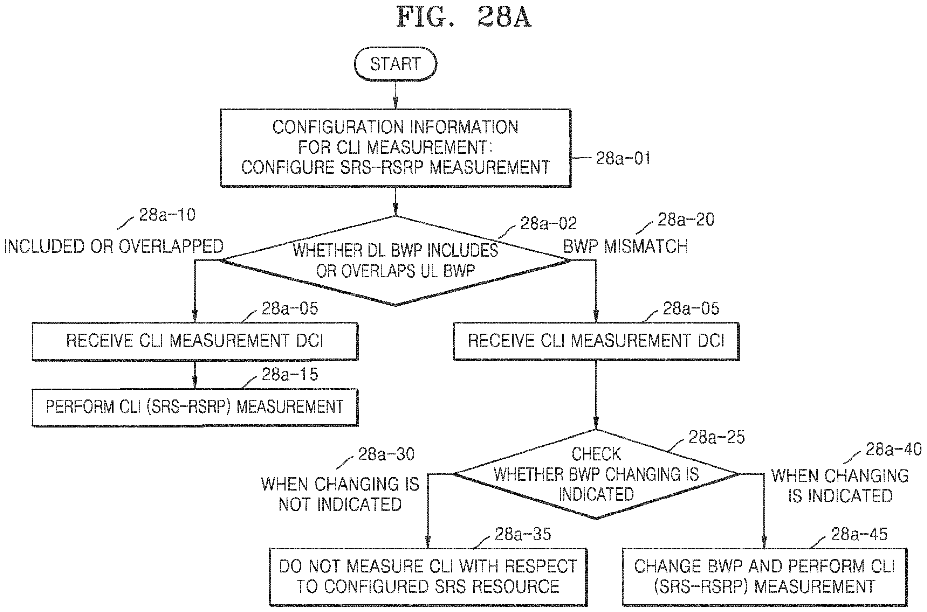

FIG. 28A is a diagram for describing a method of measuring CLI, according to an embodiment of the present disclosure.

In operation 28a-01, a UE may be configured, by a BS, SRS-RSRP as CLI measurement resource configuration.

In operation 28a-02, the BS or the UE may determine whether a DL BWP and a UL BWP match with each other. In an embodiment of the present disclosure, the BS may not directly determine whether the DL BWP and the UL BWP match with each, and the UE may determine and report, to the BS, whether the DL BWP and the UL BWP match with each.

In operations 28a-05 and 28a-15, when the DL BWP covers the UL BWP or overlaps the UL BWP (28a-10), the UE may receive DCI indicating CLI measurement, and then may perform aperiodic CLI measurement and reporting, according to existing configuration.

In operations 28a-05 and 28a-25, when the DL BWP and the UL BWP do not match with each other (28a-20), the BS may perform indication on the UE by including information as to whether to change a BWP, in the DCI indicating CLI measurement, and the UE may check whether the indication exists.

In operation 28a-35, when BWP changing is not indicated (28a-30), the UE may not perform measurement on a CLI measurement resource corresponding thereto.

In operation 28a-45, when BWP changing is configured for the UE (28a-40), the UE may change a BWP and then perform SRS-RSRP measurement on a CLI measurement resource corresponding thereto, and then may perform L1-triggered reporting.

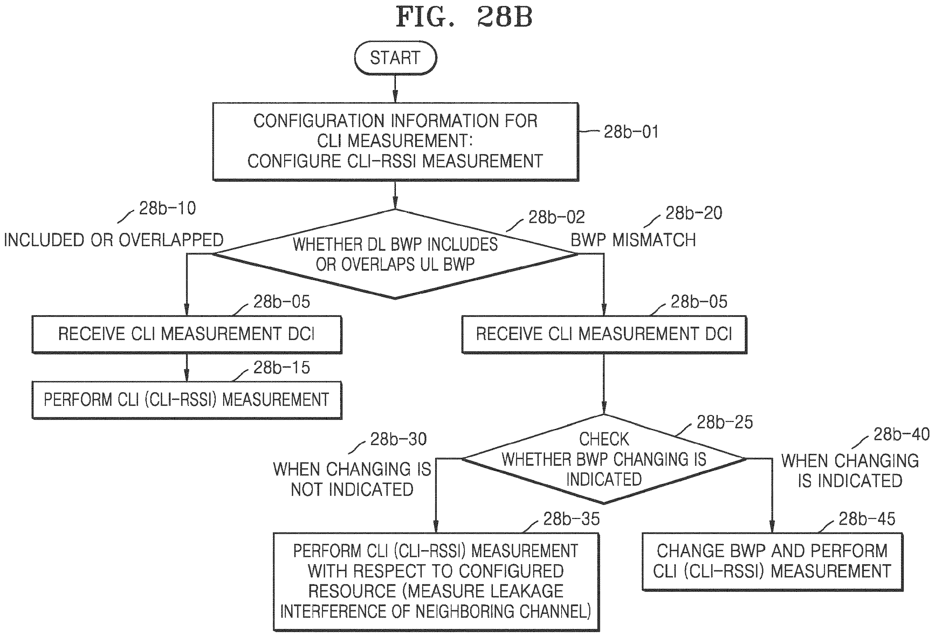

FIG. 28B is a diagram for describing a method of measuring CLI, according to an embodiment of the present disclosure.

In operation 28b-01, a UE may be configured, by a BS, CLI-RSSI as CLI measurement resource configuration.

In operation 28b-02, the BS or the UE may determine whether a DL BWP and a UL BWP match with each other. In an embodiment of the present disclosure, the BS may not directly determine whether the DL BWP and the UL BWP match with each, and the UE may determine and report, to the BS, whether the DL BWP and the UL BWP match with each.

In operations 28b-05 and 28b-15, when the DL BWP covers the UL BWP or overlaps the UL BWP (28b-10), the UE may receive DCI indicating CLI measurement, and then may perform aperiodic CLI measurement and reporting, according to existing configuration.

In operations 28b-05 and 28b-25, when the DL BWP and the UL BWP do not match with each other (28b-20), the BS may perform indication on the UE by including information as to whether to change a BWP, in the DCI indicating CLI measurement, and the UE may check whether the indication exists.

In operation 28b-35, when BWP changing is not configured (28b-30), the UE may not change a BWP on a CLI measurement resource corresponding thereto, and may perform aperiodic CLI measurement and L1-triggered reporting. This may be interpreted that an amount of interference leaked from a neighboring channel is measured.

In operation 28b-45, when BWP changing is indicated to the UE (28b-40), the UE may change a BWP and then perform CLI-RSSI measurement on a CLI measurement resource corresponding thereto, and then may perform L1-triggered reporting.

<Fifth embodiment: L1-triggered reporting of CLI>

Hereinafter, a layer 1 (L1)-triggered reporting generating method with respect to a CLI measurement result will now be described.

Table 60 and Table 61 show a method of generating an entry for L1-RSRP reporting with respect to CSI in the Rel-16 NR system.

Table 60 is Table showing configuration information of measurement resource indices and measurement values for reporting. Fields corresponding thereto may respectively have bitwidths, $K\_S^{(CSI-RS)}$ indicates the number of CSI-RS resources in a resource set, and $K\_S^{SSB}$ indicates the number of SS/PBCH blocks configured in the resource set for 'ssb-Index-RSRP' reporting. For example, when a measurement reporting value of a CSI-RS resource is to be reported, a resource index may be included via a bitwidth of a CRI that is a CSI-RS resource indicator, and a result value of the resource corresponding thereto may include 7 bits of RSRP or 4 bits of differential RSRP.

Table 61 is Table showing a mapping order with respect to one reporting. L1-RSRP supports to generate and report, in a list, difference values between a L1-filtered RSRP value with a highest level and RSRP values listed according to signal strengths and an RSRP value with a strongest level. In a reporting list scheme, resource indices may be listed in order of a resource index of L1-RSRP with a highest signal strength and a resource index of L1-RSRP with a second-highest signal strength. Also, L1-RSRP with a highest signal strength may be reported, and then L1-RSRPs with a second-highest signal strength may be expressed in ascending order of different values with respect to the L1-RSRP with a highest signal strength.

[Table 60] Bitwidths of CRI, SSBRI, RSRP, and Differential RSRP

| Field | Bitwidth |
|---|---|
| CRI | $\lceil log_2 K_S^{CSI-RS} \rceil$ |
| SSBRI | $\lceil log_2 K_S^{SSB} \rceil$ |

(continued)

| Field | Bitwidth |
|---|---|
| RSRP | 7 |
| Diff. RSRP | 4 |

[Table 61] CSI field mapping order with respect to one reporting for CRI/RSRP or SSBRI/RSRP

| CSI report number | CSI fields |
|---|---|
| CSI report #n | CRI or SSBRI #1 |
| | CRI or SSBRI #2 |
| | CRI or SSBRI #3 |
| | CRI or SSBRI #4 |
| | RSRP #1 |
| | Differential RSRP #2 |
| | Differential RSRP #3 |
| | Differential RSRP #4 |

Hereinafter, a method of generating L1-triggered CLI reporting will now be described. CLI measurement reporting may include at least one of resource identification information of a neighboring UE causing interference and a measurement result value of the corresponding measurement resource. Also, the resource identification information and the measurement result value may have bit values according to configuration. Also, the generated reporting may be reported in the form of a list or a table. A detailed method of generating reporting will now be described via methods below.

<5-1 embodiment: Reporting of measurement value and ID by generating N lists, from among configured K CLI measurement resources>

The 5-1 embodiment relates to generation of a table, based on a maximum value or a minimum value with respect to an SRS-RSRP value or CLI-RSSI value which is L1 filtered after CLI measurement. The corresponding table may include resource index information corresponding to the SRS-RSRP or CLI-RSSI value. Here, a value indicated in the index information may vary, depending on whether a configured measurement resource is SRS-RSRP or CLI-RSSI. For example, when configured measurement quantity (reportQuantity) is SRS-RSRP, the index information may be resource ID of a neighboring UE, and when measurement quantity is CLI-RSSI, the index information may be configured resource ID (e.g., CSI-ResourceConfigID or CLI-ResourceConfigID). A method of generating a list with respect to CLI measurement result reporting may vary, and at least one of methods below may be determined and used.

1) List of measurement result values and resource indices corresponding thereto with respect to N (N ≤ K) resources in order of highest signal strengths (descending order), from among configured K measurement resources

2) List of measurement result values and corresponding resource indices corresponding thereto with respect to N (N ≤ K) resources in order of lowest signal strengths (ascending order), from among configured K measurement resources

3) Result value and a corresponding resource index with respect to one highest signal strength, from among configured K measurement resources

4) Result value and a corresponding resource index with respect to one lowest signal strength, from among configured K measurement resources

5) Resource index corresponding to one highest signal strength, from among configured K measurement resources

6) Resource index corresponding to one lowest signal strength, from among configured K measurement resources

7) List in ascending order of difference values between a result value of one highest signal strength and N (N ≤ K) highest signal strength values and second-highest signal strength values, and resource indices corresponding to the result values

8) List in descending order of difference values between a result value of one lowest signal strength and N (N ≤ K)

88

lowest signal strength values and second-lowest signal strength values, and resource indices corresponding to the result values

<5-2 embodiment: Reporting of measurement value and ID satisfying particular condition, from among K CLI measurement resources>

The 5-2 embodiment relates to generation of a table, based on that a particular condition with respect to an SRS-RSRP value or CLI-RSSI value which is L1 filtered after CLI measurement is satisfied. Here, the condition may be a configured threshold value, and whether to perform reporting may be determined based on whether it is equal to or smaller than the threshold value. The corresponding table may include resource index information corresponding to the SRS-RSRP or CLI-RSSI value. A value indicated in the index information may vary, depending on whether a configured measurement resource is SRS-RSRP or CLI-RSSI. For example, when configured measurement quantity (reportQuantity) is SRS-RSRP, the index information may be resource ID of a neighboring UE, and when measurement quantity is CLI-RSSI, the index information may be configured resource ID (e.g., CSI-ResourceConfigID or CLI-ResourceConfigID). A method of generating a list with respect to CLI measurement result reporting may vary, and at least one of methods below may be determined and used.

1) List of measurement result values and resource indices corresponding thereto with respect to N (N ≤ K) resources in order of results being equal to or greater than the configured threshold value (descending order), from among configured K measurement resources
2) List of all measurement result values being equal to or greater than the configured threshold value, and resource indices corresponding thereto, from among configured K measurement resources
3) List of measurement result values and resource indices corresponding thereto with respect to N (N ≤ K) resources in order of results being equal to or smaller than the configured threshold value (ascending order), from among configured K measurement resources
4) List of all measurement result values being equal to or smaller than the configured threshold value, and resource indices corresponding thereto, from among configured K measurement resources

With respect to the methods 2) and 4) described in the 5-2 embodiment, rules for generating a reporting list and performing reporting may be requested. The rules may vary depending on how long and at what point in time the list is to be transmitted, and may be determined by one of methods below.

1) Single part support: Method of generating a list by supporting only N bitwidth
2) Method of generating a list by configuring a particular N bitwidth as part 1 and configuring a particular K bitwidth as part 2

<Sixth embodiment: Method of measuring CLI in subband unit and performing reporting>

In order to increase a DL frequency resource availability, a BS may configure a UE with CLI measurement and reporting in a subband unit. The UE may receive information on a DL resource configured by the BS. If high interference of a neighboring cell and/or a same cell occurs on the DL resource, the BS may attempt interference mitigation by not-configuring or cancelling DL information reception on the DL resource, decreasing DL transmission power, or decreasing MCS. However, in an XDD system where subbands of a DL and a UL coexist in a same time zone, when the interference mitigation method is to be used on all DL frequency resources, loss may occur in terms of a frequency resource availability. Therefore, hereinafter, a method of configuring CLI measurement and reporting in a DL subband unit will now be described in detail.

[6-1 embodiment] Method of measuring and reporting CLI in subband unit, on DL frequency resource

The BS may configure the UE with CLI measurement in a DL subband unit.

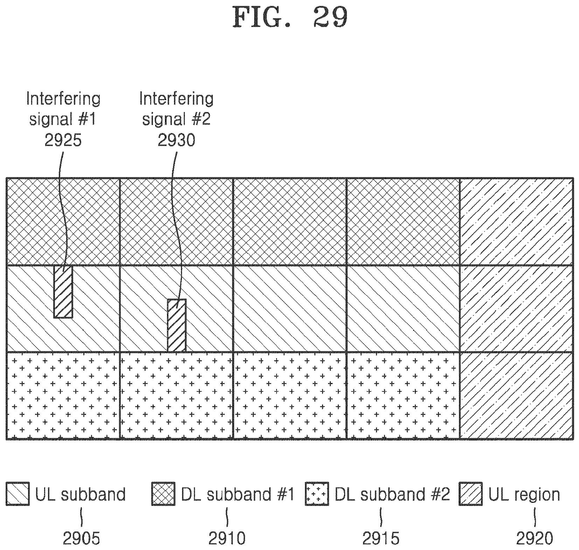

FIG. 29 is a diagram for describing a method of measuring and reporting CLI in a DL subband unit. In FIG. 29, a horizontal axis indicates a time, and a vertical axis indicates a frequency. In an XDD system, a DL and a UL may coexist on a frequency resource in a subband unit in a same time zone. Here, a UL signal in a neighboring cell and/or a same cell may act as interference in terms of DL reception. When the BS configures the UE to measure interference (i.e., CLI), the BS may configure measurement and reporting on a DL frequency resource in a subband unit.
For example, a UL signal 2925 in the neighboring cell and/or the same cell may be an interfering signal in terms of DL reception. Here, interference strength in DL subband #1 2910 may be greater than interference strength in DL subband #2 2915. In order to increase availability of a DL frequency resource, the BS may configure the UE with measurement in a DL subband unit. The UE may measure CLI in each of configured DL subbands 2910 and 2915. Also, the measured CLI may be reported in a subband unit to the BS. The BS may perform scheduling, based on the reported CLI in a subband unit. For example, when CLI of DL subband #1 2910 is greater than CLI of DL subband #2 2915, which are reported by the UE, the BS may configure the UE to use only DL subband #2 in DL reception.

As another example, a UL signal 2930 in the neighboring cell and/or the same cell may be an interfering signal in terms of DL reception. Here, interference strength in DL subband #2 2915 may be greater than interference strength in DL subband #1 2910. In order to increase availability of a DL frequency resource, the BS may configure the UE with measurement in a DL subband unit. The UE may measure CLI in each of configured DL subbands 2910 and 2915. Also, the measured CLI may be reported in a subband unit to the BS. The BS may perform scheduling, based on the reported CLI in a subband unit. For example, when CLI of DL subband #2 2915 is greater than CLI of DL subband #1 2910, which are reported by the UE, the BS may configure the UE to use only DL subband #1 in DL reception.

In this regard, CLI measurement configuration and reporting configuration may follow the first to fifth embodiments.

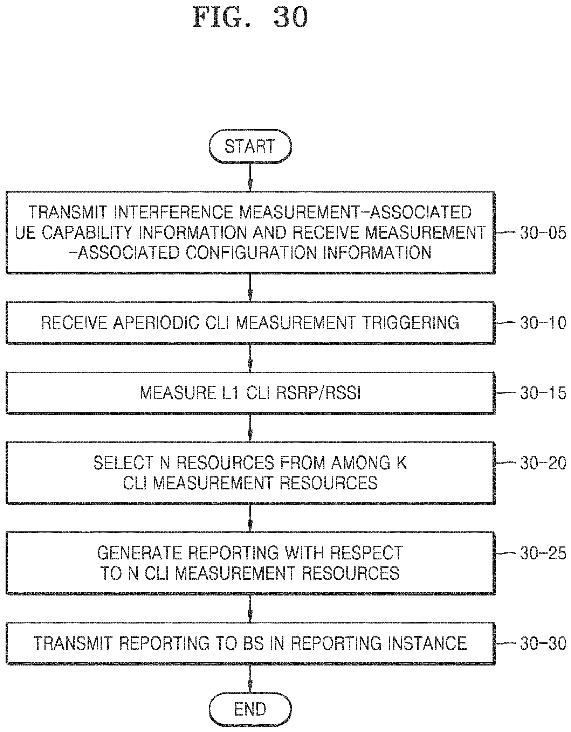

FIG. 30 illustrates a procedure for CLI measurement and reporting in a UE, according to an embodiment of the present disclosure.

In operation 30-05, when the UE reports its capability to a BS, the UE may include and report measurement-associated parameters and/or aperiodic CLI measurement and L1-triggered capability. Based on that, the BS may configure the UE with measurement-associated configuration information.

In operations 30-10 and 30-15, the UE may monitor a PDCCH from the BS, based on the configuration information. Aperiodic CLI measurement may be triggered to the UE via DCI information indicated by the BS, and the UE may perform CLI measurement, based on that.

In operation 30-20, collected results may be L1 filtered and stored, and N resources from among configured K CLI measurement resources may be selected.

In operation 30-25, a reporting list with respect to the selected N resources may be generated based on configuration.

In operation 30-30, the UE may perform L1-triggered reporting of the reporting list to the BS in a reporting instance.

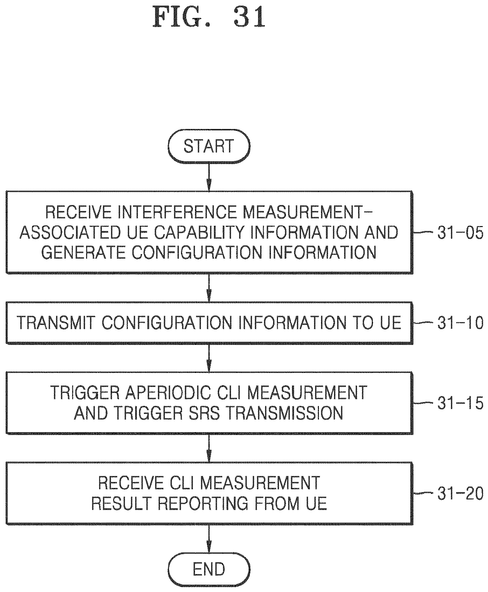

FIG. 31 illustrates a procedure for CLI measurement and reporting in a BS, according to an embodiment of the present disclosure.

In operation 31-05, the BS may request a UE for capability information reporting, and may receive capability from the UE.

In operation 31-10, the BS may transmit, to the UE, configuration information including measurement-associated parameters, based on the capability reported by the UE.

In operation 31-15, the BS may configure the UE with aperiodic CLI measurement, and the indication information may be transmitted via DCI.

In operation 31-20, the BS may receive a L1-triggered CLI measurement result reported by the UE, and may use the information in scheduling and various BS operations.

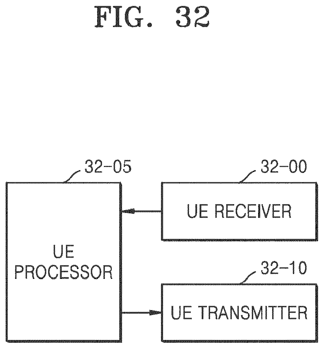

FIG. 32 illustrates a structure of a UE in a wireless communication system, according to an embodiment of the present disclosure.

Referring to FIG. 32, the UE may include a transceiver collectively referring to a UE receiver 32-00 and a UE transmitter 32-10, a memory (not shown), and a UE processor (or a UE controller or a processor) 32-05. According to the communication method of the UE described above, the transceiver 32-00 or 32-10, the memory, and the UE processor 32-05 of the UE may operate. However, elements of the UE are not limited to the example above. For example, the UE may include more elements than those described above or may include fewer elements than those described above. In addition, the transceiver, the memory, and the processor may be implemented as one chip.

The transceiver may transmit or receive a signal to or from a BS. Here, the signal may include control information and data. To this end, the transceiver may include a radio frequency (RF) transmitter for up-converting and amplifying a frequency of signals to be transmitted, and an RF receiver for low-noise-amplifying and down-converting a frequency of received signals. However, this is merely an example of the transceiver, and elements of the transceiver are not limited to the RF transmitter and the RF receiver.

Also, the transceiver may receive signals via wireless channels and output the signals to the processor, and may transmit signals output from the processor, via wireless channels.

The memory may store programs and data required for the UE to operate. Also, the memory may store control information or data included in a signal transmitted or received by the UE. The memory may include any or a combination of storage media such as read-only memory (ROM), random access memory (RAM), a hard disk, a compact disc (CD)-ROM, a digital versatile disc (DVD), or the like. Also, the memory may include a plurality of memories.

Also, the processor may control a series of processes to allow the UE to operate according to the embodiments of the present disclosure. For example, the processor may control elements of the UE to receive DCI consisting of two layers so as to simultaneously receive a plurality of PDSCHs. The processor may be provided in a multiple number, and may perform an element control operation of the UE by executing a program stored in the memory.

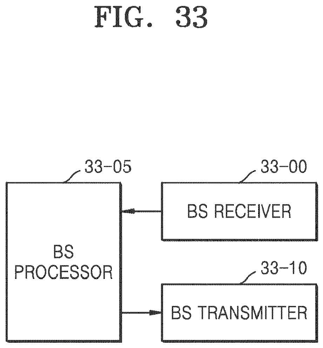

FIG. 33 illustrates a structure of a BS in a wireless communication system, according to an embodiment of the present disclosure.

Referring to FIG. 33, the BS may include a transceiver collectively referring to a BS receiver 33-00 and a BS transmitter 33-10, a memory (not shown), and a BS processor (or a BS controller or a processor) 33-05. According to the communication method of the BS described above, the transceiver 33-00 or 33-10, the memory, and the BS processor 33-05 of the BS may operate. However, elements of the BS are not limited to the example above. For example, the BS may include more elements than those described above or may include fewer elements than those described above. In addition, the transceiver, the memory, and the processor may be implemented as one chip.

The transceiver may transmit or receive a signal to or from a UE. Here, the signal may include control information and data. To this end, the transceiver may include a RF transmitter for up-converting and amplifying a frequency of signals to be transmitted, and an RF receiver for low-noise-amplifying and down-converting a frequency of received signals. However, this is merely an example of the transceiver, and elements of the transceiver are not limited to the RF transmitter and the RF receiver.

Also, the transceiver may receive signals via wireless channels and output the signals to the processor, and may transmit signals output from the processor, via wireless channels.

The memory may store programs and data required for the BS to operate. Also, the memory may store control information or data included in a signal transmitted or received by the BS. The memory may include any or a combination of storage media such as ROM, RAM, a hard disk, a CD-ROM, a DVD, or the like. Also, the memory may include a plurality of memories.

Also, the processor may control a series of processes to allow the BS to operate according to the embodiments of the present disclosure. For example, the processor may configure a plurality of pieces of DCI consisting of two layers and including allocation information associated with a plurality of PDSCHs, and may control each element to transmit the DCI. The processor may be provided in a multiple number, and may perform an element control operation of the BS by executing a program stored in the memory.

The methods according to the embodiments of the present disclosure as described in claims or specification may be implemented as hardware, software, or a combination of hardware and software.

When implemented as software, a computer-readable storage medium which stores one or more programs (e.g., software modules) may be provided. The one or more programs stored in the computer-readable storage medium are configured for execution by one or more processors in an electronic device. The one or more programs include instructions directing the electronic device to execute the methods according to the embodiments of the present disclosure as described in the claims or the specification.

The programs (e.g., software modules or software) may be stored in non-volatile memory including random access memory (RAM) or flash memory, read only memory (ROM), electrically erasable programmable read only memory (EEPROM), a magnetic disc storage device, a compact disc (CD)-ROM, a digital versatile disc (DVD), another optical storage device, or a magnetic cassette. Alternatively, the programs may be stored in memory including a combination of some or all of the above-mentioned storage media. Also, a plurality of such memories may be included.

In addition, the programs may be stored in an attachable storage device accessible through any or a combination of communication networks such as Internet, an intranet, a local area network (LAN), a wide LAN (WLAN), a storage area network (SAN), or the like. Such a storage device may access, via an external port, a device performing the embodiments of the present disclosure. Furthermore, a separate storage device on the communication network may access the electronic device performing the embodiments of the present disclosure.

In the afore-described embodiments of the present disclosure, elements included in the present disclosure are expressed in a singular or plural form according to the embodiments of the present disclosure. However, the singular or plural form is appropriately selected for convenience of descriptions and the present disclosure is not limited thereto. As such, an element expressed in a plural form may also be configured as a single element, and an element expressed in a singular form may also be configured as plural elements.

The embodiments of the present disclosure described with reference to the present specification and the drawings are merely illustrative of specific examples to easily facilitate description and understanding of the present disclosure, and are not intended to limit the scope of the present disclosure. That is, it will be apparent to one of ordinary skill in the art that other modifications based on the technical ideas of the present disclosure are feasible. Also, the embodiments may be combined to be implemented, when required. For example, the BS and the UE may be operated in a manner that portions of an embodiment of the present disclosure are combined with portions of another embodiment of the present disclosure. For example, the BS and the UE may be operated in a manner that portions of a first embodiment of the present disclosure are combined with portions of a second embodiment of the present disclosure. Also, although the embodiments are described based on a FDD LTE system, modifications based on the technical scope of the embodiments may be applied to other communication systems such as a TDD LTE system, a 5G or NR system, or the like.

The description order of the method of the present disclosure as in the drawings may not exactly correspond to actual execution order, but may be performed reversely or in parallel.

In the drawings for describing the methods of the present disclosure, some components may be omitted and only some components may be shown within a range that does not deviate the scope of the present disclosure.

In the present disclosure, the methods may be performed by combining some or all of the contents included in each of the embodiments within the scope of the present disclosure.

Various embodiments of the present disclosure are described above. The aforementioned embodiments of the present disclosure are merely for illustration, and are not limited thereto. It is obvious to one of ordinary skill in the art that the present disclosure may be easily embodied in many different forms without changing the technical concept or essential features of the present disclosure. The scope of the present disclosure is defined by the appended claims, rather than defined by the aforementioned detailed descriptions, and all differences and modifications that can be derived from the meanings and scope of the claims and other equivalent embodiments therefrom will be construed as being included in the present disclosure.

[Table 40]

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |

(continued)

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | U | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| S4 | F | F | F | F | F | F | F | D | D | D | D | D | D | D |
| 55 | D | D | F | F | F | U | U | U | D | D | D | D | D | D |
| 56 - 254 | Reserved | | | | | | | | | | | | | |
| 255 | UE determines the slot format for the slot based on *TDD-UL-DL-ConfigurationCommon*, or *TDD-UL-DL-ConfigDedicated* and, if any, on detected DCI formats | | | | | | | | | | | | | |

## Claims

1. A method, performed by a user equipment (UE), of measuring and reporting cross link interference (CLI) in a wireless communication system, the method comprising:

   reporting UE capability to a base station (BS);
   receiving, from the BS, information about interference measurement and reporting configuration based on the reported UE capability;

receiving, from the BS, downlink control information (DCI) for aperiodic interference measurement indication;

measuring the CLI, based on the DCI; and

transmitting a result of measuring the CLI to the BS.

2. The method of claim 1, wherein the measuring of the CLI comprises measuring the CLI, based on a bandwidth part (BWP) changing indication comprised in the DCI.

3. The method of claim 1, wherein information about the UE capability comprises at least one of sounding reference signal-reference signal received power (SRS-RSRP), a number of measurement resources (maxNumber-AP-SRS-RSRP), a number of periodic SRS-RSRP measurement resources (maxNumber-P-SRS-RSRP), and a total number of SRS-RSRP measurement resources (maxNumber-SRS-RSRP).

4. The method of claim 1, wherein information about the UE capability comprises at least one of parameters indicating whether SRS-RSRP measurement is supported and whether aperiodic SRS-RSRP measurement is supported (cli-SRS-RSRP-Meas-r18).

5. The method of claim 1, wherein the information about the interference measurement and the reporting configuration comprises at least one of channel quality information (CQI), a precoding matric indicator (PMI), a CSI-RS resource indicator (CRI), an synchronization signal/physical broadcast channel (SS/PBCH) block resource indicator (SSBRI), a layer indicator (LI), a rank indicator (RI), and/or L1-reference signal received power (L1-RSRP), a CLI resource indicator for L1-triggered CLI reporting, L1-filtered SRS-RSRP and a L1-filtered cross link interference-received signal strength indicator (CLI-RSSI).

6. The method of claim 1, wherein the DCI comprises CLI measurement request information, and the CLI measurement request information comprises resource information about CLI to be measured.

7. The method of claim 1, wherein the transmitting of the result of measuring the CLI to the BS comprises:

generating a reporting list by using a preset number of measurement results selected based on signal strength values, from among configured K measurement results, or generating a reporting list by using a measurement result satisfying a particular condition, from among measurement results; and

transmitting the generated reporting list to the BS.

8. The method of claim 1, wherein the information about interference measurement and reporting configuration is configured in a subband unit.

9. A user equipment (UE) in a wireless communication system, the UE comprising:

a transceiver; and

at least one processor configured to report UE capability to a base station (BS), receive, from the BS, information about interference measurement and reporting configuration based on the reported UE capability, receive, from the BS, downlink control information (DCI) for aperiodic interference measurement indication, measure cross link interference (CLI), based on the DCI, and transmit a result of measuring the CLI to the BS.

10. The UE of claim 9, wherein the at least one processor is further configured to measure the CLI, based on a bandwidth part (BWP) changing indication comprised in the DCI.

11. The UE of claim 9, wherein information about the UE capability comprises at least one of sounding reference signal-reference signal received power (SRS-RSRP), a number of measurement resources (maxNumber-AP-SRS-RSRP), a number of periodic SRS-RSRP measurement resources (maxNumber-P-SRS-RSRP), and a total number of SRS-RSRP measurement resources (maxNumber-SRS-RSRP).

12. The UE of claim 9, wherein information about the UE capability comprises at least one of parameters indicating whether SRS-RSRP measurement is supported and whether aperiodic SRS-RSRP measurement is supported (cli-SRS-RSRP-Meas-r18).

13. The UE of claim 9, wherein the information about interference measurement and reporting configuration comprises at least one of channel quality information (CQI), a precoding matric indicator (PMI), a CSI-RS resource indicator (CRI), an synchronization signal/physical broadcast channel (SS/PBCH) block resource indicator (SSBRI), a layer indicator (LI), a rank indicator (RI), and/or L1-reference signal received power (L1-RSRP), a CLI resource indicator for L1-triggered CLI reporting, L1-filtered SRS-RSRP and a L1-filtered cross link interference-received signal strength indicator (CLI-RSSI).

14. The UE of claim 9, wherein the DCI comprises CLI measurement request information, and the CLI measurement request information comprises resource information about CLI to be measured.

15. The UE of claim 9, wherein the DCI comprises CLI measurement request information, and the CLI measurement request information comprises resource information about CLI to be measured.

# FIG. 1

One Subframe —110

$N_{\text{symb}}^{\text{subframe},\mu}$ OFDM symbols

1 OFDM symbols —102

$k = N_{\text{RB},x}^{\max,\mu} N_{\text{sc}}^{\text{RB}} - 1$

1 subcarrier
103

$N_{\text{RB}}^{\mu} N_{\text{sc}}^{\text{RB}}$ subcarriers

104
Resource block $N_{\text{sc}}^{\text{RB}}$ subcarriers

Resource element (k,l) 101

Frequemcy

Time

$\tilde{l} = 0$

$\tilde{l} = 14 \cdot 2^{\mu} - 1$

k = 0

# FIG. 2

# FIG. 3

# FIG. 4

Duration
404

Frequency
resource
403

UE
bandwidth
part
410

Slot
420

Frequency

Time

control resource set#1 — 401

control resource set#2 — 402

# FIG. 5A

1 symbol
5a-01

DMRS
5a-05

1 PRB
5a-02

CCE
5a-04

REG
5a-03

# FIG. 5B

EP 4 358 573 A1

EP 4 358 573 A1

# FIG. 6

TCI state #0
600

TCI state #1
605

TCI state #2
610

# FIG. 7

RRC configured TCI states — 705

TCI #0 — 705
TCI #1 — 710
TCI #2 — 715
· · ·
TCI #N — 720

A list of TCI states for a CORESET — 725

TCI #a — 730
TCI #b — 735
· · ·
TCI #n — 740

TCI indication via MAC CE — 745

# FIG. 8

| Serving Cell ID | CORESET ID |
|---|---|
815 —
820 —

| CORE SET ID | TCI state ID |
|---|---|
825 —

# FIG. 9

# FIG. 10

**PDCCH monitoring occasion** 1010

CORESET#1 (Ref: CSI-RS#1/Cell#1/BWP#1 with QCL-TypeD) — 1015

CORESET#1 (Ref: CSI-RS#1/Cell#1/BWP#1 with QCL-TypeD) — 1020

CORESET#2 (Ref: CSI-RS#1/Cell#2/BWP#1 with QCL-TypeD) — 1025

CSS#1
CSS#2
USS#1

BWP#1 (Active) on Cell#1 — 1000

CSS#1
USS#2
USS#2

BWP#1 (Active) on Cell#2 — 1005

**PDCCH monitoring occasion** 1040

CORESET#1 (Ref: CSI-RS#1/Cell#1/BWP#1 with QCL-TypeD) — 1045

CORESET#2 (Ref: CSI-RS#1/Cell#1/BWP#1 with QCL-TypeD) — 1050

CORESET#1 (Ref: CSI-RS#1/Cell#2/BWP#1 with QCL-TypeD) — 1055

CORESET#2 (Ref: CSI-RS#2/Cell#2/BWP#1 with QCL-TypeD) — 1060

USS#1
USS#2
USS#3

Active BWP on Cell#1 — 1030

USS#1
USS#2
USS#3

Active BWP on Cell#2 — 1035

FIG. 11

# FIG. 12

RA type 0
12-00

| 12-15 |
|:---:|
| Bitmap |

RA type 1
12-05

| 12-20 | 12-25 |
|:---:|:---:|
| Starting VRB | Length |

Both RA
type 0 & 1
12-10

| 12-30 | 12-35 |
|:---:|:---:|
| 1 bit for RA type indication | Max{payload for RA type 0, payload for RA type 1} |

# FIG. 13

$$\text{Slot}\left[n \cdot \frac{2^{\mu}_{PDSCH}}{2^{\mu}_{PDCCH}}\right] + K_0 \quad\text{---}\ 13\text{-}10$$

# FIG. 14

EP 4 358 573 A1

# FIG. 15

# FIG. 16

Single cell LTE/NR — S00

gNB S25
SDAP
S30
PDCP
S35
RLC
S40
MAC
S45
PHY

UE S50
PHY
S55
MAC
S60
RLC
S65
PDCP
S70
SDAP

Carrier aggregation — S10

gNB
SDAP
PDCP
RLC
MAC
PHY · · · PHY

UE
PHY · · · PHY
MAC
RLC
PDCP
SDAP

Dual connectivity — S20

MgNB
SDAP
PDCP
RLC
MAC
PHY

SgNB
RLC
MAC
PHY

UE
PHY
MAC
RLC
PDCP
SDAP

PHY
MAC
RLC

EP 4 358 573 A1

112

# FIG. 17A

# FIG. 17B

# FIG. 17C

17-27
17-28
17-29
SRS #0
SRS #1
SRS #2
17-20
UE
at time A

((o))
17-23
gNB
17-27
17-28
SRS #0
SRS #1
SRS #2
17-29
17-20
17-25
SRS Request +
precoding info.
UE
at time A + alpha

# FIG. 18

18-10
1. Cell-specific semi-static UL/DL configuration (SIB)

18-20
2. UE-specific semi-static UL/DL configuration (dedicated RRC)

18-30
3. UE-group dynamic UL/DL configuration (DCI format 2_0)

Slot — 18-01

Symbol 18-02

Periodicity — 18-03

# of consecutive DL slots
18-11

# of consecutive DL symbols 18-12

# of consecutive UL symbols 18-14

# of consecutive UL slots 18-13

Slot — 18-21    Slot — 18-22

# of consecutive DL symbols 18-23

# of consecutive UL symbols 18-24

# of consecutive DL symbols 18-25

# of consecutive UL symbols 18-26

Slot format indicator 18-31

Slot format indicator 18-32

: Downlink resource — 18-04

: Flexible resource — 18-05

: Uplink resource — 18-06

EP 4 358 573 A1

116

# FIG. 19

System DL-UL configuration — 19-00

19-01

Bandwidth

Frequemcy

Time

Symbols/slot — 19-02

⬚ : Downlink resource — 19-03
⬚ : Uplink resource — 19-04
⬚ : Guard-band — 19-05

UE1's DL-UL configuration — 19-10

Frequemcy

Time

Symbols/slot

UE2's DL-UL configuration — 19-20

Frequemcy

Time

Symbols/slot

UE3's DL-UL configuration — 19-30

Frequemcy

Time

Symbols/slot

UE4's DL-UL configuration — 19-40

Frequemcy

Time

Symbols/slot

EP 4 358 573 A1

# FIG. 20

20-01
BWP including UL-DL Configuration

BWP #1    BWP #2    ...    BWP #N-1    BWP #N

20-11
2D UL-DL configuration and/or 2D SFI

2D UL-DL Configuration

2D SFI

DL    UL

DL
UL

20-21
BWP including UL-DL Configuration

TDD UL-DL Configuration

+

XDD Slot format #1
or
XDD Slot format #2

▨ : DL resource
▦ : UL resource
▨ : Flexible

EP 4 358 573 A1

# FIG. 21

FIG. 22A

Signal
Interference

22a-05
gNB
22a-03
22a-00
UE #A

22a-15
gNB
22a-01
UE #B

# FIG. 22B

## FIG. 23

EP 4 358 573 A1

# FIG. 24

```
        ╱24-01                          ╱24-02
    ┌──────────┐                    ┌──────────┐
    │ Network  │                    │    UE    │
    └──────────┘                    └──────────┘
         │                               │
         │       UECapabilityEnquiry     │
24-05 ───┤──────────────────────────────▶│
         │                               │
         │      UECapabilityInformation  │
24-10 ───┤◀──────────────────────────────│
         │                               │
         ▼                               ▼
```

# FIG. 25

DCI w/ or w/o scheduling data ⌐2515

| D | D | S | U |
|---|---|---|---|

# FIG. 26A

# FIG. 26B

BWP changing ⟋ 26b-05

26b-01

UL BWP for
RS transmission
⟍
26b-03

DL BWP
⟍
26b-04

26b-02
|
UL BWP for
RS transmission

Frequency

# FIG. 26C

No BWP changing — 26c-05

26c-01

DL BWP
26c-03

DL BWP
26b-04

26c-02

UL BWP for
RS transmission

Frequency

# FIG. 27

27-01
Group common DCI w/ BWP indicator for CLI

| Block #1 | Block #2 (27-02) | ... | Block #N |

√ SRS Request
√ CLI measurement Request
√ TPC command
√ BWP changing ── 27-03

27-11
Group common DCI w/ BWP indicator for CLI

| N bit for BWP indicator (for CLI) (27-12) | Block #1 | Block #2 | ... | Block #N |

√ SRS Request
√ CLI measurement Request
√ TPC command ── 27-13

EP 4 358 573 A1

# FIG. 28A

START

CONFIGURATION INFORMATION
FOR CLI MEASUREMENT:
CONFIGURE SRS-RSRP MEASUREMENT — 28a-01

28a-10
INCLUDED OR OVERLAPPED

WHETHER DL BWP INCLUDES
OR OVERLAPS UL BWP — 28a-02

28a-20
BWP MISMATCH

RECEIVE CLI MEASUREMENT DCI — 28a-05

RECEIVE CLI MEASUREMENT DCI — 28a-05

PERFORM CLI (SRS-RSRP) MEASUREMENT — 28a-15

28a-30
WHEN CHANGING IS
NOT INDICATED

CHECK
WHETHER BWP CHANGING IS
INDICATED — 28a-25

28a-40
WHEN CHANGING
IS INDICATED

DO NOT MEASURE CLI WITH RESPECT
TO CONFIGURED SRS RESOURCE — 28a-35

CHANGE BWP AND PERFORM CLI
(SRS-RSRP) MEASUREMENT — 28a-45

EP 4 358 573 A1

# FIG. 28B

START

CONFIGURATION INFORMATION FOR
CLI MEASUREMENT:
CONFIGURE CLI-RSSI MEASUREMENT —28b-01

28b-10
INCLUDED OR OVERLAPPED

WHETHER DL BWP INCLUDES
OR OVERLAPS UL BWP —28b-02

28b-20
BWP MISMATCH

28b-05
RECEIVE CLI MEASUREMENT DCI

28b-05
RECEIVE CLI MEASUREMENT DCI

28b-15
PERFORM CLI (CLI-RSSI) MEASUREMENT

CHECK
WHETHER BWP CHANGING IS
INDICATED —28b-25

28b-30
WHEN CHANGING IS
NOT INDICATED

28b-40
WHEN CHANGING
IS INDICATED

28b-35
PERFORM CLI (CLI-RSSI) MEASUREMENT
WITH RESPECT TO CONFIGURED
RESOURCE (MEASURE LEAKAGE
INTERFERENCE OF NEIGHBORING CHANNEL)

28b-45
CHANGE BWP AND PERFORM
CLI (CLI-RSSI) MEASUREMENT

EP 4 358 573 A1

# FIG. 29

Interfering signal #1 2925

Interfering signal #2 2930

☐ UL subband | 2905
☒ DL subband #1 | 2910
⊡ DL subband #2 | 2915
▨ UL region | 2920

# FIG. 30

START

TRANSMIT INTERFERENCE MEASUREMENT–ASSOCIATED UE CAPABILITY INFORMATION AND RECEIVE MEASUREMENT –ASSOCIATED CONFIGURATION INFORMATION ── 30-05

RECEIVE APERIODIC CLI MEASUREMENT TRIGGERING ── 30-10

MEASURE L1 CLI RSRP/RSSI ── 30-15

SELECT N RESOURCES FROM AMONG K CLI MEASUREMENT RESOURCES ── 30-20

GENERATE REPORTING WITH RESPECT TO N CLI MEASUREMENT RESOURCES ── 30-25

TRANSMIT REPORTING TO BS IN REPORTING INSTANCE ── 30-30

END

# FIG. 31

START

RECEIVE INTERFERENCE MEASUREMENT-
ASSOCIATED UE CAPABILITY INFORMATION AND
GENERATE CONFIGURATION INFORMATION — 31-05

TRANSMIT CONFIGURATION INFORMATION TO UE — 31-10

TRIGGER APERIODIC CLI MEASUREMENT
AND TRIGGER SRS TRANSMISSION — 31-15

RECEIVE CLI MEASUREMENT
RESULT REPORTING FROM UE — 31-20

END

# FIG. 32

32-05

32-00

UE RECEIVER

UE
PROCESSOR

32-10

UE TRANSMITTER

# FIG. 33

## INTERNATIONAL SEARCH REPORT

| International application No. |
|---|
| **PCT/KR2022/007646** |

### A. CLASSIFICATION OF SUBJECT MATTER

**H04W 24/10**(2009.01)i; **H04B 17/345**(2014.01)i; **H04J 11/00**(2006.01)i; **H04W 8/24**(2009.01)i

According to International Patent Classification (IPC) or to both national classification and IPC

### B. FIELDS SEARCHED

Minimum documentation searched (classification system followed by classification symbols)

H04W 24/10(2009.01); H04B 17/336(2014.01); H04B 17/345(2014.01); H04L 25/02(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: cross link interference(CLI), UE capability, periodic, SRS-RSRP, configuration, DCI, report

### C. DOCUMENTS CONSIDERED TO BE RELEVANT

| Category* | Citation of document, with indication, where appropriate, of the relevant passages | Relevant to claim No. |
|---|---|---|
| Y | KR 10-2021-0061203 A (SAMSUNG ELECTRONICS CO., LTD.) 27 May 2021 (2021-05-27)<br>See paragraphs [0161]-[0430]; and figures 13 and 15. | 1-15 |
| Y | WO 2021-042123 A1 (QUALCOMM INCORPORATED) 04 March 2021 (2021-03-04)<br>See paragraphs [0073]-[0080]; and figures 5-6. | 1-15 |
| Y | QUALCOMM INCORPORATED. UE capabilities for CLI. R2-2005800, 3GPP TSG-RAN2 Meeting #110-e. [Online]. 15 June 2020.<br>See section 4.2.9. | 4,12 |
| Y | US 2021-0144574 A1 (SAMSUNG ELECTRONICS CO., LTD.) 13 May 2021 (2021-05-13)<br>See paragraph [0254]. | 7 |
| A | US 2021-0006438 A1 (NOKIA TECHNOLOGIES OY) 07 January 2021 (2021-01-07)<br>See paragraphs [0058]-[0090]; and figures 5-8b. | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 August 2022** | **30 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2022/007646**

| Patent document cited in search report | | | Publication date (day/month/year) | Patent family member(s) | | | Publication date (day/month/year) |
|---|---|---|---|---|---|---|---|
| KR | 10-2021-0061203 | A | 27 May 2021 | WO | 2021-101285 | A1 | 27 May 2021 |
| WO | 2021-042123 | A1 | 04 March 2021 | CN | 114616857 | A | 10 June 2022 |
| | | | | EP | 4022951 | A1 | 06 July 2022 |
| | | | | US | 2021-0067991 | A1 | 04 March 2021 |
| US | 2021-0144574 | A1 | 13 May 2021 | CN | 114651470 | A | 21 June 2022 |
| | | | | EP | 4022965 | A1 | 06 July 2022 |
| | | | | WO | 2021-091229 | A1 | 14 May 2021 |
| US | 2021-0006438 | A1 | 07 January 2021 | CN | 112188542 | A | 05 January 2021 |
| | | | | EP | 3761742 | A1 | 06 January 2021 |
| | | | | US | 11177983 | B2 | 16 November 2021 |
| | | | | WO | 2021-000303 | A1 | 07 January 2021 |

Form PCT/ISA/210 (patent family annex) (July 2019)